# EUROPÄISCHE PATENTSCHRIFT

(11) **EP 3 707 813 B1**
(45) Veröffentlichungstag und Bekanntmachung des Hinweises auf die Patenterteilung: **10.03.2021**
(21) Anmeldenummer: 18830235.0
(22) Anmeldetag: 18.12.2018
(51) Int. Cl.: H02K 41/03, H02K 11/33

(54) **STATORMODUL**
STATOR MODULE
MODULE DE STATOR

(30) Priorität: 27.12.2017 DE 102017131326
(43) Veröffentlichungstag der Anmeldung: 16.09.2020
(73) Patentinhaber: Beckhoff Automation GmbH, 33415 Verl (DE)
(72) Erfinder: PRUESSMEIER, Uwe, 32657 Lemgo (DE); BRINKMANN, Rolf, 32107 Bad Salzuflen (DE); BENTFELD, Lukas, 33098 Paderborn (DE)
(74) Vertreter: Patentanwaltskanzlei WILHELM & BECK
(86) Internationale Anmeldenummer: PCT/EP2018/085605
(87) Internationale Veröffentlichungsnummer: WO 2019/129547

(56) Entgegenhaltungen:
- US-B1- 7 135 827

## Beschreibung

Die Erfindung betrifft ein Statormodul zum Antreiben eines Läufers eines elektrischen Planarantriebssystems.

Diese Patentanmeldung beansprucht die Priorität der deutschen Patentanmeldung DE 10 2017 131 326.5 .

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Leiter mit Antriebsmagneten einer Magnetanordnung magnetisch wechselwirken. Die Erfindung betrifft insbesondere Ausgestaltungen von Planarantriebssystemen, bei denen die Antriebsmagneten eines elektrischen Planarmotors an dem Läufer und die stromdurchflossenen Leiter des Planarmotors in einem ortsfest angeordneten planaren Stator angeordnet sind.

Bei einem derartigen Antriebssystem umfasst der Läufer mindestens eine erste Magneteinheit für den Antrieb des Läufers in eine erste Richtung und eine zweite Magneteinheit für den Antrieb des Läufers in eine von der ersten Richtung linear unabhängige, beispielsweise in eine zu der ersten Richtung orthogonale, zweite Richtung. Der planare Stator umfasst mindestens eine Gruppe erster bestrombarer Leiter, welche mit den Magneten der ersten Magneteinheit magnetisch wechselwirken, um den Läufer in die erste Richtung anzutreiben, sowie eine Gruppe zweiter bestrombarer Leiter, welche mit den Magneten der zweiten Magneteinheit magnetisch wechselwirken, um den Läufer in die zweite Richtung anzutreiben. Die ersten und zweiten Gruppen von Leitern sind in der Regel unabhängig voneinander bestrombar, um voneinander unabhängige Bewegungen des Läufers in die erste und zweite Richtung zu ermöglichen. Sind die Leiter der ersten und zweiten Gruppe selbst zumindest in Teilen unabhängig voneinander bestrombar, können auf einem Stator zeitgleich mehrere Läufer unabhängig voneinander bewegt werden.

Der Stator derartiger Planarantriebssysteme kann insbesondere modular ausgebildet sein und mehrere nebeneinander angeordnete Statormodule umfassen. Innerhalb der Statormodule können die stromdurchflossenen Leiter des Stators in einer Statoreinheit angeordnet sein. Die für das Antreiben des Läufers benötigten Antriebsströme können von Stromerzeugungseinheiten erzeugt werden, die jeweils an den dem Läufer gegenüberliegenden Unterseiten der Statoreinheiten angeordnet sind. Die Stromerzeugungseinheiten sind dann mit den Leitern der Statoreinheit elektrisch leitend verbunden, um die von den Stromerzeugungseinheiten erzeugten Antriebsströme in die Leiter der Statoreinheit einzuspeisen. Um eine ausreichende Kraft auf den Läufer übertragen zu können, müssen mitunter Antriebsströme mit hoher Stromstärke erzeugt werden. Dies kann zu hohen Widerstandsverlusten in den durchflossenen Leitern und damit zu einer starken Erwärmung des Stators führen.

Die Druckschriften WO 2013/059934 A1, WO 2015/017933 A1, WO 2015/179962 A1, WO 2015/184553 A1, WO 2015/188281 A1, WO 2017/004716 A1 beschreiben jeweils Planarantriebssysteme *(displacement devices),* welche einen elektromagnetischen Planarmotor mit einem permanenterregten Läufer und einem mehrere bestrombare Leiter umfassenden Stator umfassen.

Aus der US 2017/179805 A1 ist ein Statormodul gemäß dem Oberbegriff des unabhängigen Anspruchs bekannt. Weiterer Stand der Technik ist der US 7 135 827 B1 und der DE 10 2009 021730 A1 entnehmbar.

Aufgabe der vorliegenden Erfindung ist es, ein Statormodul für ein elektrisches Planarantriebssystem anzugeben.

Diese Aufgabe wird durch ein Statormodul gemäß dem unabhängigen Anspruch gelöst. Weiterbildungen sind in den abhängigen Ansprüchen angegeben.

Ein Statormodul zum Antreiben eines Läufers eines elektrischen Planarantriebssystems umfasst ein Leistungsmodul, eine an einer Oberseite des Leistungsmoduls angeordnete Statoreinheit und ein Kontaktmittel. Das Leistungsmodul ist dazu ausgebildet, Antriebsströme zum Antreiben des Läufers bereitzustellen. Die Statoreinheit umfasst mit den Antriebsströmen beaufschlagbare Spulenleiter, wobei zur Beaufschlagung mit den Antriebsströmen die Spulenleiter der Statoreinheit über das Kontaktmittel mit dem Leistungsmodul elektrisch leitend verbunden sind. Das Leistungsmodul und die Statoreinheit sind jeweils plattenförmig ausgebildet. Das Leistungsmodul ist mittels des Kontaktmittels an der Statoreinheit mechanisch befestigt. Die Statoreinheit umfasst eine Kontaktstruktur mit nebeneinander angeordneten Kontaktlöchern und das Leistungsmodul umfasst eine Anschlussanordnung mit nebeneinander angeordneten weiteren Kontaktlöchern. Das Kontaktmittel umfasst nebeneinander angeordnete Kontaktstifte und die Kontaktstifte sind in die weiteren Kontaktlöcher der Anschlussanordnung des Leistungsmoduls und in die Kontaktlöcher der Kontaktstruktur der Statoreinheit eingreifend angeordnet.

Indem das Leistungsmodul über ein Kontaktmittel, das Kontaktstifte umfasst, an der Statoreinheit befestigt ist, kann zum einen eine mechanisch feste Verbindung zwischen Leistungsmodul und Statoreinheit realisiert werden. Zum anderen kann die Verbindung über die Kontaktstifte flexibel genug ausgebildet werden, um thermische Verspannungen zwischen der Statoreinheit und dem Leistungsmodul auszugleichen. Über die Kontaktstifte des Kontaktmittels kann außerdem eine besonders kurze Verbindung zwischen dem Leistungsmodul und der Statoreinheit realisiert werden.

Bei einer Weiterbildung des Statormoduls ist die Statoreinheit mittels des Kontaktmittels derart beabstandet an dem Leistungsmodul befestigt, dass an der Oberseite des Leistungsmoduls zwischen dem Leistungsmodul und der Statoreinheit ein Bauraum zur Anordnung elektronischer Komponenten ausgebildet ist. Dadurch kann das Leistungsmodul insbesondere sowohl an der Oberseite, als auch an einer der Oberseite des Leistungsmoduls gegenüberliegenden Unterseite mit elektronischen Komponenten, insbesondere mit integrierten Schaltkreisen, bestückt werden und es kann eine große Anzahl an elektronischen Komponenten an dem Leistungsmodul angeordnet werden.

Bei einer Weiterbildung des Statormoduls ist das Kontaktmittel als ein in die Kontaktlöcher der Kontaktstruktur der Statoreinheit einpressbarer Einpressverbinder ausgebildet. Dies ermöglicht einen besonders leichten Zusammenbau von Statoreinheit und Leistungsmodul. Außerdem müssen beim Zusammenbau von Statoreinheit und Leistungsmodul keine Lötverbindungen an der Statoreinheit angebracht werden, welche bei einer großen Wärmekapazität der Spulenleiter der Statoreinheit nur unter hohem Aufwand realisiert werden könnten.

Bei einer Weiterbildung des Statormoduls umfasst das Leistungsmodul an einer der Oberseite des Leistungsmoduls gegenüberliegenden Unterseite des Leistungsmoduls eine entlang der weiteren Kontaktlöcher angeordnete und frei von elektronischen Komponenten ausgebildete Pressfläche. An der Pressfläche kann während des Befestigens des Leistungsmoduls an der Statoreinheit ein Presswerkzeug angesetzt werden. Insbesondere kann das Leistungsmodul im bereits bestückten Zustand an der Statoreinheit befestigt werden.

Erfindungsgemäß umfasst das Statormodul ein weiteres Kontaktmittel, wobei das weitere Kontaktmittel entlang einer ersten Richtung länglich ausgedehnt ist und entlang der ersten Richtung nebeneinander angeordnete Kontaktstifte umfasst. Das Kontaktmittel ist entlang einer von der ersten Richtung verschiedenen zweiten Richtung länglich ausgedehnt und die Kontaktstifte des Kontaktmittels sind entlang der zweiten Richtung nebeneinander angeordnet. Dadurch kann zum einen das Leistungsmodul besonderes stabil an der Statoreinheit befestigt werden, zum anderen können sowohl entlang der ersten, als auch entlang der zweiten Richtung ausgedehnte Spulenleiter auf einfache Weise mit Antriebsströmen beaufschlagt werden.

Bei einer Weiterbildung des Statormoduls sind die erste Richtung und die zweite Richtung senkrecht zueinander ausgerichtet. Beispielsweise kann das Statormodul neben den Spulenleitern weitere Spulenleiter, die entlang der zweiten Richtung ausgedehnt sind umfassen. Eine senkrechte Anordnung von erster und zweiter Richtung erlaubt es, auf einfache Weise über das Kontaktmittel die entlang der ersten Richtung ausgedehnten Spulenleiter und über das weitere Kontaktmittel die entlang der zweiten Richtung ausgedehnten weitere Spulenleiter mit Antriebsströmen zu beaufschlagen.

Bei einer Weiterbildung des Statormoduls umfasst die Statoreinheit weitere Spulenleiter zur Beaufschlagung mit weiteren Antriebsströmen. Die Spulenleiter sind in der ersten Richtung länglich ausgedehnt und in der zweiten Richtung nebeneinander angeordnet und die weiteren Spulenleiter sind in der zweiten Richtung länglich ausgedehnt und in der ersten Richtung nebeneinander angeordnet. Das Leistungsmodul ist zur Einspeisung der Antriebsströme in die Spulenleiter über das entlang der zweiten Richtung ausdehnte Kontaktmittel mit den Spulenleitern elektrisch leitend verbunden. Außerdem ist das Leistungsmodul zur Einspeisung der weiteren Antriebsströme in die weiteren Spulenleiter über das entlang der ersten Richtung ausgedehnte weitere Kontaktmittel mit den weiteren Spulenleitern elektrisch leitend verbunden.

Insbesondere können die Spulenleiter einerseits und die weiteren Spulenleiter andrerseits jeweils über ein Kontaktmittel mit dem Leistungsmodul verbunden sein, welches senkrecht zur Ausdehnung der betreffenden Spulenleiter angeordnet ist. Dadurch können die Antriebsströme besonders einfach in die Spulenleiter und in die weiteren Spulenleiter eingespeist werden. Der Läufer kann mittels der mit den Antriebsströmen beaufschlagten Spulenleiter beispielsweise in der zweiten Richtung und mittels der mit den weiteren Antriebsströmen beaufschlagten weiteren Spulenleiter in der ersten Richtung angetrieben werden. Insbesondere kann der Läufer jeweils unabhängig in die erste und in die zweite Richtung angetrieben werden.

Das Leistungsmodul ist kreuzförmig mit einem entlang der ersten Richtung ausgedehnten ersten Balken und mit einem entlang der zweiten Richtung ausgedehnten zweiten Balken ausgebildet, wobei die Kontaktstifte des Kontaktmittels entlang der zweiten Richtung an dem zweiten Balken angeordnet und mit dem zweiten Balken verbunden ist und wobei die Kontaktstifte des weiteren Kontaktmittels entlang der ersten Richtung an dem ersten Balken angeordnet und mit dem ersten Balken verbunden ist. Dadurch kann das Leistungsmodul besonders platzsparend ausgebildet werden. Außerdem können bei einem kreuzförmigen Leistungsmodul auf einfache Weise Freiräume an einer dem Leistungsmodul zugewandten Unterseite der Statoreinheit ausgebildet werden, die nicht durch das Leistungsmodul überdeckt werden. Über die Freiräume kann auf besonders einfache Weise Wärme von der Statoreinheit abgeführt werden.

Bei einer Weiterbildung des Statormoduls ist das Kontaktmittel in der ersten Richtung mittig auf dem zweiten Balken angeordnet und das weitere Kontaktmittel ist in der zweiten Richtung mittig auf dem ersten Balken angeordnet. Dadurch kann das Leistungsmodul sowohl in der ersten, als auch in der zweiten Richtung besonders schmal und die Freiräume können besonders groß ausgebildet werden. Dies ermöglicht es, besonders viel Wärme von der Unterseite der Statoreinheit abzuführen.

Bei einer Weiterbildung des Statormoduls umfasst das Leistungsmodul eine erste Moduleinheit und eine von der ersten Moduleinheit getrennt ausgebildete zweite Moduleinheit, wobei der zweite Balken die erste Moduleinheit und der erste Balken die zweite Moduleinheit umfasst. Die erste Moduleinheit ist mittels des Kontaktmittels an der Statoreinheit befestigt und die zweite Moduleinheit ist mittels des weiteren Kontaktmittels an der Statoreinheit befestigt.

Dadurch können die erste Moduleinheit und die zweite Moduleinheit bei der Herstellung des Statormoduls getrennt voneinander und nacheinander mit der Statoreinheit verbunden werden. Dies ermöglicht es, das Leistungsmodul auf besonders einfache Art und Weise mit der Statoreinheit zu verbinden. Insbesondere kann vermieden werden, dass das Leistungsmodul gleichzeitig an das entlang der zweiten Richtung verlaufende Kontaktmittel und an das entlang der ersten Richtung verlaufende weitere Kontaktmittel angeschlossen werden muss und dabei verkantet.

Bei einer Weiterbildung des Statormoduls umfasst das Leistungsmodul auf der ersten Moduleinheit angeordnete erste Stromerzeugungseinheiten und auf der zweiten Moduleinheit angeordnete zweite Stromerzeugungseinheiten. Außerdem umfasst das Statormodul ein Steuermodul, wobei das Steuermodul dazu ausgebildet ist, erste Steuersignale zur Ansteuerung der ersten Stromerzeugungseinheiten und zweite Steuersignale zur Ansteuerung der zweiten Stromerzeugungseinheiten zu erzeugen. Die erste Moduleinheit ist zur Übertragung der ersten Steuersignale über ein erstes Koppelelement mit dem Steuermodul verbunden, und die zweite Moduleinheit ist zur Übertragung der zweiten Steuersignale über ein zweites Koppelelement mit dem Steuermodul verbunden.

Indem die ersten Steuersignale und die zweiten Steuersignale über getrennt voneinander ausgeführte Koppelelemente von dem Steuermodul auf die Moduleinheiten des Leistungsmoduls übertragen werden, können die Stromerzeugungseinheiten auf dem Leistungsmodul unabhängig voneinander angesteuert werden, ohne dass die Steuersignale zwischen den Moduleinheiten von einer Moduleinheit auf die andere Moduleinheit übertragen werden muss.

Die Erfindung wird nachfolgend anhand von Ausführungsbeispielen und unter Bezugnahme auf Figuren näher erläutert. Dabei zeigen jeweils in schematischer Darstellung
- Fig. 1: ein Planarantriebssystem mit einem Statormodul und einem Läufer;
- Fig. 2: den Läufer des Planarantriebssystems mit einer Magnetanordnung;
- Fig. 3: eine perspektivische Ansicht des Statormoduls des Planarantriebssystems;
- Fig. 4: eine Explosionsansicht einer Statoreinheit des Statormoduls mit einer ersten, zweiten, dritten und vierten Statorlage;
- Fig. 5: eine schematische Darstellung der Statorlagen des ersten Statorsektors mit einzelnen Statorsegmenten;
- Fig. 6: eine Aufsicht auf die erste Statorlage des ersten Statorsektors;
- Fig. 7: eine Aufsicht auf die zweite Statorlage des ersten Statorsektors;
- Fig. 8: ein Ersatzschaltbild erster Statorsegmente des ersten Statorsektors;
- Fig. 9: ein Ersatzschaltbild zweiter Statorsegmente des ersten Statorsektors;
- Fig. 10: ein Ersatzschaltbild der ersten und zweiten Statorsegmente des ersten Statorsektors;
- Fig. 11: eine Aufsicht auf die Statoreinheit des Statormoduls;
- Fig. 12: eine perspektivische Darstellung einer Unterseite eines Leistungsmoduls des Statormoduls;
- Fig. 13: eine perspektivische Darstellung einer Unterseite der Statoreinheit des Statormoduls;
- Fig. 14: eine perspektivische Darstellung der Unterseiten des Leistungsmoduls und der Statoreinheit;
- Fig. 15: eine Ansicht eines ersten Kontaktmittels des Statormoduls;
- Fig. 16: eine Aufsicht auf eine erste weitere Statoreinheit;
- Fig. 17: eine Aufsicht auf eine zweite weitere Statoreinheit;
- Fig. 18: eine weitere Aufsicht auf die Unterseite des Leistungsmoduls.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten Planarantriebssysteme.

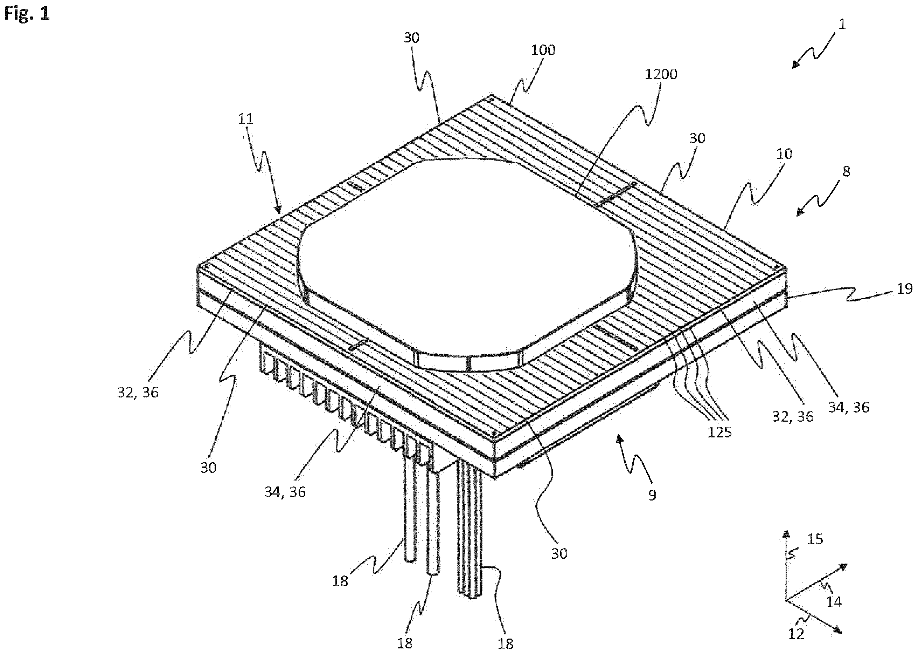

**Fig.** 1 zeigt ein Planarantriebssystem 1 mit einem Statormodul 10 und einem Läufer 1200. Das Statormodul 10 umfasst ein Modulgehäuse 19 und eine Statoreinheit 100. Das Statormodul 10 weist eine Oberseite 8 und eine der Oberseite 8 gegenüberliegende Unterseite 9 auf. Die Statoreinheit 100 ist in einer von der Unterseite 9 zu der Oberseite 8 orientierten vertikalen Richtung 15 oberhalb des Modulgehäuses 19 und an der Oberseite 8 des Statormoduls 10 angeordnet. Die Statoreinheit 100 ist als ein Planarstator ausgebildet und weist an der Oberseite 8 des Statormoduls 10 eine ebene, d.h. planare, Statorfläche 11 auf. Die Statorfläche 11 bildet zugleich eine Oberfläche des Statormoduls 10.

Die Statorfläche 11 ist senkrecht zu der vertikalen Richtung 15 orientiert und erstreckt sich über die gesamte Oberseite 8 der Statoreinheit 100 und des Statormoduls 10. Die Statoreinheit 100 umfasst an der Statorfläche 11 mindestens einen mit einem Antriebsstrom beaufschlagbaren Spulenleiter 125. Die Statoreinheit 100 kann, wie dargestellt, an der Statorfläche 11 eine Mehrzahl der Spulenleiter 125 aufweisen. Die Spulenleiter 125 können jeweils mit einem Antriebsstrom beaufschlagt werden. Mittels der Antriebsströme in den Spulenleitern 125 kann ein Magnetfeld erzeugt werden, welches den Läufer 1200 in Wechselwirkung mit in Fig. 1 nicht dargestellten Antriebsmagneten des Läufers 1200 antreibt. Der Läufer 1200 und die Statoreinheit 100 mit den stromdurchflossenen Spulenleitern 125 bilden einen elektromagnetischen Planarmotor.

Bei dem Statormodul 10 sind die Spulenleiter 125 in einer ersten Richtung 12 länglich ausgedehnte und in einer von der ersten Richtung 12 linear unabhängigen, insbesondere in einer zu der ersten Richtung 12 senkrecht orientierten, zweiten Richtung 14 nebeneinander angeordnet. Die Spulenleiter 125 können beispielsweise, wie dargestellt, als in der ersten Richtung 12 länglich ausgedehnte und in der zweiten Richtung 14 nebeneinander angeordnete Leiterstreifen ausgebildet sein. Bei alternativen Ausführungsformen des Statormoduls 10 können die Spulenleiter 125 beispielswiese auch als entlang der ersten Richtung 12 ausgedehnte und in der zweiten Richtung 14 nebeneinander angeordnete Drähte ausgebildet sein.

Der Läufer 1200 ist im Betrieb beweglich über der Statorfläche 11 des Statormoduls 10 angeordnet und kann im Betrieb sowohl in der ersten Richtung 12, als auch in der zweiten Richtung 14, als auch in der vertikalen Richtung 15 angetrieben werden. Die erste Richtung 12 und die zweite Richtung 14 sind jeweils parallel zu der Statorfläche 11 und senkrecht zu der vertikalen Richtung 15 orientiert. Indem der Läufer 1200 zugleich in der ersten Richtung 12, als auch in der zweiten Richtung 14 angetrieben wird, kann der Läufer 1200 über der Statorfläche 11 in einer beliebigen Richtung angetrieben werden. Der Läufer 1200 kann im Betrieb schwebend über der Statorfläche 11 gehalten werden, beispielsweise durch eine magnetische Wechselwirkung zwischen den Antriebsmagneten und geeigneten Antriebsströmen in den Spulenleitern 125. Neben einem Antreiben des Läufers 1200 in der ersten und zweiten Richtung 12, 14 ist auch ein Antreiben in der dritten, vertikalen Richtung 15 möglich.

Die Statorfläche 11 ist rechteckig ausgebildet. Insbesondere kann die Statorfläche 11, wie dargestellt, quadratisch ausgebildet sein. Die Statorfläche 11 wird durch vier jeweils gerade Außenkanten 30 begrenzt. Jeweils zwei einander gegenüberliegende Außenkanten 30 sind parallel zu der ersten Richtung 12 und zwei einander gegenüberliegende weitere Außenkanten 30 sind parallel zu der zweiten Richtung 14 orientiert.

Die Statoreinheit 100 ist plattenförmig ausgebildet. Eine Ausdehnung der Statoreinheit 100 in der vertikalen Richtung 15 ist kleiner als eine Ausdehnung der Statoreinheit 100 in der ersten und der zweiten Richtung 12, 14. Die Statoreinheit 100 bildet daher einen flachen in der ersten und zweiten Richtung 12, 14 ausgedehnten Quader oder eine in der ersten und zweiten Richtung 12, 14 ausgedehnte Platte. Zwischen der Statorfläche 11 und einer der Statorfläche 11 gegenüberliegenden Unterseite der Statoreinheit 100 weist die Statoreinheit 100 vier jeweils ebene Seitenflächen 32 auf, die an der Statorfläche 11 mit den Außenkanten 30 der Statorfläche 11 bündig abschließen. Die Seitenflächen 32 der Statoreinheit 100 sind senkrecht zu der Statorfläche 11 orientiert.

Das Modulgehäuse 19 ist wie die Statorfläche 11 und die Statoreinheit 100 in einer Aufsicht auf die Statorfläche 11 rechteckig ausgebildet. Das Modulgehäuse 19 ist insbesondere in der Aufsicht auf die Statorfläche 11 quadratisch ausgebildet. Das Modulgehäuse 19 ist als ein flacher Quader bzw. als eine Platte ausgebildet, wobei die Ausdehnung des Modulgehäuse 19 in der vertikalen Richtung 15 kleiner ist als in der ersten und zweiten Richtung 12, 14. Eine der Statoreinheit 100 zugewandte Oberseite des Modulgehäuses 19 ist an die Unterseite der Statoreinheit 100 anschließend angeordnet. In der ersten und zweiten Richtung 12, 14 weisen die Statoreinheit 100 und das Modulgehäuse 19 im Wesentlichen die gleichen Abmessungen auf.

Zwischen der der Statoreinheit 100 zugewandten Oberseite des Modulgehäuses 19 und einer der Oberseite gegenüberliegenden Unterseite des Modulgehäuses 19 weist das Modulgehäuse 19 vier jeweils ebene Seitenflächen 34 auf. Die Seitenflächen 34 des Modulgehäuses 19 können, wie dargestellt, senkrecht zu der Statorfläche 11 orientiert sein. Die Seitenflächen 34 des Modulgehäuses 19 können fluchtend mit den Seitenflächen 32 der Statoreinheit 100 ausgerichtet sein und an die Seitenflächen 32 der Statoreinheit 100 anschließen. Bei einer alternativen Ausführungsform des Statormoduls 10 können die Seitenflächen 34 des Modulgehäuses 19 auch gegenüber den Seitenflächen 32 der Statoreinheit 100 in das Innere des Statormoduls 10 zurückversetzt angeordnet sein. Bei einer weiteren alternativen Ausführungsform können die Seitenflächen 34 des Modulgehäuses 19 auch an der Oberseite des Modulgehäuses 19 an die Seitenflächen 32 der Statoreinheit 100 anschließend angeordnet sein und sich entgegen der vertikalen Richtung 15 zur Unterseite des Modulgehäuses 19 hin in Richtung des Inneren des Statormoduls 10 verjüngen.

Das Statormodul 10 ist in einer Aufsicht auf die Statorfläche 11 rechteckig ausgebildet. Das Statormodul 10 weist zwischen der an der Oberseite 8 des Statormoduls 10 angeordneten Statorfläche 11 und der der Oberseite 8 gegenüberliegenden Unterseite 9 des Statormoduls 10 vier jeweils ebene Seitenflächen 36 auf. Die Seitenflächen 36 des Statormoduls 10 werden im Bereich der Statoreinheit 100 durch die Seitenflächen 32 der Statoreinheit 100 und im Bereich des Modulgehäuses 19 durch die Seitenflächen 34 des Modulgehäuses 19 gebildet.

Die Seitenflächen 36 des Statormoduls 10 schließen damit an der Statorfläche 11 mit den Außenkanten 30 der Statorfläche 11 ab und die Außenkanten 30 der Statorfläche 11 bilden an der Statorfläche 11 zugleich Außenkanten des Statormoduls 10. Insbesondere erstreckt sich die Statorfläche 11 in der ersten Richtung 12 und in der zweiten Richtung 14 jeweils zwischen zwei der Seitenflächen 36 des Statormoduls 10 und die Außenkanten 30 begrenzen die Ausdehnung der Statorfläche 11, der Statoreinheit 100 und des Statormoduls 10 an den Seitenflächen 36 des Statormoduls 10 in der ersten Richtung 12 und in der zweiten Richtung 14.

Die Seitenflächen 36 des Statormoduls 10 können, wie dargestellt, jeweils senkrecht zu der Statorfläche 11 ausgerichtet sein. Bei alternativen Ausführungsformen des Statormoduls 10 können die Seitenflächen 36 des Statormoduls 10 im Bereich des Modulgehäuses 19 auch in Richtung des Inneren des Statormoduls 10 zurückversetzt sein oder sich von der Oberseite 8 zur Unterseite 9 hin in Richtung des Inneren des Statormoduls 10 verjüngen.

Während das Statormodul 10 an seiner durch die Statorfläche 11 gebildeten Oberfläche eben ausgebildet ist, kann das Statormodul 10 an der der Statorfläche 11 gegenüberliegenden Unterseite 9 des Statormoduls 10 nicht eben bzw. uneben ausgebildet sein. Insbesondere können an der Unterseite 9 des Statormoduls 10 oder an der Unterseite des Modulgehäuses 19 weitere Komponenten an dem Modulgehäuse 19 oder dem Statormodul 10 angeordnet sein. Diese weiteren Komponenten reichen in der ersten Richtung 12 oder in der zweiten Richtung 14 höchstens bis an die Außenkanten 30 der Statoreinheit 100, so dass die weiteren Komponenten die Außenkanten 30 der Statoreinheit 100 in der ersten oder der zweiten Richtung 12, 14 nicht überragen.

An der Unterseite des Modulgehäuses 19 sind in Fig. 1 nicht dargestellte Anschlüsse angeordnet zur Verbindung des Statormoduls 10 mit mehreren Anschlussleitungen 18. Die Anschlussleitungen 18 können beispielsweise eine Eingangsleitung eines Datennetzwerks, eine Ausgangsleitung des Datennetzwerks und eine Energieversorgungsleitung zur Versorgung des Statormoduls 10 mit elektrischer Energie umfassen. Insbesondere kann dem Statormodul 10 über die Energieversorgungsleitung elektrische Energie zur Erzeugung der Antriebsströme zugeführt werden. Über das Datennetzwerk kann das Statormodul 10 mit einer Steuereinheit des Planarantriebssystems verbunden sein und Steuerdaten zum Steuern des Läufers 1200 mit der Steuereinheit austauschen.

Die Statorfläche 11 kann in der ersten Richtung 12 eine Ausdehnung zwischen 100mm und 500mm aufweisen, insbesondere zwischen 120mm und 350mm, insbesondere von 240mm. Die Statorfläche 11 kann in der zweiten Richtung 12 eine Ausdehnung zwischen 100mm und 500mm, insbesondere zwischen 120mm und 350mm, insbesondere von 240mm aufweisen. Das Statormodul 10 kann in der vertikalen Richtung 15 eine Ausdehnung zwischen 10mm und 100mm, insbesondere zwischen 15mm und 60mm, insbesondere von 30mm aufweisen. Das Modulgehäuse 19 kann in der vertikalen Richtung 15 eine Ausdehnung zwischen 8mm und 80mm, insbesondere zwischen 13mm und 55mm, insbesondere von 26mm oder 27mm aufweisen. Das Modulgehäuse 19 kann in der ersten und/oder zweiten Richtung 12, 14 die gleiche Ausdehnung aufweisen wie die Statorfläche 11.

Mehrere Exemplare des Statormoduls 10 können derart nebeneinander angeordnet werden, dass die Außenkanten 30 benachbarter Statormodule 10 aneinanderliegen und die Statorflächen 11 der Statormodule 10 eine zusammenhängende Arbeitsfläche bilden, über die der Läufer 1200 unterbrechungsfrei bewegt werden kann. Da die Seitenflächen 36 des Statormoduls 10 an den Außenkanten 30 bündig mit der Statorfläche 11 abschließen, können die Statorflächen 11 von zwei nebeneinander angeordneten Statormodulen 10 nahezu nahtlos aneinander anschließend angeordnet werden, indem die Statormodule 10 mit aneinanderliegenden Seitenflächen 32 der Statoreinheiten 100 oder aneinanderliegenden Außenkanten 30 der Statorflächen 11 angeordnet werden.

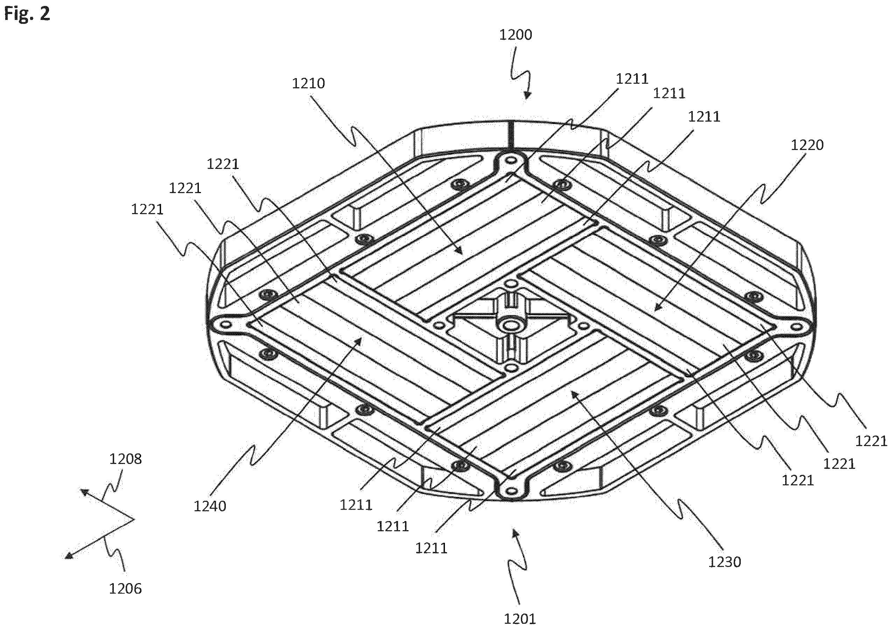

**Fig. 2** zeigt den Läufer 1200 des Planarantriebssystems 1 in einer Ansicht von unten auf eine Unterseite des Läufers 1200. Im Betrieb des Planarantriebssystem 1 ist die Unterseite des Läufers 1200 der Statorfläche 11 des Statormoduls 10 zugewandt angeordnet. Der Läufer 1200 weist an der Unterseite eine Magnetanordnung 1201 auf. Die Magnetanordnung 1201 ist rechteckig, insbesondere quadratisch, ausgebildet und umfasst mehrere Magneten. Die Unterseite des Läufers 1200 ist, insbesondere im Bereich der Magneten der Magnetanordnung 1201, eben bzw. planar ausgebildet. Im Betrieb ist die Unterseite des Läufers 1200 mit der Magnetanordnung 1201 im Wesentlichen parallel zu der Statorfläche 11 orientiert und der Statorfläche 11 zugewandt angeordnet.

Die Magnetanordnung 1201 umfasst eine erste Magneteinheit 1210, eine zweite Magneteinheit 1220, eine dritte Magneteinheit 1230 und eine vierte Magneteinheit 1240. Die erste Magneteinheit 1210 und die dritte Magneteinheit 1230 weisen jeweils in einer ersten Läuferrichtung 1206 länglich ausgedehnte und entlang einer zu der ersten Läuferrichtung 1206 senkrecht orientierten zweiten Läuferrichtung 1208 nebeneinander angeordnete Antriebsmagnete 1211 auf. Insbesondere können die erste und die dritte Magneteinheit 1210, 1230 jeweils drei Antriebsmagnete 1211 aufweisen. Die zweite Magneteinheit 1220 und die vierte Magneteinheit 1240 weisen jeweils in der ersten Läuferrichtung 1206 nebeneinander angeordnete und entlang der zweiten Läuferrichtung 1208 länglich ausgedehnte weitere Antriebsmagnete 1221 auf. Die erste und dritte Magneteinheit 1210, 1230 dient im Betrieb einem Antreiben des Läufers 1200 in der zweiten Läuferrichtung 1208 und die zweite und vierte Magneteinheit 1220, 1240 dient im Betrieb einem Antreiben des Läufers 1200 in der ersten Läuferrichtung 1206. Die Antriebsmagneten 1211 der ersten und dritten Magneteinheit 1210, 1230 und die weiteren Antriebsmagneten 1221 der zweiten und vierten Magneteinheit 1220, 1240 sind jeweils senkrecht zu der ersten und der zweiten Läuferrichtung 1206, 1208 magnetisiert.

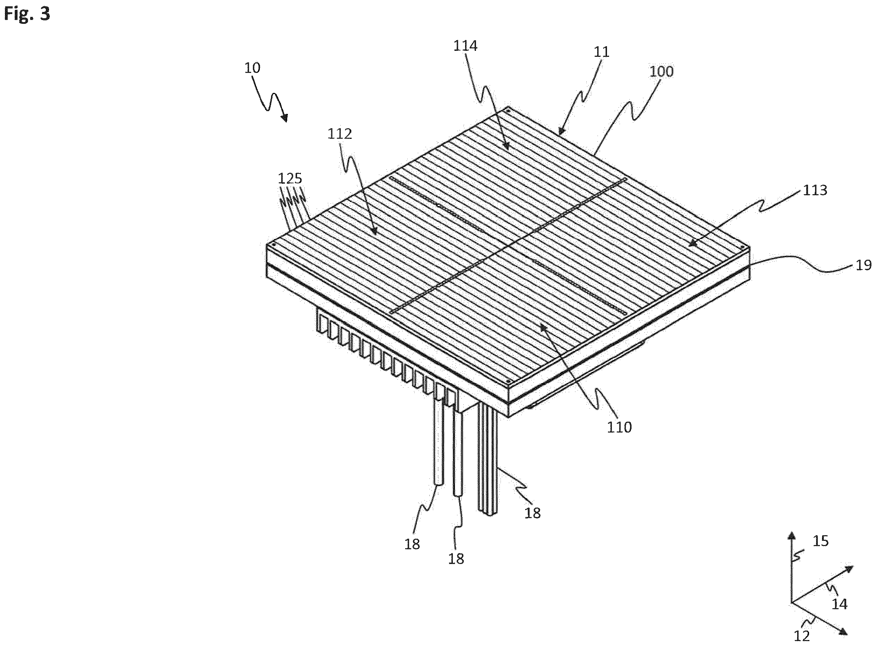

**Fig. 3** zeigt das Statormodul 10 des Planarantriebssystems 1 in einer perspektivischen Ansicht ohne den Läufer 1200. Die Statoreinheit 100 des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der an der Statorfläche 11 der Statoreinheit 100 angeordneten Spulenleiter 125. Jeder der Spulenleiter 125 an der Statorfläche 11 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 sind in der ersten Richtung 12 in zwei nebeneinanderliegenden Reihen und in der zweiten Richtung 14 ebenfalls in zwei nebeneinanderliegenden Reihen aneinander anschließend angeordnet. Die Statorsektoren 110, 112, 113, 114 benachbarter Reihen sind ebenfalls jeweils aneinander anschließend angeordnet. In der ersten Richtung 12 umfasst die Statoreinheit 100 eine Reihe mit dem zweiten Statorsektor 112 und dem ersten Statorsektor 110 und eine weitere Reihe mit dem vierten Statorsektor 114 und dem dritten Statorsektor 113. In der zweiten Richtung 14 umfasst die Statoreinheit 100 eine Reihe mit dem ersten Statorsektor 110 und dem dritten Statorsektor 113 und eine weitere Reihe mit dem zweiten Statorsektor 112 und dem vierten Statorsektor 114.

Die Statorsektoren 110, 112, 113, 114 weisen in der ersten Richtung 12 und in der zweiten Richtung 14 jeweils eine Ausdehnung auf, die halb so groß ist wie eine Ausdehnung der Statoreinheit 100 bzw. eine Ausdehnung des Statormoduls 10 in der entsprechenden Richtung 12, 14. Die Grenzen der Statorsektoren 110, 112, 113, 114 verlaufen damit in der ersten und in der zweiten Richtung 12, 14 jeweils in der Mitte der Statoreinheit 100 und schneiden sich im Zentrum der Statoreinheit 100. Die Statorsektoren 110, 112, 113, 114 umfassen jeweils ein Viertel der Fläche, d.h. einen Quadranten, der Statoreinheit 100.

Innerhalb der Statorsektoren 110, 112, 113, 114 sind die Spulenleiter 125 in mehreren übereinanderliegenden Statorlagen oder Statorebenen angeordnet, wobei jede der Statorlagen lediglich Spulenleiter umfasst, die entweder im Wesentlichen entlang der ersten Richtung 12 oder im Wesentlichen entlang der zweiten Richtung 14 länglich ausgedehnt sind. Von der Ausdehnung der Spulenleiter abgesehen und soweit im Folgenden keine Unterschiede beschrieben werden, sind die Statorsektoren 110, 112, 113, 114 auf den unterschiedlichen Statorlagen identisch ausgebildet. Bei der in Fig. 3 dargestellten Statoreinheit 100 des Statormoduls 10 umfasst die Statorlage an der Statorfläche 11 lediglich Spulenleiter 125, welche entlang der ersten Richtung 12 länglich ausgedehnt und entlang der zweiten Richtung 14 nebeneinander und aneinander anschließend angeordnet sind.

Die in Fig. 3 sichtbare Statorlage an der Statorfläche 11 bildet eine erste Statorlage der Statoreinheit 100. In der vertikalen Richtung 15 unterhalb der ersten Statorlage umfasst die Statoreinheit 100 mindestens noch eine zweite Statorlage.

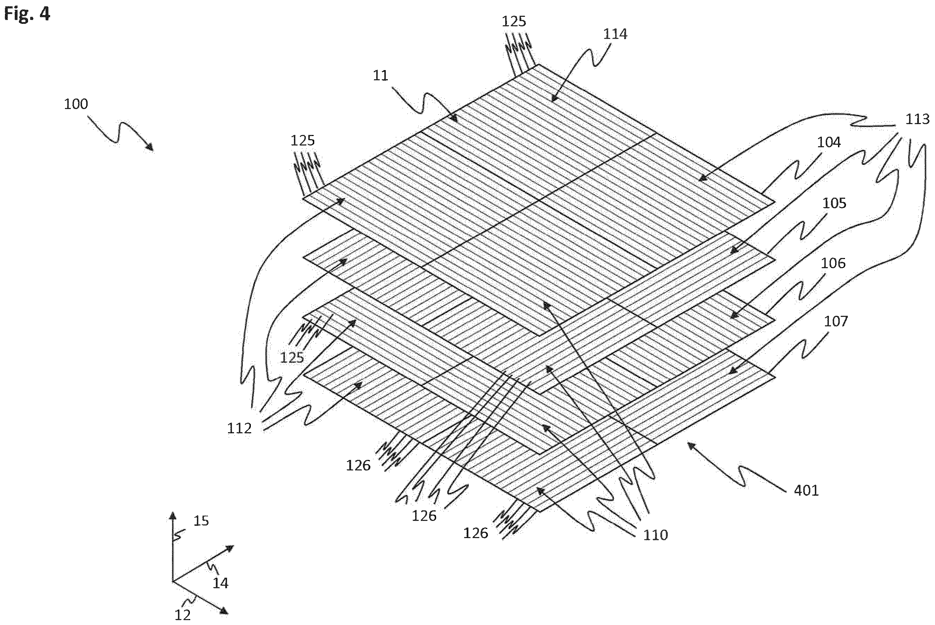

**Fig. 4** zeigt eine schematische perspektivische Darstellung einer Explosionsansicht der Statoreinheit 100 mit den einzelnen Statorlagen.

Die Statoreinheit 100 umfasst in der vertikalen Richtung 15 unter der an der Statorfläche 11 angeordneten ersten Statorlage 104 eine zweite Statorlage 105, unter der zweiten Statorlage 105 eine dritte Statorlage 106 und unter der dritten Statorlage 106 eine vierte Statorlage 107. Soweit im Folgenden keine Unterscheide beschrieben werden, sind die zweite, dritte und vierte Statorlage 105, 106, 107 ausgebildet wie die in Fig. 3 dargestellte erste Statorlage 104 an der Statorfläche 11 der Statoreinheit 100.

Die Statorsektoren 110, 112, 113, 114 umfassen in der dritten Statorlage 106, wie in der ersten Statorlage 104, entlang der ersten Richtung 12 länglich ausgedehnte und in der zweiten Richtung 14 nebeneinander und aneinander anschließend angeordnete Spulenleiter 125. In der zweiten Statorlage 105 und in der vierten Statorlage 107 umfassen die Statorsektoren 110, 112, 113, 114 weitere Spulenleiter 126. Soweit im Folgenden keine Unterschiede beschrieben werden, sind die weiteren Spulenleiter 126 ausgebildet wie die Spulenleiter 125 in der ersten Statorlage 104 und in der dritten Statorlage 106. Anders als die Spulenleiter 125 der ersten und dritten Statorlage 104, 106, sind die weiteren Spulenleiter 126 der zweiten und vierten Statorlage 105, 107 entlang der zweiten Richtung 14 länglich ausgedehnt und in der ersten Richtung 12 nebeneinander und aneinander anschließend angeordnet.

Die Statorsektoren 110, 112, 113, 114 umfassen in der ersten und dritten Statorlage 104, 106 ausschließlich die entlang der ersten Richtung 12 länglich ausgedehnten Spulenleiter 125 und nicht auch noch zusätzlich die entlang der zweiten Richtung 14 länglich ausgedehnten weiteren Spulenleiter 126. Ebenso umfassen die Statorsektoren 110, 112, 113, 114 in der zweiten und vierten Statorlage 105, 107 ausschließlich die entlang der zweiten Richtung 14 länglich ausgedehnten weiteren Spulenleiter 126 und nicht auch noch zusätzlich die entlang der ersten Richtung 12 länglich ausgedehnten Spulenleiter 125.

Die Statorsektoren 110, 112, 113, 114 weisen in allen Statorlagen 104, 105, 106, 107 jeweils die gleichen Abmessungen auf. Insbesondere weisen die Statorsektoren 110, 112, 113, 114 in allen Statorlagen 104, 105, 106, 107 in der ersten Richtung 12 und in der zweiten Richtung 14 jeweils gleiche Abmessungen auf.

Die Spulenleiter 125, 126 übereinander angeordneter Statorlagen 104, 105, 106, 107 sind jeweils elektrisch isoliert voneinander ausgebildet. Beispielsweise können die Statorlagen 104, 105, 106, 107 jeweils als voneinander isolierte Leiterbahnlagen einer mehrlagigen Leiterplatte ausgebildet sein.

Die Statorsektoren 110, 112, 113, 114 sind unabhängig voneinander bestrombar ausgebildet. Insbesondere sind die Spulenleiter 125 und die weiteren Spulenleiter 126 der Statorsektoren 110, 112, 113, 114 auf der Statoreinheit 100 elektrisch isoliert voneinander ausgebildet. Das heißt insbesondere, dass die Spulenleiter 125, 126 des ersten Statorsektors 110 elektrisch isoliert von den Spulenleitern 125, 126 des zweiten Statorsektors 112, von den Spulenleitern 125, 126 des dritten Statorsektors 113 und von den Spulenleitern 125, 126 des vierten Statorsektors 114 ausgebildet sind. Außerdem sind die Spulenleiter 125, 126 des zweiten Statorsektors 112 elektrisch isoliert von den Spulenleitern 125, 126 des ersten Statorsektors 110, von den Spulenleitern 125, 126 des dritten Statorsektors 113 und von den Spulenleitern 125, 126 des vierten Statorsektors 114 ausgebildet. Außerdem sind die Spulenleiter 125, 126 des dritten Statorsektors 113 elektrisch isoliert von den Spulenleitern 125, 126 des ersten Statorsektors 110, von den Spulenleitern 125, 126 des zweiten Statorsektors 112 und von den Spulenleitern 125, 126 des vierten Statorsektors 114 ausgebildet. Schließlich sind die Spulenleiter 125, 126 des vierten Statorsektors 114 elektrisch isoliert von den Spulenleitern 125, 126 des ersten Statorsektors 110, von den Spulenleitern 125, 126 des zweiten Statorsektors 112 und von den Spulenleitern 125, 126 des dritten Statorsektors 113 ausgebildet.

Während die Spulenleiter 125, 126 der einzelnen Statorsektoren 110, 112, 113, 114 auf der Statoreinheit 100 jeweils elektrisch isoliert von den Spulenleiter 125, 126 der übrigen Statorsektoren 110, 112, 113, 114 ausgebildet sind, können die Spulenleiter 125, 126 innerhalb der einzelnen Statorsektoren 110, 112, 113, 114 jeweils elektrisch leitend miteinander verbunden sein. Insbesondere können innerhalb der Statorsektoren 110, 112, 113, 114 jeweils übereinanderliegende Spulenleiter 125 der ersten Statorlage 104 und der dritten Statorlage 106 elektrisch leitend miteinander verbunden sein. Beispielsweise können jeweils übereinanderliegende Spulenleiter 125 der Statorsektoren 110, 112, 113, 114 in Reihe geschaltet sein. Ebenso können innerhalb der Statorsektoren 110, 112, 113, 114 jeweils übereinanderliegende weitere Spulenleiter 126 der zweiten Statorlage 105 und der vierten Statorlage 107 elektrisch leitend miteinander verbunden sein. Beispielsweise können jeweils übereinanderliegende weitere Spulenleiter 126 der Statorsektoren 110, 112, 113, 114 in Reihe geschaltet sein

Alternative Ausführungsformen der Statoreinheit 100 können zwischen der zweiten und dritten Statorlage 105, 106 in der vertikalen Richtung 15 untereinander angeordnete weitere Statorlagen umfassen. Dabei kann die Statoreinheit 100 in der vertikalen Richtung 15 jeweils abwechselnd Statorlagen mit im Wesentlichen entlang der ersten Richtung 12 länglich ausgedehnten Spulenleitern 125 und Statorlagen mit im Wesentlichen entlang der zweiten Richtung 14 länglich ausgedehnten weiteren Spulenleitern 126 umfassen. Außerdem können bei alternativen Ausführungsformen der Statoreinheit 100 zwischen der ersten und der zweiten Statorlage 104, 105 und/oder zwischen der dritten und der vierten Statorlage 106, 107 weitere Statorlagen mit entlang der ersten Richtung 125 ausgedehnten Spulenleitern 125 oder mit entlang der zweiten Richtung 14 ausgedehnten weiteren Spulenleitern 126 angeordnet sein.

Die Spulenleiter 125 und die weiteren Spulenleitern 126 der Statorsektoren 110, 112, 113, 114 sind innerhalb der Statorlagen 104, 105, 106, 107 jeweils zu Statorsegmenten zusammengefasst.

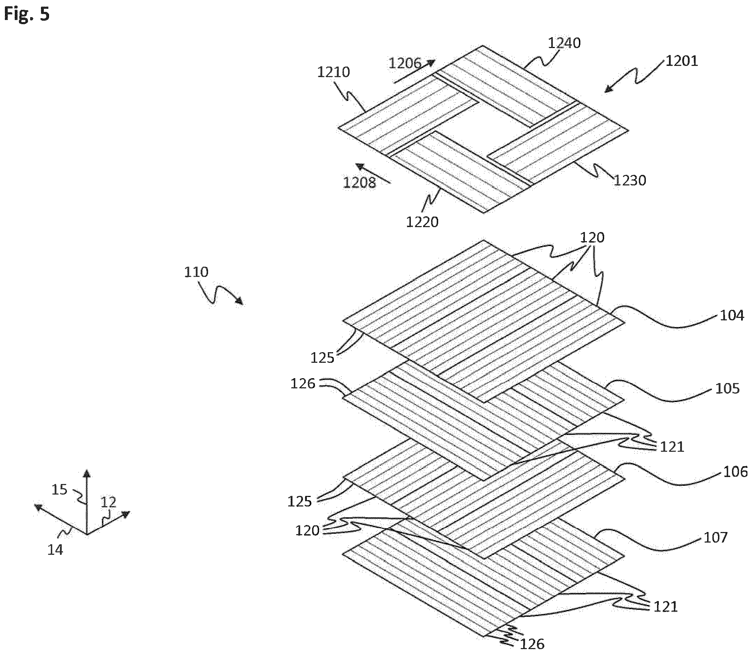

**Fig. 5** zeigt eine schematische Darstellung der Statorlagen 104, 105, 106, 107 des ersten Statorsektors 110 mit den einzelnen Statorsegmenten.

Die Spulenleiter 125, 126 des ersten Statorsektors 110 sind innerhalb der Statorlagen 104, 105, 106, 107 jeweils zu Statorsegmenten 120, 121 zusammengefasst. Der erste Statorsektor 110 umfasst in jeder Statorlage 104, 105, 106, 107 jeweils drei nebeneinander und aneinander anschließend angeordnete Statorsegmente 120, 121. Jedes der Statorsegmente 120, 121 umfasst jeweils sechs nebeneinander angeordnete Spulenleiter 125, 126. Der erste Statorsektor 110 umfasst in der ersten und dritten Statorlage 104, 106 jeweils drei erste Statorsegmente 120 und in der zweiten und vierten Statorlage 105, 107 jeweils drei zweite Statorsegmente 121. Die ersten Statorsegmente 120 umfassen jeweils sechs Nebeneinanderliegende der entlang der zweiten Richtung 14 nebeneinander angeordneten und entlang der ersten Richtung 12 länglich ausgedehnten Spulenleiter 125. Die zweiten Statorsegmente 121 umfassen jeweils sechs Nebeneinanderliegende der entlang der ersten Richtung 12 nebeneinander angeordneten und entlang der zweiten Richtung 14 länglich ausgedehnten weiteren Spulenleiter 126.

Der erste Statorsektor 110 der Statoreinheit 100 umfasst damit in der ersten Statorlage 104 und in der dritten Statorlage 106 ausschließlich Spulenleiter 125, die entlang der ersten Richtung 12 länglich ausgedehnt sind, und in der zweiten Statorlage 105 und in der vierten Statorlage 107 ausschließlich weitere Spulenleiter 126, die entlang der zweiten Richtung 14 länglich ausgedehnt sind.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und dritten Statorlage 104, 106 des ersten Statorsektors 110 in der ersten Richtung 12 über die drei in der ersten Richtung 12 nebeneinander angeordneten zweiten Statorsegmente 121 der zweiten und vierten Statorlage 105, 107 des ersten Statorsektors 110 erstreckt. Außerdem erstrecken sich die zweiten Statorsegmente 121 der zweiten und vierten Statorlage 105, 107 des ersten Statorsektors 110 in der zweiten Richtung 14 über alle in der zweiten Richtung 14 nebeneinander angeordneten ersten Statorsegmente 120 der ersten und dritten Statorlage 104, 106 des ersten Statorsektors 110.

Die Anordnung der Spulenleiter 125, 126 in den Statorlagen 104, 105, 106, 107 des zweiten Statorsektors 112, des dritten Statorsektors 113 und des vierten Statorsektors 114 entspricht der in Fig. 5 dargestellten Anordnung der Spulenleiter 125, 126 in den Statorlagen 104, 105, 106, 107 des ersten Statorsektors 110.

Im Betrieb des Planarantriebssystems 1 kann der Läufer 1200 derart über der Statoreinheit 100 ausgerichtet sein, dass die erste Läuferrichtung 1206 entlang der ersten Richtung 12 und die zweite Läuferrichtung 1208 entlang der zweiten Richtung 14 orientiert ist. Die erste Magneteinheit 1210 und die dritte Magneteinheit 1230 können im Betrieb mit dem durch die Spulenleiter 125 der ersten Statorsegmente 120 erzeugten Magnetfeld wechselwirken, um den Läufer 1200 entlang der zweiten Richtung 14 anzutreiben. Die zweite Magneteinheit 1220 und die vierte Magneteinheit 1240 können im Betrieb mit dem durch die weiteren Spulenleiter 126 der zweiten Statorsegmente 121 erzeugten Magnetfeld wechselwirken, um den Läufer 1200 entlang der ersten Richtung 12 anzutreiben.

Alternativ kann der Läufer 1200, anders als in Fig. 5 dargestellt, auch derart ausgerichtet sein, dass die erste Läuferrichtung 1206 entlang der zweiten Richtung 14 und die zweite Läuferrichtung 1208 entlang der ersten Richtung 12 orientiert ist. In diesem Fall wirken die erste und die dritte Magneteinheit 1210, 1230 mit dem Magnetfeld der zweiten Statorsegmente 121 zum Antreiben des Läufers 1200 in die erste Richtung 12 und die zweite und die vierte Magneteinheit 1220, 1240 mit dem Magnetfeld der ersten Statorsegmente 120 zum Antreiben des Läufers 1200 in die zweite Richtung 14 zusammen.

Die Spulenleiter 125, 126 der einzelnen Statorsegmente 120, 121 sind jeweils unabhängig von den Spulenleitern 125, 126 der übrigen Statorsegmente 120, 121 mit den Antriebsströmen bestrombar. Insbesondere hängen die Antriebsströme in einem der Statorsegmente 120, 121 nicht zwingend von Antriebsströmen in einem anderen der Statorsegmente 120, 121 ab. Außerdem können die Spulenleiter 125, 126 eines der Statorsegmente 120, 121 mit Antriebsströmen beaufschlagt werden, während die Spulenleiter 125, 126 eines anderen, beispielsweise eines benachbarten Statorsegments 120, 121 stromlos sind. Die Spulenleiter 125, 126 der einzelnen Statorsegmente 120, 121 sind auf der Statoreinheit 100 elektrisch isoliert von den Spulenleitern 125, 126 der übrigen Statorsegmente 120, 121 ausgeführt. Die Spulenleiter 125, 126 unterschiedlicher Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Spulenleiter 125, 126 in den einzelnen Statorsektoren 110, 112, 113, 114 können jeweils zu Mehrphasensystemen mit einem gemeinsamen Sternpunkt zusammengeschaltet sein. Der Sternpunkt kann auf der Statoreinheit 100 ausgebildet sein. Insbesondere können die Spulenleiter 125, 126 zu Dreiphasensystemen mit einem gemeinsamen Sternpunkt zusammengeschaltet sein. Die Dreiphasensysteme können jeweils sechs benachbarte Spulenleiter 125 oder sechs benachbarte weitere Spulenleiter 126 umfassen. Die Anzahl benachbarter Spulenleiter 125, 126 in einem der Dreiphasensysteme kann auch jeweils drei, zwölf oder ein anderes Vielfaches von drei betragen.

Die Mehrphasensysteme können auf der Statoreinheit 100 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 100 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 100 seriell oder parallel geschaltet sein.

Die Statorsektoren 110, 112, 113, 114 können, wie in den Fig. 3 und 4 dargestellt, in jeder Statorlage 104, 105, 106, 107 jeweils achtzehn Spulenleiter 125, 126 umfassen. Jeweils sechs benachbarte Spulenleiter 125, 126 können zu einem Dreiphasensystem verschaltet sein und die Statorsektoren 110, 112, 113, 114 können jeweils drei in der ersten Richtung 12 nebeneinanderliegende Dreiphasensysteme und jeweils drei in der zweiten Richtung 14 nebeneinanderliegende Dreiphasensysteme umfassen. Dabei können Spulenleiter 125, 126, die im Wesentlichen in der gleichen Richtung 12, 14 ausgedehnt sind und in den Statorlagen 104, 105, 106, 107 übereinanderliegen, in Serie zu einem gemeinsamen Dreiphasensystem verschaltet sein. Die Spulenleiter 125, 126 können dabei derart verschaltet sein, dass in der vertikalen Richtung 15 übereinanderliegende Spulenleiter 125, 126 jeweils mit dem gleichen Antriebsstrom beaufschlagt werden. Die Dreiphasensysteme weisen damit drei Phasen auf, die aus in den Statorlagen 104, 105, 106, 107 übereinanderliegenden Spulenleitern 125, 126 zusammengeschaltet sind.

Beispielsweise können in den einzelnen Statorlagen 104, 105, 106, 107 jeweils alle übereinanderliegenden und parallel ausgerichteten Spulenleiter 125, 126 in Serie geschaltet sein. Insbesondere können die Spulenleiter 125 von in der ersten Statorlage 104 und in der dritten Statorlage 106 übereinanderliegenden Dreiphasensystemen, sowie die weiteren Spulenleiter 126 von in der zweiten Statorlage 105 und in der vierten Statorlage 107 übereinanderliegenden Dreiphasensystemen jeweils seriell zu einem gemeinsamen Dreiphasensystem verschaltet sein. Dabei können jeweils alle in der vertikalen Richtung 15 übereinanderliegenden und parallel orientierten Spulenleiter 125, 126 der ersten und dritten Statorlage 104, 106 und der zweiten und vierten Statorlage 105, 107 in Serie geschaltet sein.

Insbesondere sind bei der Statoreinheit 100 innerhalb der einzelnen Statorsegmente 120 die entlang der ersten Richtung 12 länglich ausgedehnten Spulenleiter 125 jeweils zu Mehrphasensystemen mit einem gemeinsamen Sternpunkt verschaltet. Dabei sind die einzelnen Mehrphasensysteme verschiedener Statorsegmente 120 jeweils unabhängig voneinander bestrombar. Ebenso sind alle weiteren Spulenleiter 126 der einzelnen weiteren Statorsegmente 121 jeweils zu weiteren Mehrphasensystemen verschaltet. Die einzelnen weiteren Mehrphasensysteme der weiteren Statorsegmente 121 sind jeweils unabhängig voneinander und unabhängig von den Mehrphasensystemen der Statorsegmente 120 bestrombar. Insbesondere sind die Spulenleiter 125 der Statorsegmente 120 und die weiteren Spulenleiter 126 der weiteren Statorsegmente 121 jeweils zu Dreiphasensystemen verschaltet. Die Spulenleiter 125 und die weiteren Spulenleiter 126 können jeweils mit einem dreiphasigen Antriebsstrom beaufschlagt werden. Die Antriebsströme umfassen eine erste Phase U, eine zweite Phase V und eine dritte Phase W, die untereinander jeweils einen Phasenversatz von 120° aufweisen.

Die Leiterstreifen 125 sind räumlich in der zweiten Richtung 14 um jeweils ein Drittel der wirksamen Wellenlänge der mit den Leiterstreifen 125 wechselwirkenden Antriebsmagnete 1211 der ersten und dritten Magneteinheit 1210, 1230 versetzt angeordnet. Die weiteren Leiterstreifen 126 sind räumlich in der ersten Richtung 12 um jeweils ein Drittel der wirksamen weiteren Wellenlänge der mit den weiteren Leiterstreifen 1126 wechselwirkenden weiteren Antriebsmagnete 1221 der zweiten und vierten Magneteinheit 1220, 1240 versetzt angeordnet.

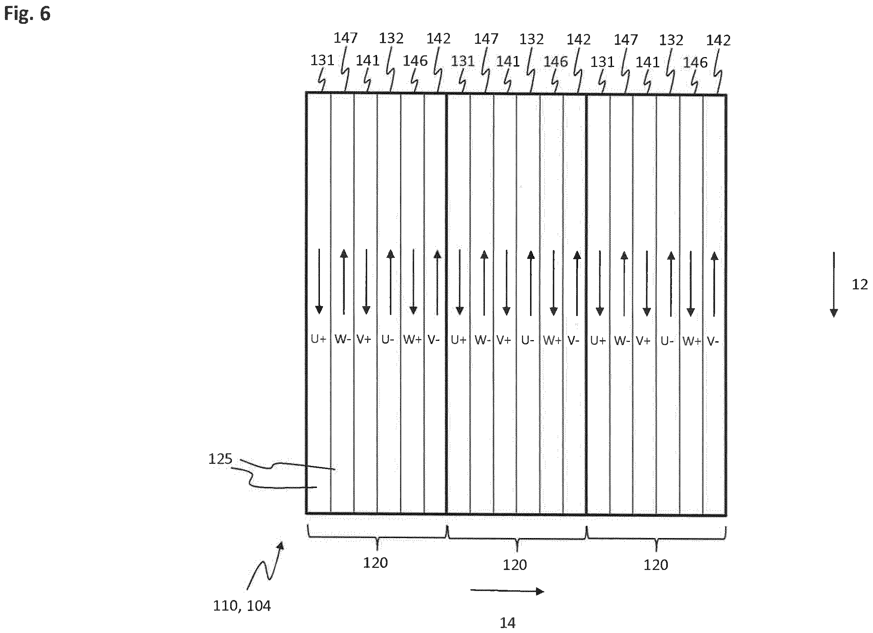

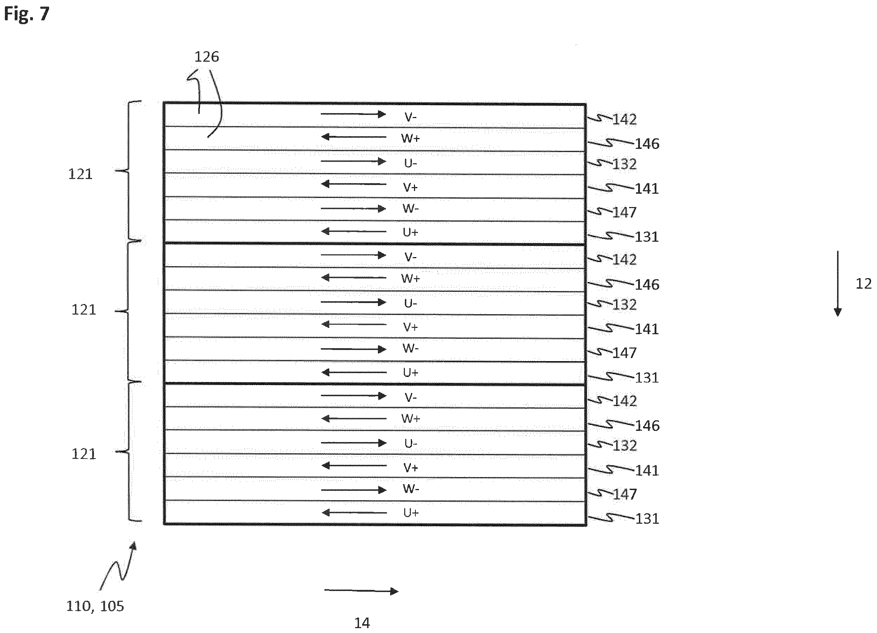

**Fig. 6** zeigt eine Aufsicht auf die erste Statorlage 104 des ersten Statorsektors 110. **Fig. 7** zeigt eine Aufsicht auf die zweite Statorlage 105 des ersten Statorsektors 110. In Fig. 6 und in Fig. 7 ist die Verteilung der Phasen U, V, W auf die Spulenleiter 125, 126 der ersten und zweiten Statorsegmente 120, 121 des ersten Statorsektors 110 dargestellt. Die Statorsegmente 120, 121 weisen jeweils einen ersten Hinleiter 131 und einen ersten Rückleiter 132 für die ersten Phasen U der Antriebsströme, einen zweiten Hinleiter 141 und einen zweiten Rückleiter 142 für die zweiten Phasen V der Antriebsströme und einen dritten Hinleiter 146 und einen dritten Rückleiter 147 für die dritten Phasen W der Antriebsströme auf. Nachdem die einzelnen Statorsegmente 120, 121 jeweils unabhängig voneinander bestrombar sind, können die Antriebsströme, mit denen die einzelnen Statorsegmente 120, 121 beaufschlagt werden, verschieden sein. Insbesondere können jeweils die einzelnen ersten Phasen U, mit denen die verschiedenen Statorsegmente 120, 121 beaufschlagt werden, verschieden sein. Außerdem können jeweils die einzelnen zweiten Phasen V, mit denen die verschiedenen Statorsegmente 120, 121 beaufschlagt werden, und die einzelnen dritten Phasen W, mit denen die verschiedenen Statorsegmente 120, 121 beaufschlagt werden, verschieden sein.

Die Hinleiter 131, 141, 146 und die Rückleiter 132, 142, 147 der einzelnen Statorsegmente 120, 121 sind jeweils entlang einer Breitenrichtung der Statorsegmente 120, 121 nebeneinander angeordnet. Bei den in Fig. 6 dargestellten ersten Statorsegmenten 120 entspricht die Breitenrichtung der zweiten Richtung 14. Bei den in Fig. 7 dargestellten zweiten Statorsegmenten 121 verläuft die Breitenrichtung parallel und entgegen der ersten Richtung 12.

Der erste Hinleiter 131 ist jeweils an einer ersten Längsseite der Statorsegmente 120, 121 angeordnet. Bei den ersten Statorsegmenten 120 ist die erste Längsseite entlang der ersten Richtung 12 und bei den zweiten Statorsegmenten 121 entlang der zweiten Richtung 14 orientiert. Dem ersten Hinleiter 131 nachfolgend sind bei den Statorsegmenten 120, 121 in der Breitenrichtung der Reihe nach der dritte Rückleiter 147, der zweite Hinleiter 141, der erste Rückleiter 132, der dritte Hinleiter 146 und der zweite Rückleiter 142 nebeneinander und aneinander anschließend angeordnet.

Die erste Phase U wird bei den Statorsegmenten 120, 121 auf dem ersten Hinleiter 131 von einer ersten Seite der Statorsegmente 120, 121 zu einer der ersten Seite gegenüberliegenden zweiten Seite der Statorsegmente 120, 121 und auf dem ersten Rückleiter 132 von der zweiten Seite zu der ersten Seite geleitet. Die zweite Phase V wird auf dem zweiten Hinleiter 141 von der ersten Seite der Statorsegmente 120, 121 zu der zweiten Seite der Statorsegmente 120, 121 und auf dem zweiten Rückleiter 142 von der zweiten Seite zu der ersten Seite geleitet. Die dritte Phase W wird auf dem dritten Hinleiter 146 von der ersten Seite der Statorsegmente 120, 121 zu der zweiten Seite der Statorsegmente 120 und auf dem dritten Rückleiter 147 von der zweiten Seite zu der ersten Seite geleitet.

Die Phasen U, V und W werden damit jeweils an der ersten Seite der Statorsegmente 120, 121 auf die Hinleiter 131, 141, 146 und auf der zweiten Seite der Statorsegmente 120, 121 auf die Rückleiter 132, 142, 147 eingespeist. Außerdem werden die Phasen U, V und W jeweils an der zweiten Seite der Statorsegmente 120, 121 aus den Hinleitern 131, 141, 146 und auf der ersten Seite der Statorsegmente 120, 121 aus den Rückleitern 132, 142, 147 ausgekoppelt.

Bei den ersten Statorsegmenten 120 sind die erste und die zweite Seite jeweils parallel zu der zweiten Richtung 14 ausgerichtet. Bei den zweiten Statorsegmenten 121 sind die erste und die zweite Seite jeweils parallel zu der ersten Richtung 12 ausgerichtet.

Die ersten Hin- und Rückleiter 131, 132 von auf mehreren Statorlagen 104, 106 übereinanderliegenden ersten Statorsegmenten 120 können jeweils seriell verschaltet sein. Insbesondere können der in der ersten Statorlage 104 angeordnete erste Hinleiter 131 und der in der ersten Statorlage 104 angeordnete erste Rückleiter 132 mit dem in der dritten Statorlage 106 angeordneten ersten Hinleiter 131 und dem in der dritten Statorlage 106 angeordneten ersten Rückleiter 132 seriell verschaltet sein. Analog können die zweiten Hin-und Rückleiter 141, 142 und die dritten Hin- und Rückleiter 146, 147 von auf mehreren Statorlagen 104, 106 übereinanderliegenden ersten Statorsegmenten 120 jeweils seriell verschaltet sein.

Insbesondere können die Phasen U, V, W jeweils auf der ersten oder der dritten Statorlage 104, 106, in die Hinleiter 131, 141, 146 eines der ersten Statorsegmente 120 eingekoppelt werden, anschließend jeweils alle der betreffenden Phase U, V, W zugeordneten Hin- und Rückleiter 131, 141, 146, 132, 142, 147 auf allen Statorlagen 104, 106, des betreffenden ersten Statorsegments 120 durchlaufen und schließlich in einem Sternpunkt zusammengeführt werden. Analog zu den ersten Statorsegmenten 120 können auch jeweils die ersten Hin- und Rückleiter 131, 132, die zweiten Hin- und Rückleiter 141, 142 und die dritten Hin- und Rückleiter 146, 147 von auf mehreren Statorlagen 105, 107 übereinanderliegenden zweiten Statorsegmenten 121 seriell verschaltet und in einem Sternpunkt zusammengeführt sein.

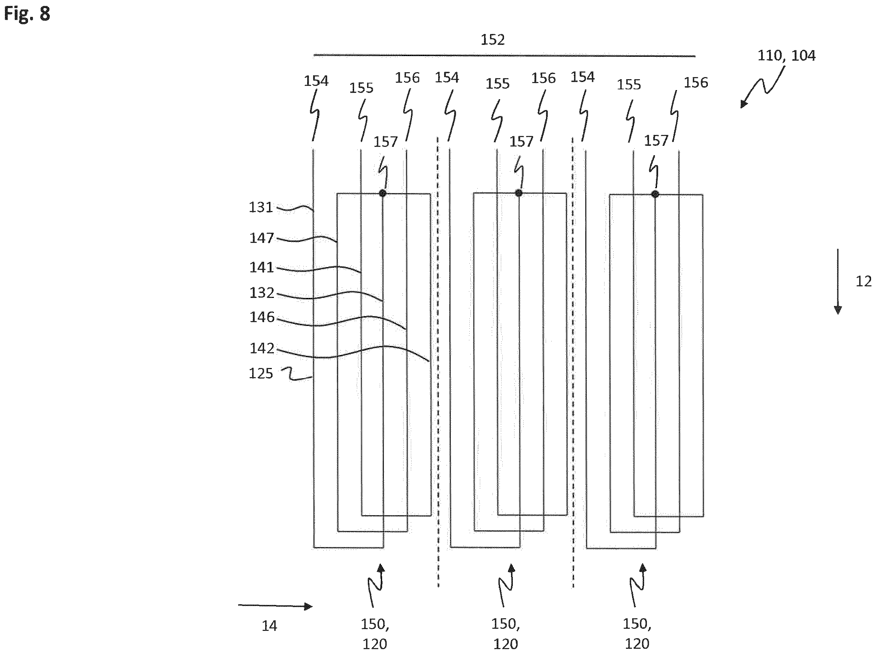

**Fig. 8** zeigt ein Ersatzschaltbild der ersten Statorsegmente 120 des ersten Statorsektors 110. Bei dem in Fig. 8 dargestellten Ersatzschaltbild sind alle übereinanderliegenden und in Serie geschalteten Spulenleiter 125 der ersten Statorsegmente 120 als ein einziger Leiter dargestellt. Insbesondere umfasst der dargestellte erste Hinleiter 131 alle in verschiedenen Statorlagen 104, 106 übereinanderliegenden und in Serie geschalteten Hinleiter 131 der ersten Statorsegmente 120 und der dargestellte erste Rückleiter 132 umfasst alle in verschiedenen Statorlagen 104, 106 übereinanderliegenden und in Serie geschalteten ersten Rückleiter 132 der ersten Statorsegmente 120. Analog umfassen die dargestellten zweiten Hinleiter 141, zweiten Rückleiter 142, dritten Hinleiter 146 und dritten Rückleiter 147 jeweils alle in verschiedenen Statorlagen 104, 106 übereinanderliegenden und in Serie geschalteten zweiten Hinleiter 141, zweiten Rückleiter 142, dritten Hinleiter 146 bzw. dritten Rückleiter 147 der ersten Statorsegmente 120.

Die Spulenleiter 125 der einzelnen ersten Statorsegmente 120 sind jeweils zu ersten Dreiphasensystemen 150 verschaltet. An einer entlang der zweiten Richtung 14 orientierten ersten Seite 152 der einzelnen ersten Statorsegmente 120 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 ist mit einem in einer der Statorlagen 104, 106 angeordneten ersten Hinleiter 131 verbunden. Der zweite Anschlusspunkt 155 ist mit einem in einer der Statorlagen 104, 106 angeordneten zweiten Hinleiter 141 verbunden. Der dritte Anschlusspunkt 156 ist mit einem in einer der Statorlagen 104, 106 angeordneten dritten Hinleiter 146 verbunden. Außerdem ist an der ersten Seite 152 der einzelnen ersten Statorsegmente 120 jeweils ein Sternpunkt 157 angeordnet. In den Sternpunkten 157 sind jeweils ein erster Rückleiter 132 einer der Statorlagen 104, 106, ein zweiter Rückleiter 142 einer der Statorlagen 104, 106 und ein dritter Rückleiter 147 einer der Statorlagen 104, 106 miteinander verbunden.

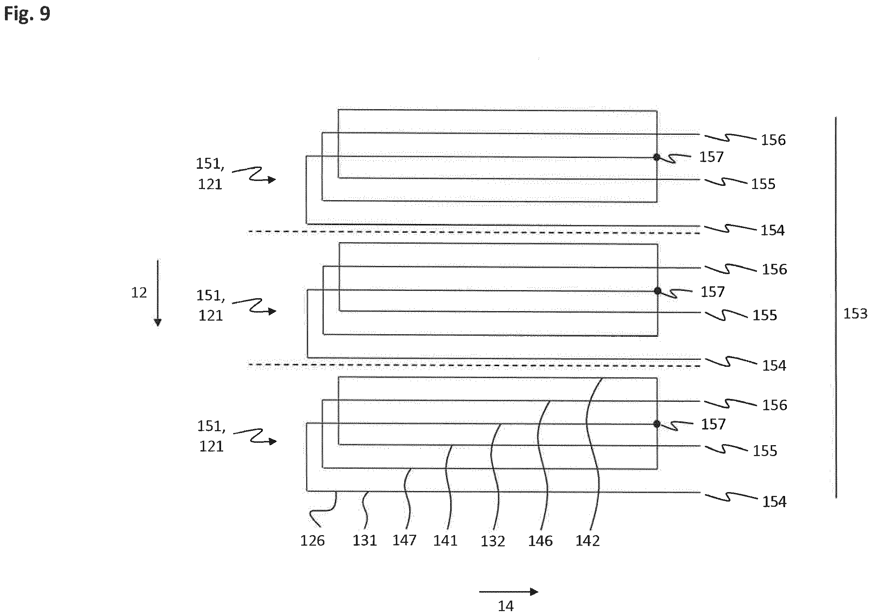

**Fig. 9** zeigt ein Ersatzschaltbild der zweiten Statorsegmente 121 des ersten Statorsektors 110. Bei dem in Fig. 9 dargestellten Ersatzschaltbild sind, wie bei dem in Fig. 8 dargestellten Ersatzschaltbild der ersten Statorsegmente 120, alle übereinanderliegenden und in Serie geschalteten weiteren Spulenleiter 126 der zweiten Statorsegmente 121 als ein einziger Leiter dargestellt.

Die weiteren Spulenleiter 126 der zweiten Statorsegmente 121 sind jeweils auf die gleiche Weise wie die Spulenleiter 125 der ersten Statorsegmente 120 zu zweiten Dreiphasensystemen 151 verschaltet. An einer entlang der ersten Richtung 12 orientierten ersten Seite 153 der zweiten Statorsegmente 121 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 ist mit einem in einer der Statorlagen 105, 107 angeordneten ersten Hinleiter 131 verbunden. Der zweite Anschlusspunkt 155 ist mit einem in einer der Statorlagen 105, 107 angeordneten zweiten Hinleiter 141 verbunden. Der dritte Anschlusspunkt 156 ist mit einem in einer der Statorlagen 105, 107 angeordneten dritten Hinleiter 146 verbunden. Außerdem ist an der ersten Seite 153 der einzelnen zweiten Statorsegmente 121 jeweils ein Sternpunkt 157 angeordnet. In den Sternpunkten 157 sind jeweils ein erster Rückleiter 132 einer der Statorlagen 105, 107, ein zweiter Rückleiter 142 einer der Statorlagen 105, 107 und ein dritter Rückleiter 147 einer der Statorlagen 105, 107 miteinander verbunden.

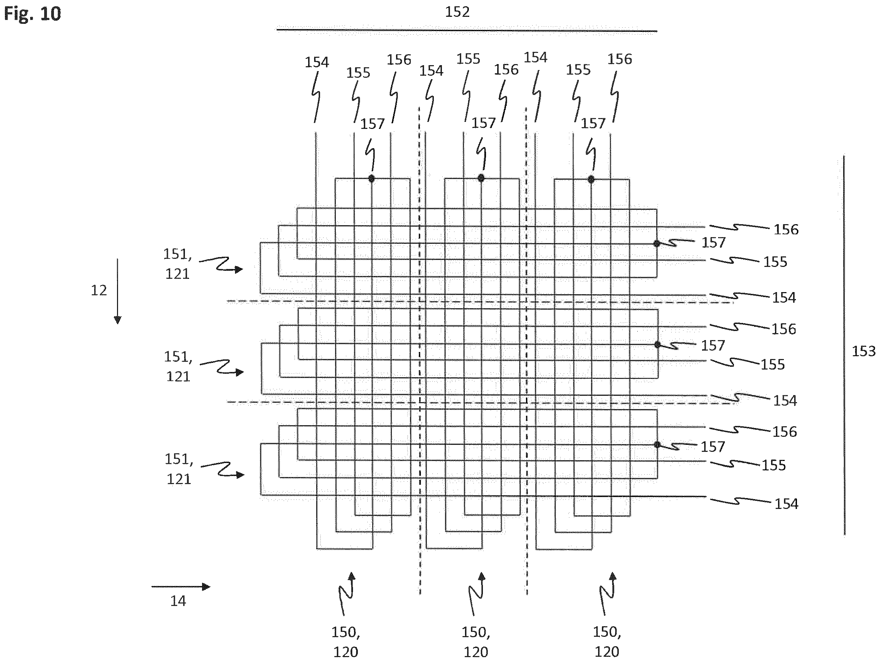

**Fig. 10** zeigt ein Ersatzschaltbild des ersten Statorsektors 110 mit den zu Fig. 8 beschriebenen und die ersten Statorsegmente 120 repräsentierenden ersten Dreiphasensystemen 150 und den zu Fig. 9 beschriebenen und die zweiten Statorsegmente 121 repräsentierenden zweiten Dreiphasensystemen 151. Die ersten Dreiphasensysteme 150 und die zweiten Dreiphasensysteme 151 sind um 90° gegeneinander verdreht angeordnet. Insbesondere sind die erste Seite 152 der ersten Statorsegmente 120 und die erste Seite 153 der zweiten Statorsegmente 121 senkrecht zueinander angeordnet.

Soweit im Folgenden keine Unterschiede beschrieben werden, entsprechen die Ersatzschaltbilder des zweiten Statorsektors 112, des dritten Statorsektors 113 und des vierten Statorsektors 114 jeweils dem in Fig. 10 dargestellten Ersatzschaltbild des ersten Statorsektors 110. Insbesondere entspricht das Ersatzschaltbild des zweiten Statorsektors 112 dem an der ersten Seite 152 der ersten Statorsegmente 120 gespiegelten Ersatzschaltbild des ersten Statorsektors 110, das Ersatzschaltbild des dritten Statorsektors 113 entspricht dem an der ersten Seite 153 der zweiten Statorsegmente 121 gespiegelten Ersatzschaltbild des ersten Statorsektors 110 und das Ersatzschaltbild des vierten Statorsektors 114 entspricht dem um 180° gedrehten Ersatzschaltbild des ersten Statorsektors 110.

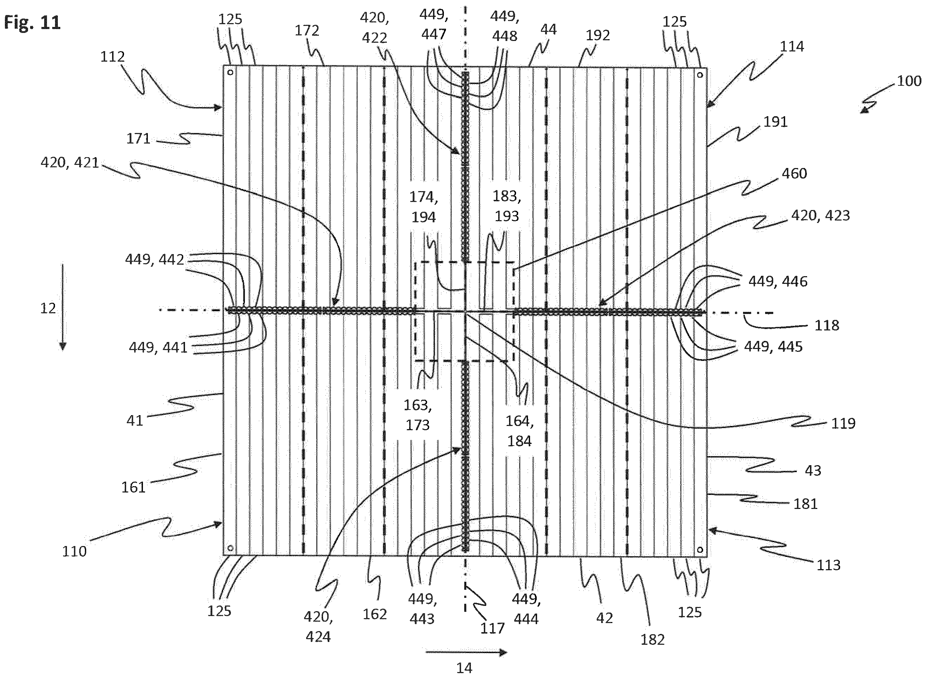

**Fig. 11** zeigt eine Aufsicht auf das Statormodul 10 mit der Statoreinheit 100 und den Statorsektoren 110, 112, 113, 114. Der erste Statorsektor 110 weist eine entlang der ersten Richtung 12 orientierte erste Außenkante 161 und eine entlang der zweiten Richtung 14 orientierte zweite Außenkante 162 auf. Der zweite Statorsektor 112 weist eine entlang der ersten Richtung 12 orientierte erste Außenkante 171 und eine entlang der zweiten Richtung 14 orientierte zweite Außenkante 172 auf. Der dritte Statorsektor 113 weist eine entlang der ersten Richtung 12 orientierte erste Außenkante 181 und eine entlang der zweiten Richtung 14 orientierte zweite Außenkante 182 auf. Der vierte Statorsektor 114 weist eine entlang der ersten Richtung 12 orientierte erste Außenkante 191 und eine entlang der zweiten Richtung 14 orientierte zweite Außenkante 192 auf.

Der erste Statorsektor 110 weist eine entlang der zweiten Richtung 14 orientierte erste Innenkante 163, die der zweiten Außenkante 162 des ersten Statorsektors 110 gegenüberliegend angeordnet ist, und eine entlang der ersten Richtung 12 orientierte zweite Innenkante 164, die der ersten Außenkante 161 des ersten Statorsektors 110 gegenüberliegend angeordnet ist, auf. Der zweite Statorsektor 112 weist eine entlang der zweiten Richtung 14 orientierte erste Innenkante 173, die der zweiten Außenkante 172 des zweiten Statorsektors 112 gegenüberliegend angeordnet ist, und eine entlang der ersten Richtung 12 orientierte zweite Innenkante 174, die der ersten Außenkante 171 des zweiten Statorsektors 112 gegenüberliegend angeordnet ist, auf.

Der dritte Statorsektor 113 weist eine entlang der zweiten Richtung 14 orientierte erste Innenkante 183, die der zweiten Außenkante 182 des dritten Statorsektors 113 gegenüberliegend angeordnet ist, und eine entlang der ersten Richtung 12 orientierte zweite Innenkante 184, die der ersten Außenkante 181 des dritten Statorsektors 113 gegenüberliegend angeordnet ist, auf. Der vierte Statorsektor 114 weist eine entlang der zweiten Richtung 14 orientierte erste Innenkante 193, die der zweiten Außenkante 192 des vierten Statorsektors 114 gegenüberliegend angeordnet ist, und eine entlang der ersten Richtung 12 orientierte zweite Innenkante 194, die der ersten Außenkante 191 des vierten Statorsektors 114 gegenüberliegend angeordnet ist, auf.

Die Statorsektoren 110, 112, 113, 114 schließen an den Außenseiten bündig mit dem Statormodul 10 und der Statorfläche 11 ab. Insbesondere sind die entlang der ersten Richtung 12 orientierte erste Außenkante 161 des ersten Statorsektors 110 und die entlang der ersten Richtung 12 orientierte erste Außenkante 171 des zweiten Statorsektors 112 abschließend mit einer entlang der ersten Richtung 12 orientierten ersten Außenkante 41 der Statorfläche 11 angeordnet. Die entlang der zweiten Richtung 14 orientierte zweite Außenkante 162 des ersten Statorsektors 110 und die entlang der zweiten Richtung 14 orientierte zweite Außenkante 182 des dritten Statorsektors 113 sind abschließend mit einer entlang der zweiten Richtung 14 orientierten zweiten Außenkante 42 der Statorfläche 11 angeordnet. Die entlang der ersten Richtung 12 orientierte erste Außenkante 181 des dritten Statorsektors 113 und die entlang der ersten Richtung 12 orientierte erste Außenkante 191 des vierten Statorsektors 114 sind abschließend mit einer entlang der ersten Richtung 12 orientierten und der ersten Außenkante 41 der Statorfläche 11 gegenüberliegenden dritten Außenkante 43 der Statorfläche 11 angeordnet. Die entlang der zweiten Richtung 14 orientierte zweite Außenkante 172 des zweiten Statorsektors 112 und die entlang der zweiten Richtung 14 orientierte zweite Außenkante 192 des vierten Statorsektors 114 sind abschließend mit einer entlang der zweiten Richtung 14 orientierten und der zweiten Außenkante 42 der Statorfläche 11 gegenüberliegenden vierten Außenkante 44 der Statorfläche 11 angeordnet.

Im Inneren der Statoreinheit 100 sind die Statorsektoren 110, 112, 113, 114 aneinander anschließend angeordnet. Die entlang der zweiten Richtung 14 orientierte erste Innenkante 163 des ersten Statorsektors 110 ist an der entlang der zweiten Richtung 14 orientierten ersten Innenkante 173 des zweiten Statorsektors 112 angeordnet. Die entlang der ersten Richtung 12 orientierte zweite Innenkante 174 des zweiten Statorsektors 112 ist an der entlang der ersten Richtung 12 orientierten zweiten Innenkante 194 des vierten Statorsektors 114 angeordnet. Die entlang der zweiten Richtung 14 orientierte erste Innenkante 183 des dritten Statorsektors 113 ist an der entlang der zweiten Richtung 14 orientierten ersten Innenkante 193 des vierten Statorsektors 114 angeordnet. Die entlang der ersten Richtung 12 orientierte zweite Innenkante 184 des dritten Statorsektors 113 ist an der entlang der ersten Richtung 12 orientierten zweiten Innenkante 164 des ersten Statorsektors 110 angeordnet.

Bei dem Statormodul 10 liegen die zweiten Innenkanten 164, 174, 184, 194 der Statorsektoren 110, 112, 113, 114 jeweils auf einer entlang der ersten Richtung 12 orientierten ersten Linie und die ersten Innenkanten 163, 173, 183, 193 liegen auf einer entlang der zweiten Richtung 14 orientierten zweiten Linie. Die ersten Innenkanten 163, 173 des ersten und zweiten Statorsektors 110, 112 sind fluchtend mit den ersten Innenkanten 183, 193 des dritten und vierten Statorsektors 113, 114 auf der zweiten Linie angeordnet. Die zweiten Innenkanten 164, 184 des ersten und dritten Statorsektors 110, 113 sind fluchtend mit den zweiten Innenkanten 174, 194 des zweiten und vierten Statorsektors 112, 114 auf der ersten Linie angeordnet.

Die erste Linie verläuft senkrecht zu der zweiten Linie. Die erste Linie ist in der zweiten Richtung 14 in der Mitte des Statormoduls 10 und der Statoreinheit 100 zwischen dem ersten Statorsektor 110 und dem dritten Statorsektor 113, sowie zwischen dem zweiten Statorsektor 112 und dem vierten Statorsektor 114 angeordnet. Insbesondere ist die erste Linie mittig zwischen der ersten und der dritten Außenkante 41, 43 der Statorfläche 11, der Statoreinheit 100 und des Statormoduls 10 angeordnet. Die erste Linie bildet eine entlang der ersten Richtung 12 orientierte erste Mittellinie 117 der Statorfläche 11, der Statoreinheit 100 und des Statormoduls 10. Die zweite Linie ist in der ersten Richtung 12 in der Mitte des Statormoduls 10 und der Statoreinheit 100 zwischen dem ersten Statorsektor 110 und dem zweiten Statorsektor 112, sowie zwischen dem dritten Statorsektor 113 und dem vierten Statorsektor 114 angeordnet. Insbesondere ist die zweite Linie mittig zwischen der zweiten und der vierten Außenkante 42, 44 der Statorfläche 11, der Statoreinheit 100 und des Statormoduls 10 angeordnet. Die zweite Linie bildet eine entlang der zweiten Richtung 14 orientierte zweite Mittellinie 118 der Statorfläche 11, der Statoreinheit 100 und des Statormoduls 10.

Die zweite Mittellinie 118 kann allgemein auch als Mittellinie der Statoreinheit 100 und die erste Mittellinie 117 kann allgemein auch als weitere Mittellinie der Statoreinheit 100 bezeichnet werden.

Die Statoreinheit 100 weist eine erste Kontaktstruktur 421, eine zweite Kontaktstruktur 422, eine dritte Kontaktstruktur 423 und eine vierte Kontaktstruktur 424 auf.

Die erste Kontaktstruktur 421 kann allgemein auch als eine Kontaktstruktur der Statoreinheit 100 bezeichnet werden. Die vierte Kontaktstruktur 424 kann allgemein auch als eine weitere Kontaktstruktur der Statoreinheit 100 bezeichnet werden. Die dritte Kontaktstruktur 423 kann allgemein auch als eine zusätzliche Kontaktstruktur der Statoreinheit 100 bezeichnet werden. Die zweite Kontaktstruktur 422 kann allgemein auch als eine weitere zusätzliche Kontaktstruktur der Statoreinheit 100 bezeichnet werden.

Die erste Kontaktstruktur 421 ist an einer durch die erste Innenkante 163 des ersten Statorsektors 110 gebildeten Innenkante des ersten Statorsektors 110 und an einer durch die erste Innenkante 173 des zweiten Statorsektors 112 gebildeten Innenkante des zweiten Statorsektors 112 angeordnet. Die vierte Kontaktstruktur 424 ist an einer durch die zweite Innenkante 164 des ersten Statorsektors 110 gebildeten weiteren Innenkante des ersten Statorsektors 110 und an einer durch die zweite Innenkante 184 des dritten Statorsektors 113 gebildeten Innenkante des dritten Statorsektors 113 angeordnet. Die dritte Kontaktstruktur 423 ist an einer durch die erste Innenkante 183 des dritten Statorsektors 113 gebildeten weiteren Innenkante des dritten Statorsektors 113 und an einer durch die erste Innenkante 193 des vierten Statorsektors 114 gebildeten Innenkante des vierten Statorsektors 114 angeordnet. Die zweite Kontaktstruktur 422 ist an einer durch die zweite Innenkante 174 des zweiten Statorsektors 112 gebildeten weiteren Innenkante des zweiten Statorsektors 112 und an einer durch die zweite Innenkante 194 des vierten Statorsektors 114 gebildeten weiteren Innenkante des vierten Statorsektors 114 angeordnet.

Die erste Kontaktstruktur 421, die zweite Kontaktstruktur 422, die dritte Kontaktstruktur 423 und die vierte Kontaktstruktur 424 umfassen jeweils mehrere Kontakteinheiten 449. Die Kontakteinheiten 449 sind mit den Spulenleitern 125, 126 der Statoreinheit 100 elektrisch leitend verbunden und dazu ausgebildet, die Antriebsströme in die Spulenleiter 125, 126 einzuspeisen. Sind die Spulenleiter 125, 126 der Statorsektoren 110, 112, 113, 114 jeweils zu Dreiphasensystemen verschaltet, so sind die Kontakteinheiten 449 insbesondere dazu ausgebildet, die Antriebsströme in die Mehrphasensysteme der Statorsegmente 120, 121 einzuspeisen. Die Statoreinheit 100 weist dann für jeden Anschlusspunkt 154, 155, 156 der Dreiphasensysteme jeweils mindestens eine, insbesondere zwei, Kontakteinheiten 449 auf.

Die erste Kontaktstruktur 421 umfasst eine erste Kontakteinheitengruppe 441 und eine zweite Kontakteinheitengruppe 442. Die erste Kontakteinheitengruppe 441 ist mit den entlang der ersten Richtung 12 länglich ausgedehnten Spulenleitern 125 des ersten Statorsektors 110 elektrisch leitend verbunden und umfasst alle Kontakteinheiten 449, die mit den entlang der ersten Richtung 12 länglich ausgedehnten Spulenleitern 125 des ersten Statorsektors 110 elektrisch leitend verbunden sind. Die zweite Kontakteinheitengruppe 442 ist mit den entlang der ersten Richtung 12 länglich ausgedehnten Spulenleitern 125 des zweiten Statorsektors 112 elektrisch leitend verbunden und umfasst alle Kontakteinheiten 449, die mit den entlang der ersten Richtung 12 länglich ausgedehnten Spulenleitern 125 des zweiten Statorsektors 112 elektrisch leitend verbunden sind. Insbesondere umfasst die erste Kontaktstruktur 421 alle Kontakteinheiten 449, die mit den Spulenleitern 125 elektrisch leitend verbunden sind, die in dem ersten und zweiten Statorsektor 110, 112 in der ersten und dritten Statorlage 104, 106 angeordnet sind.

Die vierte Kontaktstruktur 424 umfasst eine dritte Kontakteinheitengruppe 443 und eine vierte Kontakteinheitengruppe 444. Die dritte Kontakteinheitengruppe 443 ist mit den entlang der zweiten Richtung 14 länglich ausgedehnten weiteren Spulenleiter 126 des ersten Statorsektors 110 elektrisch leitend verbunden und umfasst alle Kontakteinheiten 449, die mit den entlang der zweiten Richtung 14 länglich ausgedehnten weiteren Spulenleiter 126 des ersten Statorsektors 110 elektrisch leitend verbunden sind. Die vierte Kontakteinheitengruppe 444 ist mit den entlang der zweiten Richtung 14 länglich ausgedehnten weiteren Spulenleiter 126 des dritten Statorsektors 113 elektrisch leitend verbunden und umfasst alle Kontakteinheiten 449, die mit den entlang der zweiten Richtung 14 länglich ausgedehnten weiteren Spulenleiter 126 des dritten Statorsektors 113 elektrisch leitend verbunden sind. Insbesondere umfasst die vierte Kontaktstruktur 424 alle Kontakteinheiten 449, die mit den weiteren Spulenleiter 126 elektrisch leitend verbunden sind, die in dem ersten und dritten Statorsektor 110, 113 in der zweiten und vierten Statorlage 105, 107 angeordnet sind.

Die dritte Kontaktstruktur 423 umfasst eine fünfte Kontakteinheitengruppe 445 und eine sechste Kontakteinheitengruppe 446. Die fünfte Kontakteinheitengruppe 445 ist mit den entlang der ersten Richtung 12 länglich ausgedehnten Spulenleitern 125 des dritten Statorsektors 113 elektrisch leitend verbunden und umfasst alle Kontakteinheiten 449, die mit den entlang der ersten Richtung 12 länglich ausgedehnten Spulenleitern 125 des dritten Statorsektors 113 elektrisch leitend verbunden sind. Die sechste Kontakteinheitengruppe 446 ist mit den entlang der ersten Richtung 12 länglich ausgedehnten Spulenleitern 125 des vierten Statorsektors 114 elektrisch leitend verbunden und umfasst alle Kontakteinheiten 449, die mit den entlang der ersten Richtung 12 länglich ausgedehnten Spulenleitern 125 des vierten Statorsektors 114 elektrisch leitend verbunden sind. Insbesondere umfasst die dritte Kontaktstruktur 423 alle Kontakteinheiten 449, die mit Spulenleitern 125 elektrisch leitend verbunden sind, die in dem dritten und vierten Statorsektor 113, 114 in der ersten und dritten Statorlage 104, 106 angeordnet sind.

Die zweite Kontaktstruktur 422 umfasst eine siebte Kontakteinheitengruppe 447 und eine achte Kontakteinheitengruppe 448. Die siebte Kontakteinheitengruppe 447 ist mit den entlang der zweiten Richtung 14 länglich ausgedehnten weiteren Spulenleiter 126 des zweiten Statorsektors 112 elektrisch leitend verbunden und umfasst alle Kontakteinheiten 449, die mit den entlang der zweiten Richtung 14 länglich ausgedehnten weiteren Spulenleiter 126 des zweiten Statorsektors 112 elektrisch leitend verbunden sind. Die achte Kontakteinheitengruppe 448 ist mit den entlang der zweiten Richtung 14 länglich ausgedehnten weiteren Spulenleiter 126 des vierten Statorsektors 114 elektrisch leitend verbunden und umfasst alle Kontakteinheiten 449, die mit den entlang der zweiten Richtung 14 länglich ausgedehnten weiteren Spulenleiter 126 des vierten Statorsektors 114 elektrisch leitend verbunden sind. Insbesondere umfasst die zweite Kontaktstruktur 422 alle Kontakteinheiten 449, die mit den weiteren Spulenleiter 126 elektrisch leitend verbunden sind, die in dem zweiten und vierten Statorsektor 112, 114 in der zweiten und vierten Statorlage 105, 107 angeordnet sind.

Damit sind die Kontakteinheiten 449 aller weiterer Spulenleiter 126, die entlang der zweiten Richtung 14 länglich ausgedehnt sind, an der entlang der ersten Richtung 12 orientierten ersten Linie, insbesondere an der ersten Mittellinie 117, angeordnet. Die Kontakteinheiten 449 aller Spulenleiter 125, die entlang der ersten Richtung 12 länglich ausgedehnt sind, sind an der entlang der zweiten Richtung 14 orientierten zweiten Linie, insbesondere an der zweiten Mittellinie 118, angeordnet.

Sind die Spulenleiter 125, 126 des ersten Statorsektors 110 gemäß Fig. 10 zu Dreiphasensystemen zusammengeschaltet, so zeigt ein Vergleich der Darstellungen des ersten Statorsektors 110 in Fig. 11 und Fig. 10, dass die entlang der ersten Seite 152 der ersten Statorsegmente 120 angeordneten Anschlusspunkte 154, 155, 156 der ersten Statorsegmente 120 des ersten Statorsektors 110 an der ersten Innenkante 163 des ersten Statorsektors 110 angeordnet sind. Außerdem sind die entlang der ersten Seite 153 der zweiten Statorsegmente 121 angeordneten Anschlusspunkte 154, 155, 156 der zweiten Statorsegmente 121 des ersten Statorsektors 110 an der zweiten Innenkante 164 des ersten Statorsektors 110 angeordnet. Die Sternpunkte 157 der ersten Statorsegmente 120 des ersten Statorsektors 110 sind an der ersten Innenkante 163 des ersten Statorsektors 110 und die Sternpunkte 157 der zweiten Statorsegmente 121 des ersten Statorsektors 110 sind an der zweiten Innenkante 164 des ersten Statorsektors 110 angeordnet.

Sind die Spulenleiter 125, 126 des zweiten Statorsektors 112 analog zu dem ersten Statorsektor 110 zu Dreiphasensystemen zusammengeschaltet, so ist das Ersatzschaltbild des zweiten Statorsektors 112 gegenüber dem in Fig. 10 dargestellten Ersatzschaltbild des ersten Statorsektors 110 an der ersten Seite 152 der ersten Statorsegmente 120 gespiegelt. Die erste Seite 152 der ersten Statorsegmente 120 des zweiten Statorsektors 112 ist dann entlang der ersten Innenkante 173 des zweiten Statorsektors 112 angeordnet. Außerdem ist die erste Seite 153 der zweiten Statorsegmente 121 des zweiten Statorsektors 112 entlang der zweiten Innenkante 174 des zweiten Statorsektors 112 angeordnet. Die Sternpunkte 157 der ersten Statorsegmente 120 des zweiten Statorsektors 112 sind an der ersten Innenkante 173 des zweiten Statorsektors 112 und die Sternpunkte 157 der zweiten Statorsegmente 121 des zweiten Statorsektors 112 sind an der zweiten Innenkante 174 des zweiten Statorsektors 112 angeordnet.

Sind die Spulenleiter 125, 126 des dritten Statorsektors 113 analog zu dem ersten Statorsektor 110 zu Dreiphasensystemen zusammengeschaltet, so ist das Ersatzschaltbild des dritten Statorsektors 113 gegenüber dem in Fig. 10 dargestellten Ersatzschaltbild des ersten Statorsektors 110 an der ersten Seite 153 der zweiten Statorsegmente 121 gespiegelt. Die erste Seite 152 der ersten Statorsegmente 120 des dritten Statorsektors 213 ist entlang der ersten Innenkante 183 des dritten Statorsektors 113 angeordnet. Außerdem ist die erste Seite 153 der zweiten Statorsegmente 121 des dritten Statorsektors 113 entlang der zweiten Innenkante 184 des dritten Statorsektors 113 angeordnet. Die Sternpunkte 157 der ersten Statorsegmente 120 des dritten Statorsektors 113 sind an der ersten Innenkante 183 des dritten Statorsektors 113 und die Sternpunkte 157 der zweiten Statorsegmente 121 des dritten Statorsektors 113 sind an der zweiten Innenkante 184 des dritten Statorsektors 113 angeordnet.

Sind die Spulenleiter 125, 126 des vierten Statorsektors 114 analog zu dem ersten Statorsektor 110 zu Dreiphasensystemen zusammengeschaltet, so ist das Ersatzschaltbild des vierten Statorsektors 114 gegenüber dem in Fig. 10 dargestellten Ersatzschaltbild des ersten Statorsektors 110 um 180° gedreht. Die erste Seite 152 der ersten Statorsegmente 120 des vierten Statorsektors 114 ist entlang der ersten Innenkante 193 des vierten Statorsektors 114 angeordnet. Außerdem ist die erste Seite 153 der zweiten Statorsegmente 121 des vierten Statorsektors 114 entlang der zweiten Innenkante 194 des vierten Statorsektors 114 angeordnet. Die Sternpunkte 157 der ersten Statorsegmente 120 des vierten Statorsektors 114 sind an der ersten Innenkante 193 des vierten Statorsektors 114 und die Sternpunkte 157 der zweiten Statorsegmente 121 des vierten Statorsektors 114 sind an der zweiten Innenkante 194 des vierten Statorsektors 114 angeordnet.

Insgesamt liegen damit die Anschlusspunkte 154, 155, 156 der ersten Statorsegmente 120 des ersten, zweiten, dritten und vierten Statorsektors 110, 112, 113, 114 auf der zweiten Mittellinie 118. Die Anschlusspunkte 154, 155, 156 der zweiten Statorsegmente 121 des ersten, zweiten, dritten und vierten Statorsektors 110, 112, 113, 114 liegen allesamt auf der ersten Mittellinie 117. Bei einer Verschaltung der Spulenleiter 125, 126 zu Dreiphasensystemen mit gemeinsamen Sternpunkt können die drei freien Anschlüsse der einzelnen Phasen jeweils mit mindestens einer der, insbesondere mit zweien, der Kontakteinheiten 449 der Kontakteinheitengruppen 441, 442, 443, 444, 445, 446, 447, 448 elektrisch leitend verbunden sein. Umfassen die Statorsektoren 110, 112, 113, 114 jeweils drei in der zweiten Richtung 14 nebeneinander angeordnete Dreiphasensysteme mit jeweils sechs Spulenleitern 125 und drei in der ersten Richtung 12 nebeneinander angeordnete Dreiphasensysteme mit jeweils sechs weiteren Spulenleiter 126, so weisen die Statorsektoren 110, 112, 113, 114 jeweils achtzehn Anschlüsse auf, die mit jeweils mindestens achtzehn, insbesondere mit sechsunddreißig, Kontakteinheiten 449 der Kontaktstrukturen 421, 422, 423, 444 verbunden sein können. Die erste, zweite, dritte und vierte Kontaktstruktur 421, 422, 423, 424 umfassen dann jeweils mindestens achtzehn, insbesondere sechsunddreißig, Kontakteinheiten 449.

Anstatt die Spulenleiter 125, 126 der einzelnen Statorsektoren 110, 112, 113, 114 jeweils zu Mehrphasensystemen zu verschalten, können bei nicht dargestellten, alternativen Ausführungsformen der Statoreinheit 100 die Spulenleiter 125, 126 oder übereinanderliegende und jeweils seriell geschaltete Spulenleiter 125, 126 mehrerer Statorebenen 104, 105, 106, 107 auch separat an jeweils eigene Anschlusspunkte oder Kontakteinheiten 449 angeschlossen sein. Insbesondere kann jeder der Spulenleiter 125, 126 einzeln und unabhängig von allen anderen Spulenleitern 125, 126 mit einer oder zweien der Kontakteinheiten 449 verbunden und über die jeweilige Kontakteinheit 449 oder die jeweiligen Kontakteinheiten 449 mit einem elektrischen Antriebsstrom beaufschlagbar sein.

Bei der Statoreinheit 100 sind an den Außenkanten 41, 42, 43, 44 der Statoreinheit 100, an den Außenkanten 161, 162 des ersten Statorsektors 110, an den Außenkanten 171, 172 des zweiten Statorsektors 112, an den Außenkanten 181, 182 des dritten Statorsektors 113 und an den Außenkanten 191, 192 des vierten Statorsektors 114 jeweils keine Kontakteinheiten 449 angeordnet. Die Außenkanten 41, 42, 43, 44 der Statoreinheit 100, die Außenkanten 161, 162 des ersten Statorsektors 110, die Außenkanten 171, 172 des zweiten Statorsektors 112, die Außenkanten 181, 182 des dritten Statorsektors 113 und die Außenkanten 191, 192 des vierten Statorsektors 114 sind also allesamt frei von Kontakteinheiten 449 ausgebildet. Entlang der Außenkanten 161, 162, 171, 172, 181, 182, 191, 192 der Statorsektoren 110, 112, 113, 114 sind daher Außenbereiche der Statoreinheit 100 angeordnet, die frei von Kontakteinheiten 449 ausgebildet sind.

Die Kontakteinheiten 449 sind ausschließlich an den Innenkanten 163, 164, 173, 174, 183, 184, 193, 194 der Statorsektoren 110, 112, 113, 114 angeordnet. Insbesondere sind die Außenkanten 41, 42, 43, 44 der Statoreinheit 100, die Außenkanten 161, 162 des ersten Statorsektors 110, die Außenkanten 171, 172 des zweiten Statorsektors 112, die Außenkanten 181, 182 des dritten Statorsektors 113 und die Außenkanten 191, 192 des vierten Statorsektors 114 allesamt frei von Anschlusspunkten 154, 155, 156 der Statorsegmente 120, 121.

Die erste Kontakteinheitengruppe 441 und die zweite Kontakteinheitengruppe 442 der ersten Kontaktstruktur 421 können, wie in Fig. 11 dargestellt, entlang der zweiten Richtung 14 in einer Reihe nebeneinander angeordnet sein. Insbesondere können die Kontakteinheiten 449 der ersten Kontakteinheitengruppe 441 und die Kontakteinheiten 449 der zweiten Kontakteinheitengruppe 442 entlang der zweiten Richtung 14 in einer Reihe nebeneinander angeordnet sein. Dabei kann jeweils abwechselnd eine Kontakteinheit 449 der ersten Kontakteinheitengruppe 441 neben einer Kontakteinheit 449 der zweiten Kontakteinheitengruppe 442 oder jeweils abwechselnd zwei Kontakteinheiten 449 der ersten Kontakteinheitengruppe 441 neben zwei Kontakteinheiten 449 der zweiten Kontakteinheitengruppe 442 angeordnet sein.

Außerdem können, wie in Fig. 11 dargestellt ist, die fünfte Kontakteinheitengruppe 445 und die sechste Kontakteinheitengruppe 446, insbesondere die Kontakteinheiten 449 der fünften Kontakteinheitengruppe 445 und die Kontakteinheiten 449 der sechsten Kontakteinheitengruppe 446, entlang der zweiten Richtung 14 in einer Reihe nebeneinander angeordnet sein. Dabei kann jeweils abwechselnd eine Kontakteinheit 449 der fünften Kontakteinheitengruppe 445 neben einer Kontakteinheit 449 der sechsten Kontakteinheitengruppe 446 oder jeweils abwechselnd zwei Kontakteinheiten 449 der fünften Kontakteinheitengruppe 445 neben zwei Kontakteinheiten 449 der sechsten Kontakteinheitengruppe 446 angeordnet sein.

Analog können, wie in Fig. 11 dargestellt ist, die dritte Kontakteinheitengruppe 443 und die vierte Kontakteinheitengruppe 446, insbesondere die Kontakteinheiten 449 der dritten Kontakteinheitengruppe 443 und die Kontakteinheiten 449 der vierten Kontakteinheitengruppe 444, entlang der ersten Richtung 12 in einer Reihe nebeneinander angeordnet sein. Dabei kann jeweils abwechselnd eine Kontakteinheit 449 der dritten Kontakteinheitengruppe 443 neben einer Kontakteinheit 449 der vierten Kontakteinheitengruppe 444 oder jeweils abwechselnd zwei Kontakteinheiten 449 der dritten Kontakteinheitengruppe 443 neben zwei Kontakteinheiten 449 der vierten Kontakteinheitengruppe 444 angeordnet sein.

Außerdem können, wie es in Fig. 11 dargestellt ist, die siebte Kontakteinheitengruppe 447 und die achte Kontakteinheitengruppe 448, insbesondere die Kontakteinheiten 449 der siebten Kontakteinheitengruppe 447 und die Kontakteinheiten 449 der achten Kontakteinheitengruppe 448, entlang der ersten Richtung 12 in einer Reihe nebeneinander angeordnet sein. Dabei kann jeweils abwechselnd eine Kontakteinheit 449 der siebten Kontakteinheitengruppe 447 neben einer Kontakteinheit 449 der achten Kontakteinheitengruppe 448 oder jeweils abwechselnd zwei Kontakteinheiten 449 der siebten Kontakteinheitengruppe 447 neben zwei Kontakteinheiten 449 der achten Kontakteinheitengruppe 448 angeordnet sein.

Die Statoreinheit 100 weist im Zentrum der Statoreinheit 100 an einem Kreuzungspunkt 119 der ersten und der zweiten Mittellinie 117, 118 einen Zentrumsbereich 460 auf. Die erste Kontakteinheitengruppe 441, die zweite Kontakteinheitengruppe 442, die dritte Kontakteinheitengruppe 443, die vierte Kontakteinheitengruppe 444, die fünfte Kontakteinheitengruppe 445, die sechste Kontakteinheitengruppe 446, die siebte Kontakteinheitengruppe 447 und die achte Kontakteinheitengruppe 448 sind außerhalb des Zentrumsbereichs 460 angeordnet. Insbesondere sind die Kontakteinheiten 449 der Kontakteinheitengruppen 441, 442, 443, 444, 445, 446, 447, 448 außerhalb des Zentrumsbereichs 460 angeordnet.

Die erste Kontaktstruktur 421, die zweite Kontaktstruktur 422, die dritte Kontaktstruktur 423 und die vierte Kontaktstruktur 424 bilden eine kreuzförmige Kontaktanordnung 420 der Statoreinheit 100 zur Kontaktierung der Spulenleiter 125, 126 der Statoreinheit 100. Die Kontaktanordnung 420 ist kreuzförmig ausgebildet und jeweils entlang der ersten Mittellinie 117 und der zweiten Mittellinie 118 des Statormoduls 10 und der Statoreinheit 100 ausgerichtet. Damit liegt die Kontaktstruktur 420 auf in der ersten und zweiten Richtung 12, 14 im Inneren der Statoreinheit 100 und des Statormoduls 10 liegenden Grenzen der Statorsektoren 110, 112, 113, 114. Insbesondere bilden die auf der ersten Mittellinie 117 und auf der zweiten Mittellinie 118 angeordneten Anschlusspunkte 154, 155, 156 der ersten und zweiten Statorsegmente 120, 121 die Kontaktstruktur 420 zur Kontaktierung der Statorsegmente 120, 121.

Die Statoreinheit 100 kann als eine mehrlagige Einheit ausgebildet sein, wobei die Statorlagen 104, 105, 106, 107 mit den Spulenleitern 125, 126 jeweils über isolierende Zwischenschichten miteinander verbunden sind. Beispielsweise kann die Statoreinheit 100 als eine gedruckte Schaltung bzw. Leiterplatte, auch *printed circuit board* (PCB) genannt, ausgeführt sein. Insbesondere kann die Statoreinheit 100 als eine mehrlagige Leiterplatte ausgebildet sein, wobei die Statorlagen 104, 105, 106, 107 jeweils in unterschiedlichen Lagen der Leiterplatte angeordnet sind. Die Spulenleiter 125, 126 können auf den Lagen der Leiterplatte eine Dicke zwischen 10pm und 500µm aufweisen, insbesondere können die Spulenleiter 125, 126 eine Dicke zwischen 50pm und 250pm aufweisen. Die Kontakteinheiten 449 können jeweils als Kontaktlöcher bzw. Vias (vertical interconnect access) in der Statoreinheit 100 ausgebildet sein und leitfähig beschichtete Durchgangsöffnungen durch die Statoreinheit 100 umfassen.

Um eine Verschaltung der Hin- und Rückleiter 131, 141, 146, 132, 142, 147 der Dreiphasensysteme 150, 151 der Statorsegmente 120, 121 gemäß der in den Figuren 8, 9 und 10 dargestellten Ersatzschaltpläne zu erreichen, kann die Statoreinheit 100 jeweils Verbindungsstrukturen aufweisen. Die Verbindungsstrukturen können auf den Spulenleitern 125, 126 oder zwischen den Spulenleitern 125, 126 der Statoreinheit 100 angeordnet sein.

Ein Teil der Verbindungstrukturen kann als Horizontalverbindungsstrukturen ausgebildet sein, welche Spulenleiter 125, 126, die in den einzelnen Statorsegmenten 120, 121 innerhalb derselben Statorlage 104, 105, 106, 107 angeordnet sind, miteinander verbinden. Die Horizontalverbindungsstrukturen sind auf derselben Statorlage 104, 105, 106, 107 angeordnet, wie die zu verbindenden Spulenleiter 125, 126. Die Horizontalverbindungsstrukturen können in den Statorlagen 104, 105, 106, 107 jeweils in derjenigen Richtung 12, 14 verlaufen, in der die Spulenleiter 125, 126 nebeneinander angeordnet sind. In den Statorlagen 104, 106, bei denen die Spulenleiter 125 entlang der ersten Richtung 12 ausgedehnt und entlang der zweiten Richtung 14 nebeneinander angeordnet sind, können die Horizontalverbindungsstrukturen entlang der zweiten Richtung 14 verlaufen. In den Statorlagen 105, 107, in denen die entlang der zweiten Richtung 14 länglich ausgedehnten weiteren Spulenleiter 126 angeordnet sind, können die Horizontalverbindungsstrukturen entlang der ersten Richtung 12 verlaufen. Die Horizontalverbindungsstrukturen können, wie die Spulenleiter 125, 126, als Leiterbahnen oder Leiterbahnabschnitte einer Lage einer Leiterplatte der Statoreinheit 100 ausgebildet sein.

Ein Teil der Verbindungstrukturen kann als Vertikalverbindungsstrukturen ausgebildet sein, welche Spulenleiter 125, 126 die in den einzelnen Statorsegmenten 120, 121 in verschiedenen Statorlagen 104, 105, 106, 107 angeordnet sind, miteinander verbinden. Über die Vertikalverbindungsstrukturen können beispielsweise die ersten Hin- und Rückleiter 131, 132 für die ersten Phasen U der Antriebsströme in Reihe geschaltet sein. Ebenso können die zweiten Hin- und Rückleiter 141, 142 für die zweiten Phasen V der Antriebsströme und die dritten Hin- und Rückleiter 146, 147 für die dritten Phasen W der Antriebsströme über die Vertikalverbindungsstrukturen in Reihe geschaltet sein. Die Vertikalverbindungsstrukturen können als Durchkontaktierungen oder als Vias (Vertical interconnect access), d. h. als Kontaktlöcher, zwischen den einzelnen Statorlagen 104, 105, 106, 107 der Leiterplatte der Statoreinheit 100 ausgebildet sein.

Die schematischen Darstellungen der vorangegangenen Figuren zeigen die Spulenleiter 125, 126 jeweils als rechteckig ausgebildete und sich über die gesamten Statorsektoren 110, 112, 113, 114 erstreckende Leiterstrukturen. Die Spulenleiter 125, 126 können in von den Verbindungsstrukturen entfernten Bereichen der Statoreinheit 100 ausgebildet sein, wie es in den vorangegangenen Figuren schematisch dargestellt ist. Insbesondere im Bereich der Verbindungsstrukturen kann die Form der Spulenleiter 125, 126 jedoch auch von den schematischen Darstellungen der vorangegangenen Figuren abweichen. Insbesondere können die Spulenleiter 125 der ersten Statorsegmente 120 im Bereich der Verbindungsstrukturen in der zweiten Richtung 14 schmaler ausgebildet sein als in den von den Verbindungsstrukturen entfernten Bereichen. Ebenso können die weiteren Spulenleiter 126 der zweiten Statorsegmente 121 im Bereich der Verbindungsstrukturen in der ersten Richtung 12 schmaler ausgebildet sein als in den von den Verbindungsstrukturen entfernten Bereichen.

Die Spulenleiter 125 der ersten Statorsegmente 120 können in der ersten Richtung 12 auch kürzer ausgebildet sein, als es in den vorangegangenen Figuren schematisch dargestellt ist. Die weiteren Spulenleiter 126 der zweiten Statorsegmente 121 können in der zweiten Richtung 14 auch kürzer ausgebildet sein, als es in den vorangegangenen Figuren schematisch dargestellt ist. Insbesondere müssen sich die Spulenleiter 125 der einzelnen ersten Statorsegmente 120 in der ersten Richtung 12 nicht jeweils vollständig über die ersten Statorsegmente 120 erstrecken und die weiteren Spulenleiter 126 der einzelnen zweiten Statorsegmente 121 müssen sich in der zweiten Richtung 14 nicht jeweils vollständig über die zweiten Statorsegmente 121 erstrecken. Stattdessen können im Bereich der Außenkanten 161, 162, 171, 172, 181, 182, 191, 192 und der Innenkanten 163, 164, 173, 174, 183, 184, 193, 194 der Statorsektoren 110, 112, 113, 114 Horizontalverbindungsstrukturen und/oder Vertikalverbindungsstrukturen angeordnet sein.

Eine elektrisch leitende Verbindung zwischen den Kontakteinheiten 449 der Kontaktanordnung 420 und den Spulenleitern 125, 126 kann in einer beliebigen Statorlage 104, 105, 106, 107 der Statoreinheit 100 erfolgen. Insbesondere kann eine elektrisch leitende Verbindung zwischen einer der Kontakteinheiten 449 und einem der Spulenleiter 125, 126 in Statorlagen 105, 106 bestehen, die in der vertikalen Richtung 15 im Inneren der Statoreinheit 100 angeordnet sind. Die im Inneren der Statoreinheit 100 angeordneten Statorlagen 105, 106 bilden Innenlagen der Statoreinheit 100, während die an der Statorfläche 11 und an einer der Statorfläche 11 gegenüberliegenden Bodenfläche der Statoreinheit 100 angeordneten Statorlagen 104, 107 Außenlagen der Statoreinheit 100 bilden. Die Innenlagen sind damit zwischen den Außenlagen angeordnet. Bei der in Fig. 4 dargestellten Statoreinheit 100 bilden die erste Statorlage 104 und die vierte Statorlage 107 jeweils Außenlagen und die zweite Statorlage 105 und die dritte Statorlage 106 jeweils Innenlagen der Statoreinheit 100. Statorlagen 104, 105, 106, 107 mit einem Spulenleiter 125, 126 oder mit mehreren Spulenleitern 125, 126, die mit Kontakteinheiten 449 der Kontaktanordnung 420 elektrisch leitend verbunden sind, können auch als Anschlussstatorlagen bezeichnet werden.

Die Statoreinheit 100 ist über die Kontaktanordnung 420 mit einem Leistungsmodul elektrisch leitend verbunden. Das Leistungsmodul ist dazu ausgebildet, die für das Antreiben des Läufers 1200 benötigten Antriebsströme bereitzustellen. Das Leistungsmodul kann beispielsweise eine oder mehrere Stromerzeugungseinheiten umfassen, um die Antriebsströme zu erzeugen. Die Stromerzeugungseinheiten können beispielsweise als Verstärker oder Endstufen, insbesondere als H-Brücken-Schaltungen, ausgebildet sein. Alternativ können die Antriebsströme auch durch weitere Module des Statormoduls 10 erzeugt werden und in das Leistungsmodul eingespeist werden. Das Leistungsmodul kann auch als Einspeisemodul bezeichnet werden.

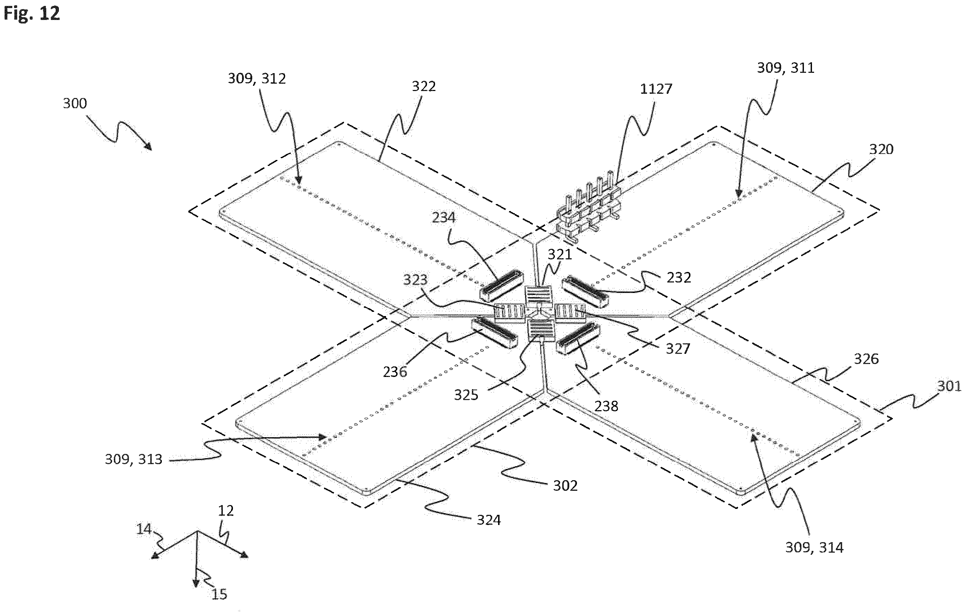

**Fig. 12** zeigt eine schematische perspektivische Darstellung einer Unterseite des Leistungsmoduls 300. Das Leistungsmodul 300 ist an seiner Unterseite im Wesentlichen eben ausgebildet. Auf der Unterseite können in Fig. 12 nicht dargestellte elektronische Bauteile oder Komponenten, insbesondere die Stromerzeugungseinheiten, an dem Leistungsmodul 300 angeordnet sein. Das Leistungsmodul 300 ist plattenförmig und als eine in der ersten und in der zweiten Richtung 12, 14 ausgedehnte Platte ausgebildet. Eine Ausdehnung des Leistungsmoduls 300 in der ersten und zweiten Richtung 12, 14 ist jeweils größer als eine Ausdehnung des Leistungsmoduls 300 in der vertikalen Richtung 15. Das Leistungsmodul 300 kann eine Leiterplatte mit auf der Leiterplatte angeordneten elektronischen Bauteilen oder Komponenten umfassen.

Die Leiterplatte des Leistungsmoduls 300 kann eine oder mehrere Kupferlagen aufweisen, in denen Leiterbahnen zur Kontaktierung der auf der Leiterplatte angeordneten elektronischen Bauteile ausgebildet sind. Die Kupferlagen können eine Dicke von 10pm bis 500µm, insbesondere von 50pm bis 100pm, insbesondere von 70pm aufweisen. Die Leiterbahnen können eine Mindestbreite von 50pm oder 100pm, insbesondere von 200µm oder von 300µm aufweisen.

Das Leistungsmodul 300 ist in der durch die erste und zweite Richtung 12, 14 aufgespannten Ebene kreuzförmig mit zwei senkrecht zueinander orientierten und entlang der ersten und zweiten Richtung 12, 14 ausgerichteten Balken 301, 302 ausgebildet. Die Balken 301, 302 des Leistungsmoduls 300 weisen in der ersten Richtung 12 und in der zweiten Richtung 14 jeweils gleiche Ausdehnungen auf. Insbesondere umfasst das Leistungsmodul 300 einen entlang der ersten Richtung 12 verlaufenden ersten Balken 301 und einen entlang der zweiten Richtung 14 verlaufenden zweiten Balken 302.

Der erste Balken 301 kann in der zweiten Richtung 14 eine Breite aufweisen, die kleiner ist als eine Breite der zuvor beschriebenen Statoreinheit 100 in der zweiten Richtung 14. Insbesondere kann der erste Balken 301 in der zweiten Richtung 14 eine Breite aufweisen, die kleiner ist als die Hälfte der Breite der Statoreinheit 100 in der zweiten Richtung 14. Der zweite Balken 302 kann in der ersten Richtung 12 eine Breite aufweisen, die kleiner ist als eine Breite der Statoreinheit 100 in der ersten Richtung 12. Insbesondere kann der zweite Balken 302 in der ersten Richtung 12 eine Breite aufweisen, die kleiner ist als die Hälfte der Breite der Statoreinheit 100 in der ersten Richtung 12.

Das Leistungsmodul 300 umfasst eine erste Moduleinheit 320, eine zweite Moduleinheit 322, eine dritte Moduleinheit 324 und eine vierte Moduleinheit 326, die jeweils mechanisch getrennt voneinander ausgebildet sind. Soweit im Folgenden keine Unterschiede beschrieben werden, sind die Moduleinheiten 320, 322, 324, 326 identisch ausgebildet. Die erste und dritte Moduleinheit 320, 324 bilden den entlang der zweiten Richtung 14 ausgerichteten zweiten Balken 302 des kreuzförmigen Leistungsmoduls 300, die zweite und vierte Moduleinheit 322, 326 bilden den entlang der ersten Richtung 12 ausgerichteten ersten Balken 301 des kreuzförmigen Leistungsmoduls 300.

Die Moduleinheiten 320, 322, 324, 326 weisen in der durch die erste und zweite Richtung 12, 14 aufgespannten Ebene jeweils einen in der Aufsicht auf die Unterseite der Moduleinheiten 320, 322, 324, 326 rechteckig ausgebildeten Teil auf. An einer Seite des rechteckigen Teils schließt sich die Basis eines dreieckigen Teils an, welcher in der Aufsicht auf die Unterseite der Moduleinheiten 320, 322, 324, 326 im Wesentlichen die Form eines gleichschenkligen Dreiecks aufweist. Die Moduleinheiten 320, 322, 324, 326 sind kreuzförmig um einen gemeinsamen Mittelpunkt angeordnet, wobei die Spitzen der dreieckigen Teile der Moduleinheiten 320, 322, 324, 326 jeweils einander zugewandt an dem Mittelpunkt angeordnet sind. Die erste Moduleinheit 320 und die dritte Moduleinheit 324 sind in der zweiten Richtung 14 einander gegenüberliegend angeordnet, wobei die Spitzen der dreieckigen Teile der ersten und dritten Moduleinheit 320, 324 jeweils einander zugewandt an dem Mittelpunkt angeordnet sind. Die zweite Moduleinheit 322 und die vierte Moduleinheit 326 sind in der ersten Richtung 12 einander gegenüberliegend angeordnet, wobei die Spitzen der als gleichschenklige Dreiecke ausgebildeten Teile der zweiten und vierten Moduleinheit 322, 326 jeweils einander zugewandt an dem Mittelpunkt angeordnet sind.

Ein Schenkel des dreieckigen Teils der zweiten Moduleinheit 322 ist neben einem Schenkel des dreieckigen Teils der ersten Moduleinheit 320 angeordnet. Ein weiterer Schenkel des dreieckigen Teils der zweiten Moduleinheit 322 ist neben einem Schenkel des dreieckigen Teils der dritten Moduleinheit 324 angeordnet. Ein Schenkel des dreieckigen Teils der vierten Moduleinheit 326 ist neben einem weiteren Schenkel des dreieckigen Teils der ersten Moduleinheit 320 angeordnet. Ein weiterer Schenkel des dreieckigen Teils der vierten Moduleinheit 326 ist neben einem weiteren Schenkel des dreieckigen Teils der dritten Moduleinheit 324 angeordnet.

Die Moduleinheiten 320, 322, 324, 326 sind über Anschlussmittel 321, 323, 325, 327 elektrisch leitend miteinander verbunden. Zusätzlich können die Anschlussmittel 321, 323, 325, 327 dazu ausgebildet sein, die Moduleinheiten 320, 322, 324, 326 mechanisch starr miteinander zu verbinden. Ein erstes Anschlussmittel 321 verbindet die erste Moduleinheit 320 mit der zweiten Moduleinheit 322, ein zweites Anschlussmittel 323 verbindet die zweite Moduleinheit 322 mit der dritten Moduleinheit 324, ein drittes Anschlussmittel 325 verbindet die dritte Moduleinheit 324 mit der vierten Moduleinheit 326 und ein viertes Anschlussmittel 327 verbindet die vierte Moduleinheit 326 mit der ersten Moduleinheit 320. Bei alternativen, nicht dargestellten Ausführungsformen kann das Leistungsmodul 300 zwar kreuzförmig, aber einstückig aus einer einzelnen zusammenhängenden Platte und ohne die Moduleinheiten 320, 322, 324, 326 und Anschlussmittel 321, 323, 325, 327 ausgebildet sein.

Die Anschlussmittel 321, 323, 325, 327 sind jeweils an den Schenkeln der dreieckigen Teile der Moduleinheiten 320, 322, 324, 326 angeordnet. Die Anschlussmittel 321, 323, 325, 327 verbinden jeweils nebeneinander angeordnete Schenkel benachbarter Moduleinheiten 320, 322, 324, 326.

Die Anschlussmittel 321, 323, 325, 327 können als elektrische Steckverbinder ausgebildet sein, etwa als Leiterplattenverbinder. Die Anschlussmittel 321, 323, 325, 327 können insbesondere auch als einpressbare Leiterplattenverbinder ausgebildet sein. Die Anschlussmittel 321, 323, 325, 327 können beispielsweise auf der Unterseite der Moduleinheiten 320, 322, 324, 326 in in den Moduleinheiten 320, 322, 324, 326 ausgebildete Kontaktlöcher eingepresst sein. Insbesondere können die Anschlussmittel 321, 323, 325, 327 eine lötfreie elektrisch leitende Verbindung zwischen den Moduleinheiten 320, 322, 324, 326 bilden.

Die Moduleinheiten 320, 322, 324, 326 können, bis auf ein auf der ersten Moduleinheit 320 angeordnetes Koppelelement 1127, jeweils identisch ausgebildet sein. Insbesondere können die Moduleinheiten 320, 322, 324, 326 jeweils identische Abmessungen aufweisen und/oder ein identisches Leiterbahnenlayout, d.h. eine identische Leiteranordnung, aufweisen und/oder, abgesehen von dem Koppelelement 1127, identisch mit elektronischen Bauteilen bestückt sein. Insbesondere können eine Leiteranordnung der ersten Moduleinheit 320, eine Leiteranordnung der zweiten Moduleinheit 322, eine Leiteranordnung der dritten Moduleinheit 324 und eine Leiteranordnung der vierten Moduleinheit 326 jeweils identisch ausgebildet sein. Insbesondere können alle Moduleinheiten 320, 322, 324, 326 Anschlusskontakte, beispielsweise Lötkontakte, zum Anschließen des Koppelelements 1127 aufweisen, wobei lediglich die erste Moduleinheit 320 mit dem Koppelelement 1127 bestückt ist. Bei alternativen Ausführungsformen des Leistungsmoduls 300 kann das Koppelelement 1127 anstatt auf der ersten Moduleinheit 320 auch auf einer der anderen Moduleinheiten 322, 324, 326 angeordnet sein. Das Leistungsmodul 300 kann dazu ausgebildet sein, über das Koppelelement 1127 eine Versorgungsenergie zur Erzeugung der Antriebsströme für die Spulenleiter 125, 126 der Statoreinheit 100 zugeführt zu bekommen.

Das Leistungsmodul 309 umfasst eine Anschlussanordnung 309. Die Anschlussanordnung 309 des Leistungsmoduls 300 ist, wie die Kontaktanordnung 420 der Statoreinheit 100, kreuzförmig ausgebildet . Die Anschlussanordnung 309 des Leistungsmoduls 300 umfasst leitfähig beschichtete weitere Kontaktlöcher, welche auch als leitfähig beschichtete Durchgangsöffnungen oder als Vias bezeichnet werden können. Die weiteren Kontaktlöcher der Anschlussanordnung 309 des Leistungsmoduls 300 können ausgebildet sein wie die Kontaktlöcher der Kontaktanordnung 420 der Statoreinheit 100.

Die Anschlussanordnung 309 des Leistungsmoduls 300 umfasst insbesondere eine erste Anschlussanordnung 311 mit ersten weiteren Kontaktlöchern, eine zweite Anschlussanordnung 312 mit zweiten weiteren Kontaktlöchern, eine dritte Anschlussanordnung 313 mit dritten weiteren Kontaktlöchern und eine vierte Anschlussanordnung 314 mit vierten weiteren Kontaktlöchern.

Die ersten weiteren Kontaktlöcher der ersten Anschlussanordnung 311 sind nebeneinander entlang der in der zweiten Richtung 14 ausgedehnten ersten Anschlussanordnung 311 angeordnet. Die zweiten weiteren Kontaktlöcher der zweiten Anschlussanordnung 312 sind nebeneinander entlang der in der ersten Richtung 12 ausgedehnten zweiten Anschlussanordnung 312 angeordnet. Die dritten weiteren Kontaktlöcher der dritten Anschlussanordnung 313 sind nebeneinander entlang der in der zweiten Richtung 14 ausgedehnten dritten Anschlussanordnung 313 angeordnet. Die vierten weiteren Kontaktlöcher der vierten Anschlussanordnung 314 sind nebeneinander entlang der in der ersten Richtung 12 ausgedehnten vierten Anschlussanordnung 314 angeordnet.

Wie in Fig. 12 dargestellt ist, kann die kreuzförmige Anschlussanordnung 309 des Leistungsmoduls 300 entlang der in der ersten Richtung 12 und der zweiten Richtung 14 verlaufenden Mittellinien des Leistungsmoduls 300 angeordnet sein. Insbesondere kann die kreuzförmige Anschlussanordnung 309 des Leistungsmoduls 300 mittig auf den Balken 301, 302 des kreuzförmig ausgebildeten Leistungsmoduls 300 angeordnet sein. Insbesondere kann die erste Anschlussanordnung 311 in der ersten Richtung 12 mittig auf dem entlang der zweiten Richtung 14 ausgerichteten zweiten Balken 302 des Leistungsmoduls 300 angeordnet sein, die zweite Anschlussanordnung 312 kann in der zweiten Richtung 14 mittig auf dem entlang der ersten Richtung 12 ausgerichteten ersten Balken 301 des Leistungsmoduls 300 angeordnet sein, die dritte Anschlussanordnung 313 kann in der ersten Richtung 12 mittig auf dem entlang der zweiten Richtung 14 ausgerichteten zweiten Balken 302 des Leistungsmoduls 300 und der ersten Anschlussanordnung 311 gegenüberliegend angeordnet sein, und die vierte Anschlussanordnung 314 kann in der zweiten Richtung 14 mittig auf dem entlang der ersten Richtung 12 ausgerichteten ersten Balken 302 des Leistungsmoduls 300 und der zweiten Anschlussanordnung 312 gegenüberliegend angeordnet ist.

Bei dem modular ausgebildeten Leistungsmodul 300 ist die erste Anschlussanordnung 311 auf der ersten Moduleinheit 320, die zweite Anschlussanordnung 312 auf der zweiten Moduleinheit 322, die dritte Anschlussanordnung 313 auf der dritten Moduleinheit 324 und die vierte Anschlussanordnung 314 auf der vierten Moduleinheit 326 des Leistungsmoduls 300 angeordnet. Die Anschlussanordnungen 311, 312, 313, 314 sind jeweils mittig auf den Moduleinheiten 320, 322, 324, 326, insbesondere mittig auf den rechteckigen Teilen der Moduleinheiten 320, 322, 324, 326 angeordnet.

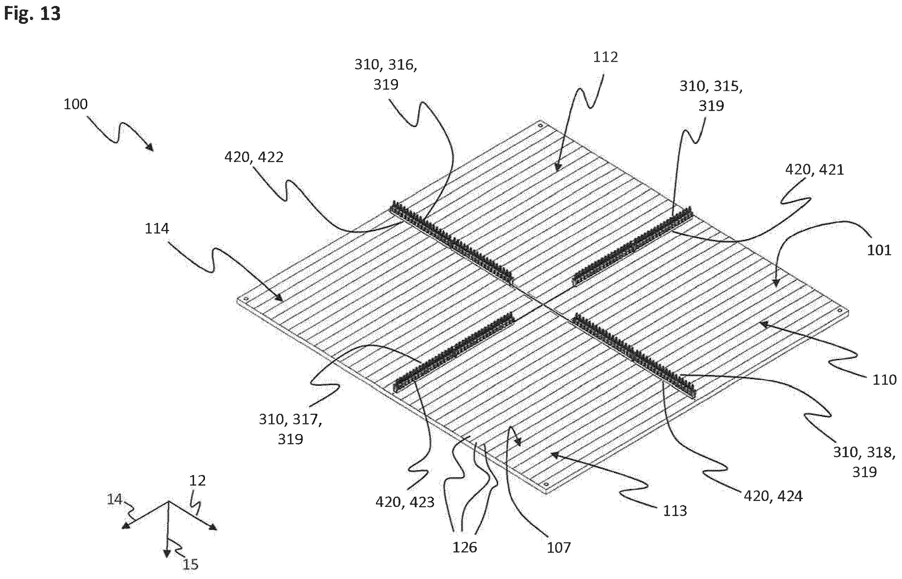

**Fig. 13** zeigt eine schematische perspektivische Darstellung der Unterseite der Statoreinheit 100. Die der Statorfläche 11 gegenüberliegende Bodenfläche 101 der Statoreinheit 100 ist eben ausgebildet. An der Bodenfläche 101 sind die weiteren Spulenleiter 126 der vierten Statorlage 107 angeordnet. Die Statoreinheit 100 kann an ihrer Unterseite frei von elektronischen Bauelementen oder Komponenten sein. Die kreuzförmige Kontaktanordnung 420 ist von der Unterseite der Statoreinheit 100 aus kontaktierbar. Beispielsweise können die Kontakteinheiten 449, insbesondere Kontaktlöcher oder Vias, der Kontaktanordnung 420 an der Unterseite der Statoreinheit 100 freiliegen.

Die Statoreinheit 100 und das Leistungsmodul 300 sind bei dem Statormodul 10 über eine Verbindungsleitung 310 elektrisch leitend miteinander verbunden. Die Verbindungsleitung 310 führt von der Oberseite des Leistungsmoduls 300 auf die Unterseite und die Bodenfläche 101 der Statoreinheit 100.

Über die Verbindungsleitung 310 ist die Kontaktanordnung 420 der Statoreinheit 100 mit der in Fig. 12 dargestellten Anschlussanordnung 309 des Leistungsmoduls 300 elektrisch leitend verbunden. Die weiteren Kontaktlöcher der Anschlussanordnung 309 des Leistungsmoduls 300 können direkt unter den Kontaktlöchern der Kontaktanordnung 420 der Statoreinheit 100 angeordnet und zu den Kontaktlöchern der Kontaktanordnung 420 der Statoreinheit 100 fluchtend ausgerichtet sein, so dass jedem Kontaktloch in der Statoreinheit 100 ein mit dem betreffenden Kontaktloch in der Statoreinheit 100 ausgerichtetes weiteres Kontaktloch in dem Statormodul 300 gegenüberliegt und umgekehrt.

In dem Statormodul 10 sind die erste Anschlussanordnung 311 des Leistungsmoduls 300 unterhalb der ersten Kontaktstruktur 421 der Statoreinheit 100, die zweite Anschlussanordnung 312 des Leistungsmoduls 300 unterhalb der zweiten Kontaktstruktur 422 der Statoreinheit 100, die dritte Anschlussanordnung 313 des Leistungsmoduls 300 unterhalb der dritten Kontaktstruktur 423 der Statoreinheit 100 und die vierte Anschlussanordnung 314 des Leistungsmoduls 300 unterhalb der vierten Kontaktstruktur 424 der Statoreinheit 100 angeordnet. Die Anschlussanordnungen 311, 312, 313, 314 des Leistungsmoduls 300 sind parallel zu der jeweils darüber liegenden Kontaktstruktur 421, 422, 423, 424 der Statoreinheit 100 ausgerichtet.

Die Verbindungsleitung 310 ist kreuzförmig ausgebildet. Die Verbindungsleitung 310 umfasst ein in Fig. 13 dargestelltes Kontaktmittel 319, über das die Anschlussanordnung 309 des Leistungsmoduls 300 elektrisch leitend mit der Kontaktanordnung 420 der Statoreinheit 100 verbunden ist. Das Kontaktmittel 319 kann, wie in Fig. 13 dargestellt ist, ein erstes Kontaktmittel 315, welches die erste Anschlussanordnung 311 des Leistungsmoduls 300 mit der ersten Kontaktstruktur 421, insbesondere mit der ersten Kontakteinheitengruppe 441 und der zweiten Kontakteinheitengruppe 442 der Statoreinheit 100, elektrisch leitend verbindet, ein zweites Kontaktmittel 316, welches die zweite Anschlussanordnung 312 des Leistungsmoduls 300 mit der zweiten Kontaktstruktur 422, insbesondere mit der siebte Kontakteinheitengruppe 447 und mit der achten Kontakteinheitengruppe 448 der Statoreinheit 100, elektrisch leitend verbindet, ein drittes Kontaktmittel 317, welches die dritte Anschlussanordnung 313 des Leistungsmoduls 300 mit der dritten Kontaktstruktur 423, insbesondere mit der fünften Kontakteinheitengruppe 445 und der sechsten Kontakteinheitengruppe 446 der Statoreinheit 100, elektrisch leitend verbindet, und ein viertes Kontaktmittel 318, welches die vierte Anschlussanordnung 314 des Leistungsmoduls 300 mit der vierten Kontaktstruktur 424, insbesondere mit der dritten Kontakteinheitengruppe 443 und der vierten Kontakteinheitengruppe 449 der Statoreinheit 100, elektrisch leitend verbindet, umfassen.

Das erste Kontaktmittel 315 kann allgemein auch als ein Kontaktmittel 315 des Statormoduls 100 und das vierte Kontaktmittel 318 kann allgemein auch als weiteres Kontaktmittel 318 der Statoreinheit 100 bezeichnet werden.

Das Leistungsmodul 300 ist mittels der Kontaktmittel 315, 316, 317, 318 mechanisch an der Statoreinheit 100 befestigt. Insbesondere ist das Leistungsmodul 300 mittels der Kontaktmittel 315, 316, 317, 318 ortsfest an der Statoreinheit 100 befestigt, so dass sich das an der Statoreinheit 100 befestigte Leistungsmodul 300 in keiner Richtung 12, 14, 15 verschieben oder drehen lässt. Insbesondere wird durch die mechanische Befestigung des Leistungsmoduls 300 an der Statoreinheit 100 ein Abstand in der vertikalen Richtung 15 zwischen Leistungsmodul 300 und Statoreinheit 100 festgelegt.

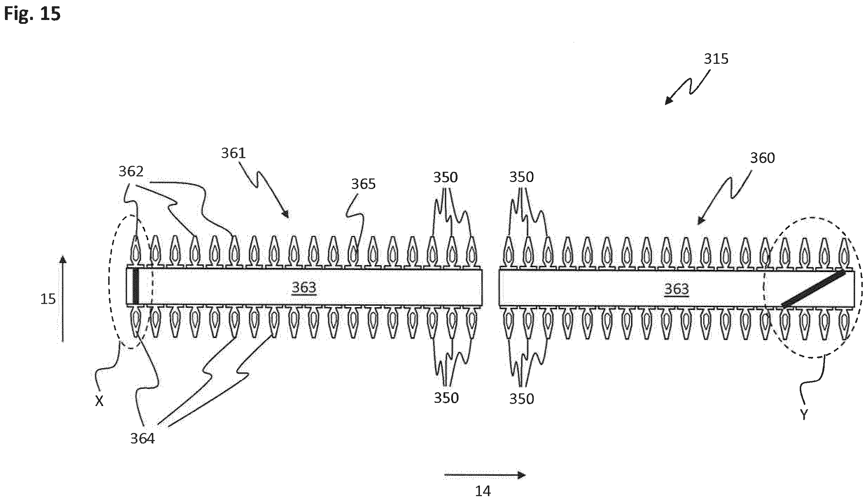

Die Verbindungsleitung 310 kann eine oder mehrere kreuzförmig angeordnete Stiftleisten umfassen. Insbesondere können die Kontaktmittel 315, 316, 317, 318, wie es in Fig. 13 dargestellt ist, jeweils eine oder mehrere Stiftleisten umfassen. Die Stiftleisten umfassen nebeneinander angeordnete elektrisch leitende Kontaktstifte, die als Zylinder ausgebildet sein können. Auf die Kontaktmittel 315, 316, 317, 318 wird im Zusammenhang mit Fig. 15 noch näher eingegangen.

Die Kontaktstifte sind analog zu den Kontaktlöchern der Kontaktstrukturen 421, 422, 423, 424 der Statoreinheit 100 und den weiteren Kontaktlöchern der Anschlussanordnungen 311, 312, 313, 314 des Leistungsmoduls 300 in der ersten und zweiten Richtung 12, 14 nebeneinander angeordnet. Insbesondere sind die Kontaktstifte des ersten Kontaktmittels 315 entlang der zweiten Richtung 14 nebeneinander angeordnet, die Kontaktstifte des zweiten Kontaktmittels 316 sind entlang der ersten Richtung 12 nebeneinander angeordnet, die Kontaktstifte des dritten Kontaktmittels 317 sind entlang der zweiten Richtung 14 nebeneinander angeordnet und die Kontaktstifte des vierten Kontaktmittels 318 sind entlang der ersten Richtung 12 nebeneinander angeordnet.

Die Kontaktstifte sind in die weiteren Kontaktlöcher der Anschlussanordnung 309 des Leistungsmoduls 300 und in die gegenüberliegenden Kontaktlöcher der Kontaktanordnung 420 der Statoreinheit 100 eingreifend angeordnet, um eine elektrisch leitende Verbindung zwischen den Kontaktstrukturen 421, 422, 423, 424 und den Anschlussanordnungen 311, 312, 313, 314 herzustellen. Die die Kontaktstifte umfassenden Kontaktmittel 315, 316, 317, 318 können insbesondere als Einpressverbinder, d. h. Pressfitverbinder, ausgebildet sein, welche in die Kontaktlöcher in der Statoreinheit 100 und/oder in die Kontaktlöcher in dem Leistungsmodul 300 eingepresst sind.

Insbesondere kann jede Moduleinheit 320, 322, 324, 326 des Leistungsmoduls 300 über jeweils genau eines der Kontaktmittel 315, 316, 317, 318 mit genau einer der Kontaktstrukturen 421, 422, 423, 424 der Statoreinheit 100 elektrisch leitend verbunden sein. Die erste Moduleinheit 320 ist über das erste Kontaktmittel 315 mit der ersten Kontaktstruktur 421 der Statoreinheit 100, die zweite Moduleinheit 322 ist über das zweite Kontaktmittel 316 mit der zweiten Kontaktstruktur 422 der Statoreinheit 100, die dritte Moduleinheit 324 ist über das dritte Kontaktmittel 317 mit der dritten Kontaktstruktur 423 der Statoreinheit 100 und die vierte Moduleinheit 326 ist über das vierte Kontaktmittel 318 mit der vierten Kontaktstruktur 424 der Statoreinheit 100 verbunden.

Die erste Moduleinheit 320 ist über das erste Kontaktmittel 315 der Verbindungsleitung 310 mit den entlang der ersten Richtung 12 orientierten Spulenleitern 125 des ersten und zweiten Statorsektors 110, 112 elektrisch leitend verbunden. Die zweite Moduleinheit 322 ist über das zweite Kontaktmittel 316 der Verbindungsleitung 310 mit den entlang der zweiten Richtung 14 orientierten weiteren Spulenleiter 126 des zweiten und vierten Statorsektors 112, 114 elektrisch leitend verbunden. Die dritte Moduleinheit 324 ist über das dritte Kontaktmittel 317 der Verbindungsleitung 310 mit den entlang der ersten Richtung 12 orientierten Spulenleitern 125 des dritten und vierten Statorsektors 113, 114 elektrisch leitend verbunden. Die vierte Moduleinheit 326 ist über das vierte Kontaktmittel 318 der Verbindungsleitung 310 mit den entlang der zweiten Richtung 14 orientierten weiteren Spulenleiter 126 des ersten und dritten Statorsektors 110, 113 elektrisch leitend verbunden.

Sind die Kontaktmittel 319 zur Verbindung der Kontaktstrukturen 421, 422, 423, 424 der Statoreinheit 100 mit den Anschlussanordnungen 311, 312, 313, 314 als Pressfitverbinder ausgebildet, so können die Kontaktstrukturen 421, 422, 423, 424 der Statoreinheit 100 jeweils derart beabstandet von dem Zentrumsbereich 460 der Statoreinheit 100 angeordnet sein, dass bei einem Verpressen einer der Moduleinheiten 420, 422, 424, 426 mit der Statoreinheit 100 eine Belastung der weiteren Moduleinheiten 420, 422, 424, 426 durch ein neben den Anschlussanordnungen 311, 312, 313, 314 angeordnetes Presswerkzeug verhindert wird.

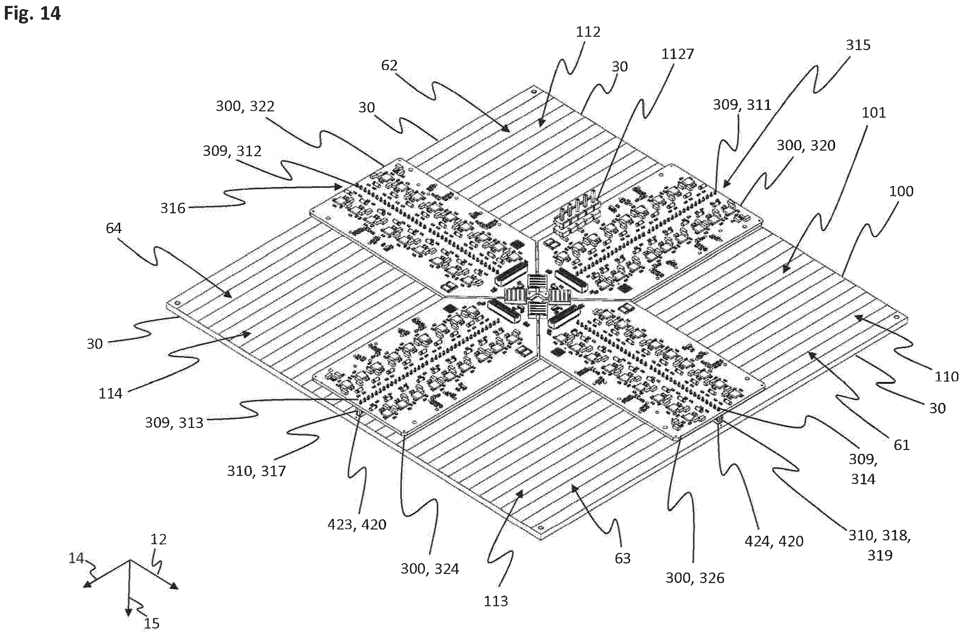

**Fig. 14** zeigt eine schematische perspektivische Darstellung der Unterseite des Leistungsmoduls 300 und der Unterseite der Statoreinheit 100, wobei das Leistungsmodul 300 mit der Statoreinheit 100 über die Verbindungsleitung 310 verbunden und wobei die Statoreinheit 100 an der Oberseite des Leistungsmoduls 300 angeordnet ist. In Fig. 14 sind die an der Unterseite des Leistungsmoduls 300 angeordneten elektronischen Komponenten dargestellt.

Die Verbindungsleitung 310 kann als eine mechanisch feste oder starre Verbindung zwischen dem Leistungsmodul 300 und der Statoreinheit 100 ausgebildet sein. Zugleich kann die Verbindungsleitung 310 elastisch genug ausgebildet sein, um unterschiedliche thermische Ausdehnung, insbesondere aufgrund unterschiedlicher thermischer Ausdehnungskoeffizienten, von Statoreinheit 100 und Leistungsmodul 300 ohne Verlust der elektrischen Kontaktierung auszugleichen. Eine mechanisch feste und starre Verbindung bei gleichzeitigem Ausgleich unterschiedlicher thermischer Ausdehnungen kann unter anderem erreicht werden, wenn die Verbindungsleitung 310 Kontaktmittel 315, 316, 317, 318 aufweist, die Stiftleisten oder Einpressverbinder umfassen.

Die Statoreinheit 100 und das Leistungsmodul 300 können in der vertikalen Richtung 15 in einem festgelegten Abstand voneinander angeordnet sein und die Verbindungsleitung 310 kann dazu ausgebildet sein, die Statoreinheit 100 und das Leistungsmodul 300 über den Abstand hinweg elektrisch leitend zu verbinden. Insbesondere können die Kontaktmittel 315, 316, 317, 318 der Verbindungsleitung 310 dazu ausgebildet sein, die Statoreinheit 100 in dem Abstand an dem Leistungsmodul 300 zu befestigen.

Der Abstand kann derart bemessen sein, dass zwischen der Statoreinheit 100 und dem Leistungsmodul 300 ausreichend Bauraum für auf der Oberseite des Leistungsmoduls 300 angeordnete elektronische Komponenten verfügbar ist. Die elektronischen Komponenten können insbesondere als integrierte Schaltkreise (ICs) ausgebildet sein. Beispielsweise können die an der Oberseite des Leistungsmoduls 300 zwischen dem Leistungsmodul 300 und der Statoreinheit 100 angeordneten elektronischen Komponenten Endstufen oder H-Brücken-Schaltungen der Stromerzeugungseinheiten zur Erzeugung der Antriebsströme umfassen.

Einen Abstand, der ausreichend Bauraum für elektronische Komponenten erzeugt, stellt insbesondere die Verbindungsleitung 310 mit als Stiftleisten oder Einpressverbindern ausgebildeten Kontaktmitteln 315, 316, 317, 318 bereit. Der Abstand kann alternativ oder zusätzlich derart bemessen sein, dass eine elektromagnetische Kopplung zwischen den Spulenleitern 125, 126 der Statoreinheit 100 und Leiterflächen oder Leiterbahnen auf dem Leistungsmodul 300 minimiert wird. Dies ist unter anderem bei der Verbindungsleitung 310 mit als Stiftleisten oder Einpressverbindern ausgebildeten Kontaktmitteln 315, 316, 317, 318 der Fall. Der Abstand kann beispielsweise zwischen 2mm und 10mm, insbesondere 5mm betragen.

Bei alternativen, nicht dargestellten Ausführungsformen des Statormoduls 10 kann das Kontaktmittel 319 auch einen elektrischen Steckverbinder oder mehrere elektrische Steckverbinder umfassen, welche die Anschlussanordnung 309 des Leistungsmoduls 300 und die Kontaktanordnung 420 der Statoreinheit 100 elektrisch leitend verbinden. Auch Kontaktmittel 315, 316, 317, 318 mit elektrischen Steckverbindern können dazu ausgebildet sein, die Statoreinheit 100 und das Leistungsmodul 300 über den für die Anordnung elektronischer Komponenten benötigten Abstand hinweg zu verbinden und/oder eine für den Ausgleich unterschiedlicher thermischer Ausdehnungen benötigte Elastizität aufzuweisen und/oder eine mechanisch feste Verbindung zwischen Statoreinheit 100 und Leistungsmodul 300 herzustellen. Bei weiteren alternativen Ausführungsformen des Statormoduls 10 kann das Kontaktmittel 319 auch als eine Lötverbindung ausgebildet sein, wobei die Anschlussanordnung 309 des Leistungsmoduls 300 und die Kontaktanordnung 420 der Statoreinheit 100 als Lötkontaktflächen ausgebildet und über die Lötverbindung elektrisch leitend verbunden sind.

Wie in Fig. 14 dargestellt ist, überdeckt das kreuzförmige Leistungsmodul 300 die Bodenfläche 101 der Statoreinheit 100 im Bereich der kreuzförmigen Kontaktanordnung 420 der Statoreinheit 100. Insbesondere überdeckt das Leistungsmodul 300 die Kontaktanordnung 420 selbst. Über dem ersten Statorsektor 110 ist ein erster Freiraum 61 ausgebildet. Zusätzlich können, wie in Fig. 14 dargestellt ist, über dem zweiten Statorsektor 112 ein zweiter Freiraum 62, über dem dritten Statorsektor 113 ein dritter Freiraum 63 und über dem vierten Statorsektor 114 ein vierter Freiraum 64 ausgebildet sein. An den Freiräumen 61, 62, 63, 64 wird die Bodenfläche 101 der Statoreinheit 100 nicht durch das Leistungsmodul 300 überdeckt, liegt also frei, und die Bodenfläche 101 der Statoreinheit 100 ist an den Freiräumen 61, 62, 63, 64 von der Unterseite des Leistungsmoduls 300 aus zugänglich.

In den Freiräumen 61, 62, 63, 64 können mehr als 30% der Bodenfläche 101 der Statoreinheit 100 von der Unterseite des Leistungsmoduls 300 aus zugänglich sein. Insbesondere können mehr als 40%, mehr als 50%, insbesondere 52% bis 56%, insbesondere 54% der Bodenfläche 101 der Statoreinheit 100 in den Freiräumen 61, 62, 63, 64 zugänglich sein. Die erste und dritte Moduleinheit 320, 324 können in der ersten Richtung 12 jeweils eine Ausdehnung von 30mm bis 120mm, insbesondere von 40mm bis 80mm, insbesondere von 60mm aufweisen. Die zweite und vierte Moduleinheit 322, 326 können in der zweiten Richtung 14 jeweils eine Ausdehnung von 30mm bis 120mm, insbesondere von 40mm bis 80mm, insbesondere von 60mm aufweisen.

Die Freiräume 61, 62, 63, 64 sind über den Statorsektoren 110, 112, 113, 114 jeweils in Eckbereichen der rechteckigen Statoreinheit 100 angeordnet, wobei die Eckbereiche jeweils an die entlang der ersten Richtung 12 und an die entlang der zweiten Richtung 14 verlaufenden Außenkanten 30 der Statoreinheit 100 angrenzen. Die Freiräume 61, 62, 63, 64 sind rechteckig ausgebildet und erstrecken sich in der ersten und zweiten Richtung 12, 14 jeweils zwischen einer der Außenkanten 30 der Statoreinheit 100 und einer Außenkante des Leistungsmoduls 300.

Der erste Freiraum 61 grenzt an die erste Moduleinheit 320 und an die vierte Moduleinheit 326 an. Der erste Freiraum 61 befindet sich oder erstreckt sich in der ersten Richtung 12 zwischen der ersten Moduleinheit 320 und einer entlang der zweiten Richtung 14 verlaufenden Außenkante 30 der Statorfläche 11 und in der zweiten Richtung 14 zwischen der vierten Moduleinheit 326 und einer entlang der ersten Richtung 12 verlaufenden Außenkante 30 der Statorfläche 11. Der zweite Freiraum 62 grenzt an die erste Moduleinheit 320 und an die zweite Moduleinheit 322 an. Der zweite Freiraum 62 befindet sich oder erstreckt sich in der ersten Richtung 12 zwischen der ersten Moduleinheit 320 und einer entlang der zweiten Richtung 14 verlaufenden Außenkante 30 der Statorfläche 11 und in der zweiten Richtung 14 zwischen der zweiten Moduleinheit 322 und einer entlang der ersten Richtung 12 verlaufenden Außenkante 30 der Statorfläche 11.

Der dritte Freiraum 63 grenzt an die dritte Moduleinheit 324 und an die vierte Moduleinheit 326 an. Der dritte Freiraum 63 befindet sich oder erstreckt sich in der ersten Richtung 12 zwischen der dritten Moduleinheit 324 und einer entlang der zweiten Richtung 14 verlaufenden Außenkante 30 der Statorfläche 11 und in der zweiten Richtung 14 zwischen der vierten Moduleinheit 324 und einer entlang der ersten Richtung 12 verlaufenden Außenkante 30 der Statorfläche 11. Der vierte Freiraum 64 grenzt an die zweite Moduleinheit 322 und an die dritte Moduleinheit 324 an. Der vierte Freiraum 64 befindet sich oder erstreckt sich in der ersten Richtung 12 zwischen der dritten Moduleinheit 324 und einer entlang der zweiten Richtung 14 verlaufenden Außenkante 30 der Statorfläche 11 und in der zweiten Richtung 14 zwischen der zweiten Moduleinheit 322 und einer entlang der ersten Richtung 12 verlaufenden Außenkante 30 der Statorfläche 11.

Der erste Freiraum 61, der zweite Freiraum 62, der dritte Freiraum 63 und/oder der vierte Freiraum 64 können in der ersten Richtung 12 eine Ausdehnung aufweisen, die größer ist als eine Ausdehnung des zweiten Balkens 302 des Leistungsmoduls 300 in der ersten Richtung 12. Der erste Freiraum 61, der zweite Freiraum 62, der dritte Freiraum 63 und/oder der vierte Freiraum 64 können in der zweiten Richtung 14 eine Ausdehnung aufweisen, die größer ist als eine Ausdehnung des ersten Balkens 301 des Leistungsmoduls 300 in der zweiten Richtung 14.

Die Balken 301, 302 des Leistungsmoduls 300 sind jeweils von den Außenkanten 30 der Statoreinheit 100 beabstandet angeordnet. Insbesondere ist der erste Balken 301 in der ersten Richtung 12 von den entlang der zweiten Richtung 14 ausgerichteten Außenkanten 30 der Statoreinheit 100 beabstandet angeordnet und der zweite Balken 302 ist in der zweiten Richtung 14 von den entlang der ersten Richtung 12 verlaufenden Außenkanten 30 der Statoreinheit 100 beabstandet angeordnet. Dadurch kann die Statoreinheit 100 derart auf der Oberseite des Modulgehäuses 19 des Statormoduls 10 angeordnet werden, dass die Außenkanten 30 der Statoreinheit 100 in der vertikalen Richtung 15 in einer Ebene mit den Seitenflächen 34 des Modulgehäuses 19 angeordnet sind, und gleichzeitig kann das Leistungsmodul 300 in der ersten und zweiten Richtung 12, 14 von einem an den Seitenflächen 34 des Modulgehäuses 19 umlaufenden Rand umschlossen werden.

Das in den Fig. 12 und 14 dargestellte Leistungsmodul 300 ist modular aus den insgesamt vier Moduleinheiten 320, 322, 324, 326 zusammengesetzt. Gegenüber einer einstückigen, kreuzförmigen Ausführung des Leistungsmoduls 300 entsteht in Bezug auf die Platine oder Leiterplatte des Leistungsmoduls 300 bei der in den Fig. 12 und 14 dargestellten modularen Ausführungsform des Leistungsmoduls 300 weniger Verschnitt bei der Herstellung der vier Moduleinheiten 320, 322, 324, 326. Außerdem können die Kontaktmittel 319 jeweils als Pressfitverbinder ausgeführt werden und bei der Ausbildung der Verbindungsleitung 310 jeweils einzeln und nacheinander mit der betreffenden Moduleinheit 320, 322, 324, 326 und der Statoreinheit 100 verpresst werden. Dadurch kann während des Verpressens ein Verkanten der Kontaktmittel 319, wie es bei einem gleichzeitigen Verpressen mehrerer Kontaktmittel 315, 316, 317, 318 leicht auftreten kann, vermieden werden. Außerdem können bei einem modular aus den Moduleinheiten 320, 322, 324, 326 aufgebautem Leistungsmodul 300 die Kontaktmittel 315, 316, 317, 318 und das Leistungsmodul 300 mit geringem Kraftaufwand verpresst werden.

Das Leistungsmodul 300 weist eine Stromerzeugungseinheit auf, die dazu ausgebildet ist, den den Läufer 1200 antreibenden Antriebsstrom aus einer über das Koppelelement 1127 bereitgestellten Antriebsenergie zu erzeugen. Die Stromerzeugungseinheit ist dazu ausgebildet, aus der über das Koppelelement 1127 bereitgestellten Antriebsenergie einen als Wechselstrom an die Spulenleiter 125, 126 angelegten Antriebsstrom zu erzeugen. Die Stromerzeugungseinheit kann dazu ausgebildet sein, den Antriebsstrom als einen gepulsten Antriebsstrom, insbesondere als einen pulsweitenmodulierten Antriebsstrom bereitzustellen. Zur Erzeugung des Antriebsstroms kann die Stromerzeugungseinheit Schalteinheiten, insbesondere Transistoren, umfassen.

Das Leistungsmodul 300 kann neben der Stromerzeugungseinheit noch weitere Stromerzeugungseinheiten aufweisen. Das Leistungsmodul kann dazu ausgebildet sein, für jeden über die Kontakteinheiten 449 einzeln bestrombaren Spulenleiter 125, 126 jeweils einen separaten Antriebsstrom zu erzeugen. Insbesondere kann das Leistungsmodul 300 für jeden einzeln zu bestromenden Spulenleiter 125, 126 jeweils eine eigene Stromerzeugungseinheit aufweisen. Beispielsweise kann das Leistungsmodul 300 für jede einzelne Phase der Mehrphasensysteme der Statoreinheit 100 jeweils eine separate Stromerzeugungseinheit aufweisen, um als Antriebsstrom einen Phasenstrom für die entsprechende Phase zu erzeugen. Beispielsweise kann das Leistungsmodul 300 für jede der drei Phasen eines Dreiphasensystems aus zusammengeschalteten Spulenleitern 125, 126 je eine Stromerzeugungseinheit aufweisen. Die Stromerzeugungseinheiten können als Endstufen, insbesondere als H-Brücken-Schaltungen oder Leistungstransistoren ausgebildet sein. Die Stromerzeugungseinheiten können als elektronische Bauteile, insbesondere als integrierte Schaltungen, ausgebildet sein, welche auf der Leiterplatte oder den Leiterplatten des Leistungsmoduls 300, insbesondere an der Oberseite und/oder der Unterseite des Leistungsmoduls 300, angeordnet sind.

Jeder Statorsektor 110, 112, 113, 114 kann jeweils eine erste Anzahl von Mehrphasensystemen umfassen, deren Spulenleiter 125entlang der ersten Richtung 12 ausgedehnt sind, und eine zweite Anzahl von Mehrphasensystemen umfassen, deren weitere Spulenleiter 126 entlang der zweiten Richtung 14 ausgedehnt sind. Die erste und zweite Anzahl kann gleich sein. Die Mehrphasensysteme können jeweils eine dritte Anzahl einzelner Phasen umfassen. Das Leistungsmodul 300 kann für jede der einzelnen Phasen der Mehrphasensysteme jeweils eine Stromerzeugungseinheit umfassen. Insgesamt kann das Leistungsmodul 300 also pro Statorsektor 110, 112, 113, 114 eine Gesamtzahl von Stromerzeugungseinheiten umfassen, die der Summe aus dem Produkt der ersten und dritten Anzahl und dem Produkt der zweiten und dritten Anzahl entspricht.

Die Spulenleiter 125, 126 der Statoreinheit 100 können beispielsweise insgesamt zu vierundzwanzig Dreiphasensystemen zusammengeschaltet sein, wobei jeder Statorsektor 110, 112, 113, 114 jeweils sechs Dreiphasensysteme umfasst. Von den sechs Dreiphasensystemen eines Sektors 110, 112, 113, 114 können jeweils drei aus in der ersten Richtung 12 ausgedehnten Spulenleitern 125 und jeweils drei aus in der zweiten Richtung 14 ausgedehnten weiteren Spulenleitern 126 bestehen. Bei einer Statoreinheit 100 mit vierundzwanzig Dreiphasensystemen kann das Leistungsmodul 300 zweiundsiebzig Stromerzeugungseinheiten zur Erzeugung von zweiundsiebzig Antriebs- bzw. Phasenströmen umfassen.

Die Moduleinheiten 320, 322, 324, 326 umfassen jeweils alle Stromerzeugungseinheiten, die für die Erzeugung der Antriebsströme für die mit der jeweiligen Moduleinheit 320, 322, 324, 326 verbundenen Spulenleiter 125, 126 notwendig sind. Die erste Moduleinheit 320 umfasst alle Stromerzeugungseinheiten, die die Antriebsströme in den entlang der ersten Richtung 12 ausgerichteten Spulenleitern 125 des ersten und zweiten Statorsektors 110, 112 erzeugen und als erste Stromerzeugungseinheiten bezeichnet werden können. Die zweite Moduleinheit 322 umfasst alle Stromerzeugungseinheiten, die die Antriebsströme in den entlang der zweiten Richtung 14 ausgerichteten weiteren Spulenleitern 126 des zweiten und vierten Statorsektors 112, 114 erzeugen und als zweite Stromerzeugungseinheiten bezeichnet werden können. Die dritte Moduleinheit 324 umfasst alle Stromerzeugungseinheiten, die die Antriebsströme in den entlang der ersten Richtung 12 ausgerichteten Spulenleitern 125 des dritten und vierten Statorsektors 113, 114 erzeugen und als dritte Stromerzeugungseinheiten bezeichnet werden können. Die vierte Moduleinheit 326 umfasst alle Stromerzeugungseinheiten, die die Antriebsströme in den entlang der zweiten Richtung 14 ausgerichteten weiteren Spulenleitern 126 des ersten und dritten Statorsektors 110, 113 erzeugen und als vierte Stromerzeugungseinheiten bezeichnet werden können.

Jede der vier Moduleinheiten 320, 322, 324, 326 kann jeweils eine Gesamtzahl von Stromerzeugungseinheiten umfassen, die dem Doppelten des Produkts aus der ersten Anzahl von Mehrphasensystemen mit entlang der zweiten Richtung 14 ausgedehnten weiteren Spulenleitern 126 und der dritten Anzahl von einzelnen Phasen pro Mehrphasensystem oder dem Doppelten des Produkts aus der zweiten Anzahl von Mehrphasensystemen mit entlang der ersten Richtung 12 ausgedehnten Spulenleitern 125 und der dritten Anzahl von einzelnen Phasen pro Mehrphasensystem entspricht.

Jede der Moduleinheiten 320, 322, 324, 326 kann jeweils achtzehn Stromerzeugungseinheiten zur Erzeugung von achtzehn Antriebsströmen umfassen. Die achtzehn Antriebsströme können als je drei Phasen von sechs Dreiphasensystemen erzeugt werden.

Die Stromerzeugungseinheiten sind zur Übertragung der Antriebsströme über Antriebsstromleitungen mit den Spulenleitern 125, 126 der Statoreinheit 100 verbunden. Die Antriebsstromleitungen sind als Teil der Verbindungsleitung 310 ausgeführt. Die Antriebsstromleitungen sind jeweils über die Kontaktmittel 319 der Verbindungsleitung 310 geführt. Die ersten Stromerzeugungseinheiten der ersten Moduleinheit 320 sind über die in dem ersten Kontaktmittel 315 geführten Antriebsstromleitungen mit den in der ersten Richtung 12 orientierten Spulenleitern 125 des ersten und zweiten Statorsektors 110, 112 verbunden. Die zweiten Stromerzeugungseinheiten der zweiten Moduleinheit 322 sind über die in dem zweiten Kontaktmittel 316 geführten Antriebsstromleitungen mit den in der zweiten Richtung 14 orientierten weiteren Spulenleitern 126 des zweiten und vierten Statorsektors 112, 114 verbunden. Die dritten Stromerzeugungseinheiten der dritten Moduleinheit 324 sind über die in dem dritten Kontaktmittel 317 geführten Antriebsstromleitungen mit den in der ersten Richtung 12 orientierten Spulenleitern 125 des dritten und vierten Statorsektors 113, 114 verbunden. Die vierten Stromerzeugungseinheiten der vierten Moduleinheit 326 sind über die in dem vierten Kontaktmittel 318 geführten Antriebsstromleitungen mit den in der zweiten Richtung 14 orientierten weiteren Spulenleitern 126 des ersten und dritten Statorsektors 110, 113 verbunden.

Ist das Leistungsmodul 300, anders als in den Fig. 12 und 14 dargestellt, nicht aus den Moduleinheiten 320, 322, 324, 326, sondern einstückig aufgebaut, so sind die Stromerzeugungseinheiten analog zu den auf den Moduleinheiten 320, 322, 324, 326 angeordneten Stromerzeugungseinheiten mit dem Statormodul 100 verbunden. Insbesondere sind die ersten Stromerzeugungseinheiten und die dritten Stromerzeugungseinheiten auf dem zweiten Balken 302 des Leistungsmoduls 300 und die zweiten und vierten Stromerzeugungseinheiten auf dem ersten Balken 301 des Leistungsmoduls 300 angeordnet.

Das Statormodul 10 kann dazu ausgebildet sein, Antriebsströme mit einer Stromstärke von mehr als 5A, insbesondere von mehr als 10A zu erzeugen. Die Stromstärke der Antriebsströme kann beispielsweise 20A oder 16A oder 15A im Dauerbetrieb betragen. Bei einem eine Leiterplatte umfassenden Leistungsmodul 300 kann eine Metallisierungsdicke der den Antriebsstrom führenden Leiterbahnen 35pm bis 200µm, insbesondere 50pm bis 100µm, insbesondere 70pm betragen. Insbesondere kann eine, mehrere oder alle Leiterbahnlagen des Leistungsmoduls 300 die gleiche Metallisierungsdicke wie die den Antriebsstrom führenden Leiterbahnen aufweisen.

Bei dem Statormodul 10 sind die durch das Leistungsmodul 300 und die Statoreinheit 100 gebildeten Einzelmodule jeweils als flache in der ersten und zweiten Richtung 12, 14 ausgedehnte Platten ausgebildet. Indem die plattenförmigen Einzelmodule in der vertikalen Richtung 15 übereinander angeordnet sind, kann eine besonders flache Bauform des Statormoduls 10 realisiert werden.

Bei dem Statormodul 10 ist das Leistungsmodul 300 derart bemessen und ausgeformt, dass sich das Leistungsmodul 300 weder in der ersten Richtung 12, noch in der zweiten Richtung 14 vollständig über die gesamte Breite des Statormoduls 10 erstreckt und in der ersten und zweiten Richtung 12, 14 die gesamte Querschnittsfläche des Statormoduls 10 abdeckt. Die lediglich unvollständige Abdeckung der Querschnittsfläche kann bei dem Leistungsmodul 300 durch dessen kreuzförmige Form und die aus der kreuzförmigen Form resultierenden Freiräume 61, 62, 63, 64 erreicht werden.

Die lediglich unvollständige Abdeckung der Querschnittsflächen des Statormoduls 10 in der Ebene des Leistungsmoduls 300 ermöglicht es, eine wärmeleitende Verbindung zwischen der Bodenfläche 101 der Statoreinheit 100 und einer Auflagefläche an der Unterseite 9 des Statormoduls 10 zu realisieren. Die wärmeleitende Verbindung kann dabei über großflächige Kontaktflächen hergestellt sein.

**Fig. 15** zeigt eine schematische Ansicht des ersten Kontaktmittels 315 aus der ersten Richtung 12. Soweit im Folgenden keine Unterschiede beschrieben werden, sind das zweite, dritte und vierte Kontaktmittel 316, 317, 318 identisch zu dem ersten Kontaktmittel 315 ausgebildet.

Das erste Kontaktmittel 315 umfasst eine erste Kontaktstiftleiste 360 und eine zweite Kontaktstiftleiste 361. Die erste und die zweite Kontaktstiftleiste 360, 361 umfassen jeweils eine Mehrzahl miteinander verbundener Kontaktstifte 350. Insbesondere können die Kontaktstiftleisten 360, 361 jeweils achtzehn Kontaktstifte 350 umfassen. Die erste Kontaktstiftleiste 360 kann aber auch mehr oder weniger Kontaktstifte 350 als die zweite Kontaktstiftleiste 361 umfassen. Bei alternativen Ausführungsformen des Kontaktmittels 315 kann das Kontaktmittel 315 auch lediglich die erste Kontaktstiftleiste 360 umfassen.

Die Kontaktstiftleisten 360, 361 umfassen jeweils einen Leistenkörper 363, in dem oder an dem die Kontaktstifte 350 elektrisch isoliert und beabstandet voneinander angeordnet sind. Die Kontaktstifte 350 können beispielsweise regelmäßig voneinander beabstandet angeordnet sein. Die Kontaktstifte 350 überragen den Leistenkörper 363 in der vertikalen Richtung 15 jeweils auf beiden Seiten des Leistenkörpers 363. Die in der vertikalen Richtung 15 über dem Leistenkörper 363 angeordneten Abschnitte der Kontaktstifte 350 bilden erste Kontaktbereiche 362 der Kontaktstifte 350 und die in der vertikalen Richtung 15 unterhalb des Leistenkörpers 363 angeordneten Abschnitte der Kontaktstifte 350 bilden zweite Kontaktbereiche 364 der Kontaktstifte 350. Bei den Kontaktstiften 350 sind der erste Kontaktbereich 362 und der zweite Kontaktbereich 364 der einzelnen Kontaktstifte 350 jeweils elektrisch leitend miteinander verbunden, was exemplarisch im Bereich X dargestellt ist. Bei alternativen Ausführungsformen der Kontaktstiftleisten 360, 361 muss es in der vertikalen Richtung 15 keine lineare, direkte Zugehörigkeit bzw. elektrische Verbindung zwischen den jeweiligen Kontaktstiften 350 des ersten Kontaktbereichs 362 und des zweiten Kontaktbereichs 364 geben. Hier können auch in der zweiten Richtung 14 beabstandet voneinander angeordnete Kontaktstifte 350 des ersten Kontaktbereichs 362 und des zweiten Kontaktbereichs 364 elektrisch miteinander verbunden sein. Diese alternative Ausführungsform ist exemplarisch im Bereich Y dargestellt.

Die ersten Kontaktbereiche 362 der Kontaktstifte 350 sind in die Kontaktlöcher der Statoreinheit 100 eingreifend angeordnet und die zweiten Kontaktbereiche 364 der Kontaktstifte 350 sind die weiteren Kontaktlöcher des Leistungsmoduls 200 eingreifend angeordnet. Außerdem können die Kontaktstifte 350 über die ersten Kontaktbereiche 362 mit der Statoreinheit 100 und über die zweiten Kontaktbereiche 364 mit dem Leistungsmodul 300 mechanisch fest verbunden sein.

Insbesondere können die Kontaktstifte 350 in den ersten Kontaktbereichen 362 reibschlüssig mit der Statoreinheit 100 und/oder in den zweiten Kontaktbereichen 364 reibschlüssig mit dem Leistungsmodul 300 verbunden sein. Die Kontaktstifte 350 können in die Kontaktlöcher der Statoreinheit 100 und/oder in die weiteren Kontaktlöcher des Leistungsmoduls 300 einpressbar ausgebildet sein. Hierzu können die Kontaktstifte 350 in dem ersten und/oder dem zweiten Kontaktbereich 362, 364 als Einpressverbinder ausgebildet sein. Insbesondere können die Kontaktstifte 350 in den ersten und/oder in den zweiten Kontaktbereichen 362, 364, wie in Fig. 15 als Federkontakte 365 ausgebildet sein, wobei ein Durchmesser der Federkontakte 365 in entspanntem Zustand größer ist als ein Durchmesser der Kontaktlöcher der Statoreinheit 100 und/oder des Leistungsmoduls 300 und wobei der Durchmesser der Federkontakte 365 im komprimierten Zustand auf einen Durchmesser verkleinert werden kann, der kleiner ist als der Durchmesser der Kontaktlöcher der Statoreinheit 100 und/oder der weiteren Kontaktlöcher des Leistungsmoduls 300.

Bei alternativen Ausführungsformen des ersten Kontaktmittels 315 kann der erste Kontaktbereich 362 und/oder der zweite Kontaktbereich 364 der Kontaktstifte 350 auch mittels eines Fixiermittels, beispielsweise mittels eines Klebers oder eines Lots, in den Kontaktlöchern der Statoreinheit 100 und/oder in den weiteren Kontaktlöchern des Leistungsmoduls 300 befestigt werden. Das Fixiermittel kann dabei in oder um die Kontaktlöcher der Statoreinheit 100 und/oder in den weiteren Kontaktlöchern des Leistungsmoduls 300 und/oder zwischen dem Leistenkörper 363 und der Statoreinheit 100 und/oder zwischen dem Leistenkörper 363 und dem Leistungsmodul 300 angeordnet sein. Insbesondere kann das erste Verbindungsmittel 315 an der Statoreinheit 100 mittels einer reibschlüssigen Verbindung zwischen den ersten Kontaktbereichen 362 und der Statoreinheit 100 und an dem Leistungsmodul 300 mittels eines Fixiermittels, insbesondere mittels eines in den zweiten Kontaktbereichen 364 angeordneten Lots, befestigt sein.

Bei der Statoreinheit 100 sind in dem Zentrumsbereich 460 keine Kontakteinheiten 449 und Kontaktmittel 315, 316, 317 angeordnet. Bei alternativen Ausführungsformen der Statoreinheit 100 können jedoch auch in dem Zentrumsbereich 460 eine oder mehrere der Kontaktmittel 319 angeordnet sein.

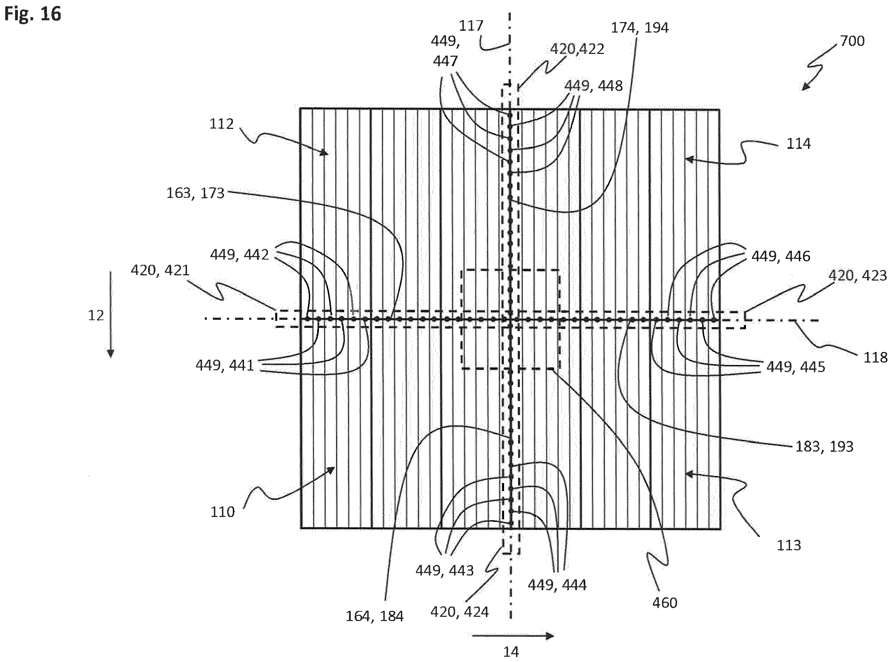

**Fig. 16** zeigt eine Aufsicht auf eine erste weitere Statoreinheit 700. Soweit im Folgenden keine Unterschiede beschrieben werden, ist die erste weitere Statoreinheit 700 ausgebildet wie die Statoreinheit 100.

Bei der ersten weiteren Statoreinheit 700 sind die Kontakteinheiten 449 der ersten Kontakteinheitengruppe 441 und die Kontakteinheiten 449 der zweiten Kontakteinheitengruppe 442 über die gesamte Länge der ersten Innenkante 163 des ersten Statorsektors 110 und über die gesamte Länge der ersten Innenkante 173 des zweiten Statorsektors 112 verteilt angeordnet. Ebenso sind die Kontakteinheiten 449 der dritten Kontakteinheitengruppe 443 und die Kontakteinheiten 449 der vierten Kontakteinheitengruppe 444 über die gesamte Länge der zweiten Innenkante 164 des ersten Statorsektors 110 und über die gesamte Länge der zweiten Innenkante 184 des dritten Statorsektors 113 verteilt angeordnet. Die Kontakteinheiten 449 der fünften Kontakteinheitengruppe 445 und die Kontakteinheiten 449 der sechsten Kontakteinheitengruppe 446 sind über die gesamte Länge der ersten Innenkante 183 des dritten Statorsektors 113 und über die gesamte Länge der ersten Innenkante 193 des vierten Statorsektors 114 verteilt angeordnet. Die Kontakteinheiten 449 der siebten Kontakteinheitengruppe 447 und die Kontakteinheiten 449 der achten Kontakteinheitengruppe 448 sind über die gesamte Länge der zweiten Innenkante 174 des zweiten Statorsektors 112 und über die gesamte Länge der zweiten Innenkante 194 des vierten Statorsektors 114 verteilt angeordnet. Insbesondere sind bei der weiteren Statoreinheit 700 ein Teil der Kontakteinheiten 449 in dem Zentrumsbereich 460 der weiteren Statoreinheit 700 angeordnet.

Entsprechend erstrecken sich die Kontaktmittel 315, 316, 317, 318 bei der ersten weiteren Statoreinheit 700 jeweils über die gesamte Länge der Innenkanten 163, 164, 173, 174, 183, 184, 193, 194 der Statorsektoren 110, 112, 113, 114.

Bei der in Fig. 11 dargestellten Statoreinheit 100 sind die Kontakteinheitengruppen 441, 442, 443, 444, 445, 446, 447, 448, insbesondere die Kontakteinheiten 449 der Kontakteinheitengruppen 441, 442, 443, 444, 445, 446, 447, 448 und die Kontaktmittel 315, 316, 317, 318 jeweils in Reihen auf der ersten und der zweiten Mittellinie 117, 118 der Statoreinheit 100 angeordnet. Bei alternativen Ausführungsformen der Statoreinheit 100 können die Kontakteinheitengruppen 441, 442, 443, 444, 445, 446, 447, 448 oder die Kontakteinheiten 449 auch ganz oder teilweise neben den Mittellinien 117, 118 an den Innenkanten 163, 164, 173, 174, 183, 184, 193, 194 der Statorsektoren 110, 112, 113, 114 angeordnet sein.

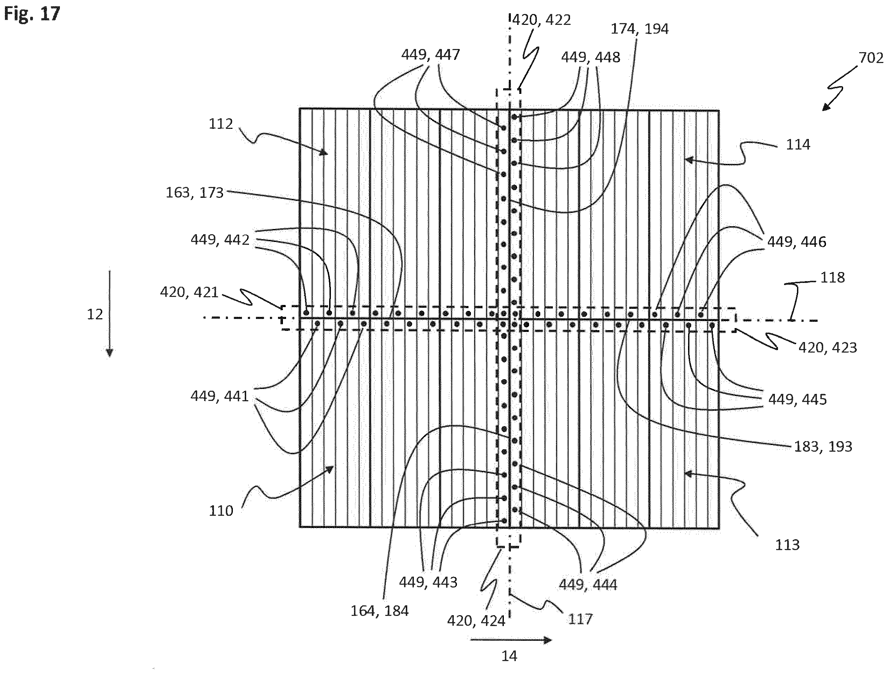

**Fig. 17** zeigt eine Aufsicht auf eine zweite weitere Statoreinheit 702. Soweit im Folgenden keine Unterschiede beschrieben werden, ist die zweite weitere Statoreinheit 702 ausgebildet wie die Statoreinheit 100. Insbesondere ist bei der zweiten weiteren Statoreinheit 702 die erste Kontaktstruktur 421 an der ersten Innenkante 163 des ersten Statorsektors 110 und an der ersten Innenkante 173 des zweiten Statorsektors 112 angeordnet. Die vierte Kontaktstruktur 424 ist an der zweiten Innenkante 164 des ersten Statorsektors 110 und an der zweiten Innenkante 184 des dritten Statorsektors 113, die dritte Kontaktstruktur 423 ist an der ersten Innenkante 183 des dritten Statorsektors 113 und an der ersten Innenkante 193 des vierten Statorsektors 114 und die zweite Kontaktstruktur 422 ist an der zweiten Innenkante 174 des zweiten Statorsektors 112 und an der zweiten Innenkante 194 des vierten Statorsektors 114 angeordnet.

Bei der zweiten weiteren Statoreinheit 702 sind die Kontakteinheiten 449 der Kontaktstrukturen 421, 422, 423, 424 jeweils neben den Innenkanten 163, 164, 173, 174, 183, 184 193, 194 der Statorsektoren 110, 112, 113, 114 angeordnet. Insbesondere sind die Kontakteinheiten 449 der ersten Kontakteinheitengruppe 441 in Richtung des ersten Statorsektors 110 versetzt an den ersten Innenkanten 163, 174 des ersten und zweiten Statorsektors 110, 112 angeordnet. Die Kontakteinheiten 449 der zweiten Kontakteinheitengruppe 442 sind in Richtung des zweiten Statorsektors 112 versetzt an den ersten Innenkanten 163, 173 des ersten und zweiten Statorsektors 110, 112 angeordnet. Die Kontakteinheiten 449 der dritten Kontakteinheitengruppe 443 sind in Richtung des ersten Statorsektors 110 versetzt an den zweiten Innenkanten 164, 184 des ersten und dritten Statorsektors 110, 113 angeordnet und die Kontakteinheiten 449 der vierten Kontakteinheitengruppe 444 sind in Richtung des dritten Statorsektors 113 versetzt an den zweiten Innenkanten 164, 184 des ersten und dritten Statorsektors 110, 113 angeordnet.

Außerdem sind die Kontakteinheiten 449 der fünften Kontakteinheitengruppe 445 in Richtung des dritten Statorsektors 113 versetzt an den ersten Innenkanten 183, 193 des dritten und vierten Statorsektors 113, 114 angeordnet und die Kontakteinheiten 449 der sechsten Kontakteinheitengruppe 446 sind in Richtung des vierten Statorsektors 114 versetzt an den ersten Innenkanten 183, 193 des dritten und vierten Statorsektors 113, 114 angeordnet. Die Kontakteinheiten 449 der siebten Kontakteinheitengruppe 447 sind in Richtung des zweiten Statorsektors 112 versetzt an den zweiten Innenkanten 174, 194 des zweiten und vierten Statorsektors 112, 114 angeordnet und die Kontakteinheiten 449 der achten Kontakteinheitengruppe 448 sind in Richtung des vierten Statorsektors 114 versetzt an den zweiten Innenkanten 174, 194 des zweiten und vierten Statorsektors 112, 114 angeordnet.

Auch bei der zweiten weiteren Statoreinheit 702 können die Kontaktmittel 315, 316, 317, 318 jeweils nebeneinander angeordnete Kontaktstifte 350 umfassen, wobei die Kontaktstifte 350 der einzelnen Kontaktmittel 315, 316, 317, 318 50 jeweils in zwei Reihen nebeneinander angeordnet sind. Die Kontaktstifte 350 der beiden Reihen können in oder an einem gemeinsamen Leistenkörper 363 oder alternativ in oder an voneinander getrennt ausgebildeten Leistenkörpern 363 angeordnet sein.

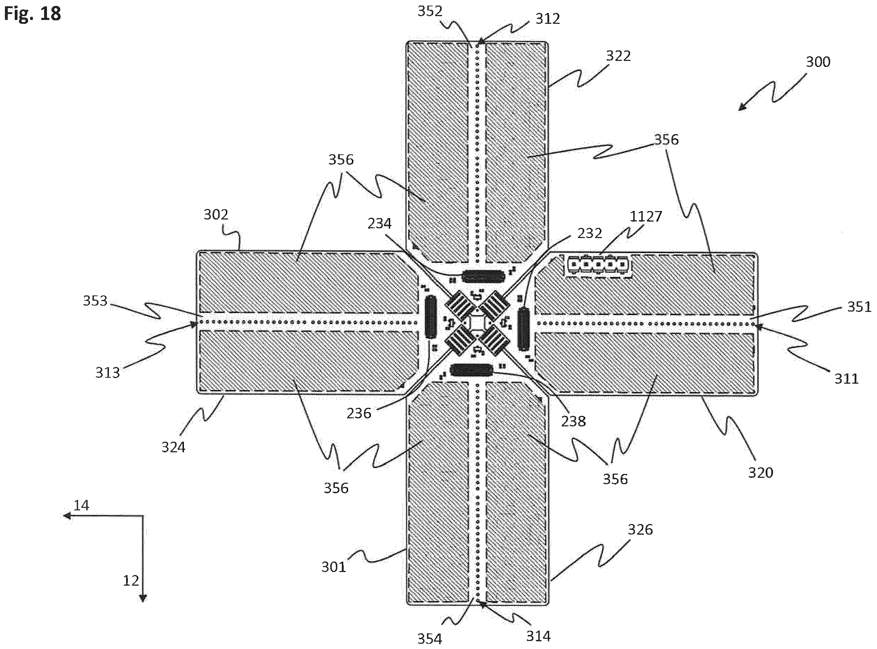

**Fig. 18** zeigt eine schematische weitere Aufsicht auf die Unterseite das Leistungsmoduls 300. Das Leistungsmodul 300 weist an der Unterseite eine in der zweiten Richtung 14 entlang den weiteren Kontaktlöchern der ersten Anschlussanordnung 311 angeordnete erste Pressfläche 351, eine in der ersten Richtung 12 entlang den weiteren Kontaktlöchern der zweiten Anschlussanordnung 312 angeordnete zweite Pressfläche 352, eine in der zweiten Richtung 14 entlang den weiteren Kontaktlöchern der dritten Anschlussanordnung 313 angeordnete dritte Pressfläche 353 und eine in der ersten Richtung 12 entlang der weiteren Kontaktlöcher der vierten Anschlussanordnung 314 angeordnete vierte Pressfläche 354 auf.

An den Pressflächen 351, 352, 353, 354 sind keine elektronischen Komponenten an der Unterseite des Leistungsmoduls 300 angeordnet, so dass die Pressflächen 351, 352, 353, 354 des Leistungsmoduls 300 frei von elektronischen Komponenten ausgebildet sind. Insbesondere kann das Leistungsmodul 300 an den Pressflächen 351, 352, 353, 354 eine plane, ebene Unterseite aufweisen. Die erste und die dritte Pressfläche 351, 353 sind in der ersten Richtung 12 derart bemessen, dass ein Presswerkzeug zum reibschlüssigen Verbinden des ersten oder des dritten Kontaktmittels 315, 317 mit dem Leistungsmodul 300 oder der Statoreinheit 100 an der ersten oder der dritten Pressfläche 351, 353 neben dem ersten oder dritten Kontaktmittel 315, 317 angeordnet werden kann. Die zweite und die vierte Pressfläche 352, 354 sind in der zweiten Richtung 14 derart bemessen, dass das Presswerkzeug zum reibschlüssigen Verbinden des zweiten oder des vierten Kontaktmittels 316, 318 mit dem Leistungsmodul 300 oder der Statoreinheit 100 an der zweiten oder der vierten Pressfläche 352, 354 neben dem zweiten oder dem vierten Kontaktmittel 312, 318 angeordnet werden kann.

Neben den Pressflächen 351, 352, 353, 354, insbesondere zwischen den Pressflächen 351, 352, 353, 354 und den Außenkanten des Leistungsmoduls 300, weist das Leistungsmodul 300 jeweils Bestückungsbereiche 356 zu Anordnung elektronischer Komponenten an der Unterseite des Leistungsmoduls 300 auf. Die Bestückungsbereiche 356 erstrecken sich in der ersten Richtung 12 insbesondere zwischen der ersten oder dritten Pressfläche 351, 353 und den entlang der zweiten Richtung 14 verlaufenden Außenkanten, insbesondere den entlang der zweiten Richtung 14 verlaufenden Außenkanten des zweiten Balkens 302 des Leistungsmoduls 300. Die Bestückungsbereiche 356 erstrecken sich in der zweiten Richtung 14 insbesondere zwischen der zweiten oder vierten Pressfläche 352, 354 und den entlang der ersten Richtung 12 verlaufenden Außenkanten, insbesondere den entlang der ersten Richtung 12 verlaufenden Außenkanten des ersten Balkens 301 des Leistungsmoduls 300.

Die erste und die dritte Pressfläche 351, 353 können in der erste Richtung 12 jeweils eine Ausdehnung zwischen 3mm und 11mm, insbesondere von 7mm, aufweisen. Die zweite und die vierte Pressfläche 352, 354 können in der zweite Richtung 14 jeweils eine Ausdehnung zwischen 3mm und 11mm, insbesondere von 7mm, aufweisen.

Indem die elektronischen Bauteile des Leistungsmoduls 300 in den Bestückungsbereichen 356 des Leistungsmoduls 300 von den in den Pressflächen 351, 352, 353, 354 angeordneten Kontaktmitteln 315, 316, 317, 318 angeordnet sind, kann verhindert werden, dass der die elektronischen Komponenten tragende Bereich des Leistungsmoduls 300 beim Verpressen verbogen wird und die elektronischen Komponenten beschädigt oder abgelöst werden.

Das Leistungsmodul 300 kann über eine weitere Verbindungsleitung mit einem Steuermodul des Statormoduls 10 verbunden sein. Das Steuermodul kann dazu ausgebildet sein, Steuersignale zur Ansteuerung der auf dem Leistungsmodul 300 angeordneten Stromerzeugungseinheiten bereitzustellen. Das Steuermodul kann beispielsweise eine oder mehrere Steuereinheiten zur Erzeugung der Steuersignale umfassen. Die Steuereinheiten können beispielsweise als Netzwerkteilnehmer eines Datennetzwerkes ausgebildet sein, über welches Steuerdaten zur Steuerung des Planarantriebssystems übertragen werden. Zusätzlich kann das Steuermodul dazu ausgebildet sein, Sensorsignale zur Erfassung einer Position des Läufers 1200 über der Statorfläche 11 zu erzeugen. Beispielsweise kann das Steuermodul eine oder mehrere mit dem Läufer 1200 wechselwirkende Positionserfassungseinheiten umfassen. Das Steuermodul kann auch als Sensormodul des Statormoduls 10 bezeichnet werden.

Die weitere Verbindungsleitung umfasst ein erstes Koppelelement 232, ein zweites Koppelelement 234, ein drittes Koppelelement 236 und ein viertes Koppelelement 238. Die Koppelelemente 232, 234, 236, 238 stellen für die Übertragung der Steuersignale jeweils eine elektrisch leitende Verbindung zwischen dem Steuermodul und dem Leistungsmodul 300 her. Die Koppelelemente 232, 234, 236, 238 können jeweils als Elemente einer Steckverbindung, insbesondere als Stecker oder Buchsen, ausgebildet sein. Die Koppelelemente 232, 234, 236, 238 können aber auch als einteilige Verbindungen zwischen dem Leistungsmodul 300 und dem Steuermodul ausgebildet sein. Über die Koppelelemente 232, 234, 236, 238 können das Leistungsmodul 300 und das Steuermodul 200 mechanisch aneinander befestigt sein.

Das erste Koppelelement 232 ist auf dem zweiten Balken 302 des Leistungsmoduls 300 im Bereich der ersten Anschlussanordnung 311, das zweite Koppelelement 234 ist auf dem ersten Balken 301 des Leistungsmoduls 300 im Bereich der zweiten Anschlussanordnung 312, das dritte Koppelelement 236 ist auf dem zweiten Balken 302 des Leistungsmoduls 300 im Bereich der dritten Anschlussanordnung 312 und das vierte Koppelelement 238 ist auf dem ersten Balken 301 des Leistungsmoduls 300 im Bereich der vierten Anschlussanordnung 314 angeordnet.

Über das erste Koppelelement 232 werden erste Steuersignale zur Steuerung der ersten Stromerzeugungseinheiten des Leistungsmoduls 300 von dem Steuermodul auf das Leistungsmodul 300 übertragen, über das zweite Koppelelement 234 werden zweite Steuersignale zur Steuerung der zweiten Stromerzeugungseinheiten des Leistungsmoduls 300 von dem Steuermodul auf das Leistungsmodul 300 übertragen, über das dritte Koppelelement 236 werden dritte Steuersignale zur Steuerung der dritten Stromerzeugungseinheiten des Leistungsmoduls 300 von dem Steuermodul auf das Leistungsmodul 300 übertragen und über das vierte Koppelelement 238 werden vierte Steuersignale zur Steuerung der vierten Stromerzeugungseinheiten des Leistungsmoduls 300 von dem Steuermodul auf das Leistungsmodul 300 übertragen.

Umfasst das Leistungsmodul 300 die Moduleinheiten 320, 322, 324, 326, so können die Moduleinheiten 320, 322, 324, 326 jeweils separat und einzeln über elektrisch voneinander isolierte Teilleitungen der weiteren Verbindungsleitung mit dem Steuermodul elektrisch leitend verbunden sein. Die Teilleitungen umfassen jeweils eines der Koppelelemente 232, 234, 236, 238 und können ein korrespondierendes Gegenelement auf dem Steuermodul umfassen. Das erste Koppelelement 232 ist auf der ersten Moduleinheit 320, das zweite Koppelelement 234 auf der zweiten Moduleinheit 322, das dritte Koppelelement 236 auf der dritten Moduleinheit 324 und das vierte Koppelelement 238 auf der vierten Moduleinheit 326 angeordnet. Die weitere Verbindungsleitung kontaktiert das Leistungsmodul 300 in der Mitte nahe des Kreuzungspunktes des ersten und des zweiten Balkens 301, 302. Hierzu sind die Koppelelemente 232, 234, 236, 238 in der Mitte des Leistungsmoduls 300 angeordnet. Die Koppelelemente 232, 234, 236, 238 sind in den dreieckigen Teilen der Moduleinheiten 320, 322, 324, 326 angeordnet.

Bei alternativen, nicht dargestellten Ausführungsformen der Erfindung kann die weitere Verbindungsleitung, insbesondere deren Koppelelemente 232, 234, 236, 238 auch in einem äußeren Bereich, insbesondere in einem an den Enden der Balken 301, 302, des Leistungsmoduls 300 angeordnet sein. Insbesondere können die Koppelelemente 232, 234, 236, 238 in dem rechteckigen Bereich der Moduleinheiten 320, 322, 324, 326 des Leistungsmoduls 300 angeordnet sein. Beispielsweise können die Koppelemente 232, 234, 236, 238 an dem gemeinsamen Mittelpunkt der Moduleinheiten 320, 322, 324, 326 gegenüberliegenden äußeren Enden der Moduleinheiten 320, 322, 324, 326 angeordnet sein.

### Bezugszeichenliste

- 1: Planarantriebssystem
- 3: weiteres Planarantriebssystem
- 8: Oberseite
- 9: Unterseite
- 10: Statormodul
- 11: Statorfläche
- 12: erste Richtung
- 14: zweite Richtung
- 15: vertikale Richtung
- 18: Anschlussleitung
- 19: Modulgehäuse
- 30: Außenkante der Statorfläche
- 32: Seitenfläche der Statoreinheit
- 34: Seitenfläche des Modulgehäuses
- 36: Seitenfläche des Statormoduls
- 41: erste Außenkante der Statorfläche
- 42: zweite Außenkante der Statorfläche
- 43: dritte Außenkante der Statorfläche
- 44: vierte Außenkante der Statorfläche
- 61: erster Freiraum
- 62: zweiter Freiraum
- 63: dritter Freiraum
- 64: vierter Freiraum
- 100: Statoreinheit
- 101: Bodenfläche
- 104: erste Statorlage
- 105: zweite Statorlage
- 106: dritte Statorlage
- 107: vierte Statorlage
- 109: Anschlussstatorlage
- 110: erster Statorsektor
- 112: dritter Statorsektor
- 113: zweiter Statorsektor
- 114: vierter Statorsektor
- 117: erste Mittellinie
- 118: zweite Mittellinie
- 119: Kreuzungspunkt
- 120: erste Statorsegmente
- 121: zweite Statorsegmente
- 122: innenliegendes Statorsegment
- 125: Spulenleiter
- 126: weitere Spulenleiter
- 131: erster Hinleiter
- 132: erster Rückleiter
- 141: zweiter Hinleiter
- 142: zweiter Rückleiter
- 146: dritter Hinleiter
- 147: dritter Rückleiter
- 150: erste Dreiphasensysteme
- 151: zweite Dreiphasensysteme
- 152: erste Seite
- 153: erste Seite
- 154: erster Anschlusspunkt
- 155: zweiter Anschlusspunkt
- 156: dritter Anschlusspunkt
- 157: Sternpunkt
- 161: erste Außenkante
- 162: zweite Außenkante
- 163: erste Innenkante
- 164: zweite Innenkante
- 171: erste Außenkante
- 172: zweite Außenkante
- 173: erste Innenkante
- 174: zweite Innenkante
- 181: erste Außenkante
- 182: zweite Außenkante
- 183: erste Innenkante
- 184: zweite Innenkante
- 191: erste Außenkante
- 192: zweite Außenkante
- 193: erste Innenkante
- 194: zweite Innenkante
- 232: erstes Koppelelement
- 234: zweites Koppelelement
- 236: drittes Koppelelement
- 238: viertes Koppelelement
- 300: Leistungsmodul
- 301: erster Balken
- 302: zweiter Balken
- 309: Anschlussanordnung
- 310: Verbindungsleitung
- 311: erste Anschlussanordnung
- 312: zweite Anschlussanordnung
- 313: dritte Anschlussanordnung
- 314: vierte Anschlussanordnung
- 315: erstes Kontaktmittel
- 316: zweites Kontaktmittel
- 317: drittes Kontaktmittel
- 318: viertes Kontaktmittel
- 319: Kontaktmittel
- 320: erste Moduleinheit
- 321: erstes Anschlussmittel
- 322: zweite Moduleinheit
- 323: zweites Anschlussmittel
- 324: dritte Moduleinheit
- 325: drittes Anschlussmittel
- 326: vierte Moduleinheit
- 327: viertes Anschlussmittel
- 340: Oberseite des Leistungsmoduls
- 341: Unterseite des Leistungsmoduls
- 350: Kontaktstift
- 351: erste Pressfläche
- 352: zweite Pressfläche
- 353: dritte Pressfläche
- 354: vierte Pressfläche
- 354: Bestückungsbereich
- 360: erste Kontaktstiftleiste
- 361: zweite Kontaktstiftleiste
- 362: erste Kontaktbereiche
- 363: Leistenkörper
- 364: zweite Kontaktbereiche
- 420: Kontaktanordnung
- 421: erste Kontaktstruktur
- 422: zweite Kontaktstruktur
- 423: dritte Kontaktstruktur
- 424: vierte Kontaktstruktur
- 441: erste Kontakteinheitengruppe
- 442: zweite Kontakteinheitengruppe
- 443: dritte Kontakteinheitengruppe
- 444: vierte Kontakteinheitengruppe
- 445: fünfte Kontakteinheitengruppe
- 446: sechste Kontakteinheitengruppe
- 447: siebte Kontakteinheitengruppe
- 448: achte Kontakteinheitengruppe
- 449: Kontakteinheit
- 460: Zentrumsbereich
- 700: erste weitere Statoreinheit
- 702: zweite weitere Statoreinheit
- 1127: Koppelelement
- 1200: Läufer
- 1201: Magnetanordnung
- 1206: erste Läuferrichtung
- 1208: zweite Läuferrichtung
- 1210: erste Magneteinheit
- 1211: Antriebsmagnet
- 1220: zweite Magneteinheit
- 1221: weiterer Antriebsmagnet
- 1230: dritte Magneteinheit
- 1240: vierte Magneteinheit

## Patentansprüche

1. Statormodul (10) zum Antreiben eines Läufers (1200) eines elektrischen Planarantriebssystems (1),
wobei das Statormodul (10) ein Leistungsmodul (300), eine an einer Oberseite des Leistungsmoduls (300) angeordnete Statoreinheit (100) und ein Kontaktmittel (319) aufweist,
wobei das Leistungsmodul (300) dazu ausgebildet ist, Antriebsströme zum Antreiben des Läufers (1200) bereitzustellen,
wobei die Statoreinheit (100) mit den Antriebsströmen beaufschlagbare Spulenleiter (125) umfasst,
wobei die Spulenleiter (125) der Statoreinheit (100) zur Beaufschlagung mit den Antriebsströmen über das Kontaktmittel (319) mit dem Leistungsmodul (300) elektrisch leitend verbunden sind,
wobei das Leistungsmodul (300) und die Statoreinheit (100) jeweils plattenförmig ausgebildet sind,
wobei das Leistungsmodul (300) mittels des Kontaktmittels (319) an der Statoreinheit (100) mechanisch befestigt ist,
**dadurch gekennzeichnet, dass**
das Leistungsmodul (300) kreuzförmig mit einem entlang einer ersten Richtung (12) ausgedehnten ersten Balken (301) und mit einem entlang einer zweiten Richtung (14) ausgedehnten zweiten Balken (302) ausgebildet ist,
wobei die Statoreinheit (100) eine kreuzförmige Kontaktanordnung (420) mit nebeneinander angeordneten Kontaktlöchern (449) umfasst,
wobei das Leistungsmodul (300) eine kreuzförmige Anschlussanordnung (309) mit nebeneinander angeordneten weiteren Kontaktlöchern umfasst,
wobei das Kontaktmittel (319) entlang der ersten Richtung (12) und der zweiten Richtung (14) länglich ausgedehnt ist und entlang der ersten Richtung (12) und der zweiten Richtung (14) nebeneinander angeordnete Kontaktstifte (350) umfasst,
wobei die Kontaktstifte (350) des Kontaktmittels (319) in die weiteren Kontaktlöcher der Anschlussanordnung (309) des Leistungsmoduls (300) und in die Kontaktlöcher der Kontaktanordnung (420) der Statoreinheit (100) eingreifend angeordnet sind.

2. Statormodul (10) nach Anspruch 1,
wobei die Statoreinheit (100) mittels des Kontaktmittels (319) derart beabstandet an dem Leistungsmodul (300) befestigt ist, dass an der Oberseite des Leistungsmoduls (300) zwischen dem Leistungsmodul (300) und der Statoreinheit (100) ein Bauraum zur Anordnung elektronischer Komponenten ausgebildet ist.

3. Statormodul (10) nach einem der vorhergehenden Ansprüche,
wobei das Kontaktmittel (319) als ein in die Kontaktlöcher der Kontaktanordnung (420) der Statoreinheit (100) einpressbarer Einpressverbinder ausgebildet ist.

4. Statormodul (10) nach Anspruch 3,
wobei das Leistungsmodul (300) an einer der Oberseite des Leistungsmoduls (300) gegenüberliegenden Unterseite des Leistungsmoduls (300) eine entlang der weiteren Kontaktlöcher angeordnete und frei von elektronischen Komponenten ausgebildete Pressfläche (351) umfasst.

5. Statormodul (10) nach einem der Ansprüche 1 bis 4,
wobei die erste Richtung (12) und die zweite Richtung (14) senkrecht zueinander ausgerichtet sind.

6. Statormodul (10) nach einem der Ansprüche 1 bis 5,
wobei das Kontaktmittel (319) ein erstes Kontaktmittel (315) und ein zweites Kontaktmittel (316) umfasst,
wobei die Statoreinheit (100) weitere Spulenleiter (126) zur Beaufschlagung mit weiteren Antriebsströmen umfasst,
wobei die Spulenleiter (125) in der ersten Richtung (12) länglich ausgedehnt und in der zweiten Richtung (14) nebeneinander angeordnet sind,
wobei die weiteren Spulenleiter (126) in der zweiten Richtung (14) länglich ausgedehnt und in der ersten Richtung (12) nebeneinander angeordnet sind,
wobei das Leistungsmodul (300) zur Einspeisung der Antriebsströme in die Spulenleiter (125) mit den Spulenleitern (125) über das entlang der zweiten Richtung (14) ausdehnte erste Kontaktmittel (315) elektrisch leitend verbunden ist,
wobei das Leistungsmodul (300) zur Einspeisung der weiteren Antriebsströme in die weiteren Spulenleiter (126) mit den weiteren Spulenleitern (126) über das entlang der ersten Richtung (12) ausgedehnte zweite Kontaktmittel (316) elektrisch leitend verbunden ist.

7. Statormodul (10) nach einem der Ansprüche 1 bis 6,
wobei das Kontaktmittel (319) in der ersten Richtung (12) mittig auf dem zweiten Balken (302) und in der zweiten Richtung (14) mittig auf dem ersten Balken (301) angeordnet ist.

8. Statormodul (10) nach einem der Ansprüche 1 bis 7,
wobei das Leistungsmodul (300) eine erste Moduleinheit (320) und eine von der ersten Moduleinheit (320) getrennt ausgebildete zweite Moduleinheit (322) umfasst, wobei der zweite Balken (302) die erste Moduleinheit (320) und der erste Balken (301) die zweite Moduleinheit (322) umfasst,
wobei die erste Moduleinheit (320) und die zweite Moduleinheit (322) mittels des Kontaktmittels (319) an der Statoreinheit (100) befestigt ist.

9. Statormodul (10) nach Anspruch 8,
wobei das Leistungsmodul (300) auf der ersten Moduleinheit (320) angeordnete erste Stromerzeugungseinheiten und auf der zweiten Moduleinheit (322) angeordnete zweite Stromerzeugungseinheiten umfasst,
wobei das Statormodul (10) ein Steuermodul umfasst,
wobei das Steuermodul dazu ausgebildet ist, erste Steuersignale zur Ansteuerung der ersten Stromerzeugungseinheiten und zweite Steuersignale zur Ansteuerung der zweiten Stromerzeugungseinheiten zu erzeugen, wobei die erste Moduleinheit (320) zur Übertragung der ersten Steuersignale über ein erstes Koppelelement (232) mit dem Steuermodul verbunden ist,
wobei die zweite Moduleinheit (322) zur Übertragung der zweiten Steuersignale über ein zweites Koppelelement (234) mit dem Steuermodul verbunden ist.

## Claims

1. Stator module (10) for driving a rotor (1200) of an electrical planar drive system (1),
wherein the stator module (10) has a power module (300), a stator unit (100) that is arranged on a top side of the power module (300), and a contact means (319),
wherein the power module (300) is designed to provide drive currents for driving the rotor (1200),
wherein the stator unit (100) comprises coil conductors (125) to which the drive currents can be applied,
wherein the coil conductors (125) of the stator unit (100) are electrically conductively connected to the power module (300) via the contact means (319) for applying the drive currents,
wherein the power module (300) and the stator unit (100) are each of plate-like design,
wherein the power module (300) is mechanically fastened to the stator unit (100) by means of the contact means (319),
**characterized in that**
the power module (300) is of cruciform design with a first beam (301) that is extended in a first direction (12) and with a second beam (302) that is extended along a second direction (14),
wherein the stator unit (100) comprises a cruciform contact arrangement (420) with contact holes (449) that are arranged next to one another,
wherein the power module (300) comprises a cruciform connection arrangement (309) with further contact holes that are arranged next to one another,
wherein the contact means (319) is extended along the first direction (12) and the second direction (14) in an elongate manner and comprises contact pins (350) that are arranged next to one another along the first direction (12) and the second direction (14),
wherein the contact pins (350) of the contact means (319) are arranged so as to engage into the further contact holes of the connection arrangement (309) of the power module (300) and into the contact holes of the contact arrangement (420) of the stator unit (100).

2. Stator module (10) according to Claim 1,
wherein the stator unit (100) is fastened to the power module (300) by means of the contact means (319) in a spaced apart manner in such a way that an installation space for arranging electronic components is formed on the top side of the power module (300) between the power module (300) and the stator unit (100).

3. Stator module (10) according to either of the preceding claims,
wherein the contact means (319) is designed as a pressin connector that can be pressed into the contact holes of the contact arrangement (420) of the stator unit (100) .

4. Stator module (10) according to Claim 3,
wherein the power module (300), on a bottom side of the power module (300) that is situated opposite the top side of the power module (300), comprises a pressing surface (351) that is arranged along the further contact holes and is designed in a manner free of electronic components.

5. Stator module (10) according to one of Claims 1 to 4,
wherein the first direction (12) and the second direction (14) are oriented perpendicularly in relation to one another.

6. Stator module (10) according to one of Claims 1 to 5,
wherein the contact means (319) comprises a first contact means (315) and a second contact means (316),
wherein the stator unit (100) comprises further coil conductors (126) for applying further drive currents,
wherein the coil conductors (125) are extended in an elongate manner in the first direction (12) and are arranged next to one another in the second direction (14),
wherein the further coil conductors (126) are extended in an elongate manner in the second direction (14) and are arranged next to one another in the first direction (12),
wherein the power module (300) is electrically conductively connected to the coil conductors (125) via the first contact means (315) that is extended along the second direction (14) for feeding the drive currents into the coil conductors (125),
wherein the power module (300) is electrically conductively connected to the further coil conductors (126) via the second contact means (316) that are extended along the first direction (12) for feeding the further drive currents into the further coil conductors (126) .

7. Stator module (10) according to one of Claims 1 to 6,
wherein the contact means (319) is arranged centrally on the second beam (302) in the first direction (12) and centrally on the first beam (301) in the second direction (14) .

8. Stator module (10) according to one of Claims 1 to 7,
wherein the power module (300) comprises a first module unit (320) and a second module unit (322) that is designed separately from the first module unit (320),
wherein the second beam (302) comprises the first module unit (320) and the first beam (301) comprises the second module unit (322),
wherein the first module unit (320) and the second module unit (322) are fastened to the stator unit (100) by means of the contact means (319).

9. Stator module (10) according to Claim 8,
wherein the power module (300) comprises first current-generating units that are arranged on the first module unit (320) and second current-generating units that are arranged on the second module unit (322),
wherein the stator module (10) comprises a control module,
wherein the control module is designed to generate first control signals for actuating the first current-generating units and second control signals for actuating the second current-generating units,
wherein the first module unit (320) is connected to the control module via a first coupling element (232) for transmitting the first control signals,
wherein the second module unit (322) is connected to the control module via a second coupling element (234) for transmitting the second control signals.

## Revendications

1. Module de stator (10) destiné à entraîner un rotor (1200) d'un système d'entraînement planaire électrique (1),
le module de stator (10) comportant un module de puissance (300), une unité de stator (100) disposée sur un côté supérieur du module de puissance (300) et un moyen de contact (319),
le module de puissance (300) étant conçu pour fournir des courants d'entraînement destinés à entraîner le rotor (1200),
l'unité de stator (100) comprenant des conducteurs de bobine (125) qui peuvent être soumis aux courants d'entraînement, les conducteurs de bobine (125) de l'unité de stator (100) étant reliés électriquement au module de puissance (300) pour être soumis aux courants d'entraînement par le biais du moyen de contact (319), le module de puissance (300) et l'unité de stator (100) étant chacun en forme de plaque,
le module de puissance (300) étant fixé mécaniquement à l'unité de stator (100) à l'aide du moyen de contact (319),
**caractérisé en ce que**
le module de puissance (300) est en forme de croix dont une première barre (301) s'étend dans une première direction (12) et dont une deuxième barre (302) s'étend dans une deuxième direction (14),
l'unité de stator (100) comprenant un ensemble de contacts (420) en forme de croix pourvu de trous de contact (449) disposés les uns à côté des autres,
le module de puissance (300) comprenant un ensemble de connexions (309) en forme de croix pourvu d'autres trous de contact disposés les uns à côté des autres,
le moyen de contact (319) s'étendant longitudinalement dans la première direction (12) et la deuxième direction (14) et comprenant des broches de contact (350) disposées les unes à côté des autres dans la première direction (12) et la deuxième direction (14),
les broches de contact (350) du moyen de contact (319) étant disposées de manière à s'engager dans les autres trous de contact de l'ensemble de connexions (309) du module de puissance (300) et dans les trous de contact de l'ensemble de contacts (420) de l'unité de stator (100) .

2. Module de stator (10) selon la revendication 1,
l'unité de stator (100) étant fixée au module de puissance (300) à distance à l'aide du moyen de contact (319) de façon à ménager du côté supérieur du module de puissance (300), entre le module de puissance (300) et l'unité de stator (100), un espace destiné à disposer des composants électroniques.

3. Module de stator (10) selon l'une des revendications précédentes,
le moyen de contact (319) étant conçu comme un connecteur à pression qui peut être pressé dans les trous de contact de l'ensemble de contacts (420) de l'unité de stator (100).

4. Module de stator (10) selon la revendication 3,
le module de puissance (300) comprenant sur un côté inférieur du module de puissance (300), qui est opposé au côté supérieur du module de puissance (300), une surface de pression (351) disposée le long des autres trous de contact et dépourvue de composants électroniques.

5. Module de stator (10) selon l'une des revendications 1 à 4, la première direction (12) et la deuxième direction (14) étant orientées perpendiculairement l'une à l'autre.

6. Module de stator (10) selon l'une des revendications 1 à 5, le moyen de contact (319) comprenant un premier moyen de contact (315) et un deuxième moyen de contact (316), l'unité de stator (100) comprenant d'autres conducteurs de bobine (126) destinés à être soumis à d'autres courants d'entraînement,
les conducteurs de bobine (125) s'étendant longitudinalement dans la première direction (12) et étant disposés les uns à côté des autres dans la deuxième direction (14),
les autres conducteurs de bobine (126) s'étendant longitudinalement dans la deuxième direction (14) et étant disposés les uns à côté des autres dans la première direction (12),
le module de puissance (300) étant relié électriquement aux conducteurs de bobine (125) par le biais du premier moyen de contact (315) s'étendant dans la deuxième direction (14) pour injecter les courants d'entraînement dans les conducteurs de bobine (125),
le module de puissance (300) étant relié électriquement aux autres conducteurs de bobine (126) par le biais du deuxième moyen de contact (316), qui s'étend dans la première direction (12), pour injecter les autres courants d'entraînement dans les autres conducteurs de bobine (126).

7. Module de stator (10) selon l'une des revendications 1 à 6,
le moyen de contact (319) étant disposé centralement sur la deuxième barre (302) dans la première direction (12) et centralement sur la première barre (301) dans la deuxième direction (14).

8. Module de stator (10) selon l'une des revendications 1 à 7, le module de puissance (300) comprenant une première unité de module (320) et une deuxième unité de module (322) formée séparément de la première unité de module (320), la deuxième barre (302) comprenant la première unité de module (320) et la première barre (301) comprenant la deuxième unité de module (322),
la première unité de module (320) et la deuxième unité de module (322) étant fixées à l'unité de stator (100) à l'aide du moyen de contact (319).

9. Module de stator (10) selon la revendication 8,
le module de puissance (300) comprenant des premières unités de génération d'énergie disposées sur la première unité de module (320) et des deuxièmes unités de génération d'énergie disposées sur la deuxième unité de module (322),
le module de stator (10) comprenant un module de commande,
le module de commande étant conçu pour générer des premiers signaux de commande destinés à commander les premières unités de génération d'énergie et des deuxièmes signaux de commande destinés à commander les deuxièmes unités de génération d'énergie, la première unité de module (320) étant reliée au module de commande par le biais d'un premier élément de couplage (232) pour transmettre les premiers signaux de commande, la deuxième unité de module (322) étant reliée au module de commande par le biais d'un deuxième élément de couplage (234) pour transmettre les deuxièmes signaux de commande.
